(19) Europäisches Patentamt European Patent Office Office européen des brevets

(11) **EP 3 694 207 B1**

(12) **EUROPÄISCHE PATENTSCHRIFT**

(45) Veröffentlichungstag und Bekanntmachung des Hinweises auf die Patenterteilung:
**20.03.2024 Patentblatt 2024/12**

(21) Anmeldenummer: **20167218.5**

(22) Anmeldetag: **09.05.2017**

(51) Internationale Patentklassifikation (IPC):
**H04N 13/239** (2018.01) **H04N 13/178** (2018.01)
**H04N 23/45** (2023.01)

(52) Gemeinsame Patentklassifikation (CPC):
**H04N 13/178; H04N 13/239; H04N 23/45**

(54) **3D-MULTIAPERTURABBILDUNGSVORRICHTUNGEN, MULTIAPERTURABBILDUNGSVORRICHTUNG, VERFAHREN ZUM BEREITSTELLEN EINES AUSGANGSSIGNALS EINER 3D-MULTIAPERTURABBILDUNGSVORRICHTUNG UND VERFAHREN ZUM ERFASSEN EINES GESAMTGESICHTSFELDES**

3D MULTIAPERTURE IMAGING DEVICES, MULTIAPERTURE IMAGING DEVICE, METHOD OF PROVIDING AN OUTPUT SIGNAL OF A 3D MULTIAPERTURE IMAGING DEVICE AND METHOD OF DETECTING TOTAL FACE FIELD

DISPOSITIFS D'IMAGERIE À OUVERTURES MULTIPLES 3D, DISPOSITIF D'IMAGERIE À OUVERTURES MULTIPLES, PROCÉDÉ DE FOURNITURE D'UN SIGNAL DE SORTIE D'UN DISPOSITIF D'IMAGERIE À OUVERTURES MULTIPLES 3D ET PROCÉDÉ DE DÉTECTION D'UN CHAMP VISUEL COMPLET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.05.2016 DE 102016208210**

(43) Veröffentlichungstag der Anmeldung:
**12.08.2020 Patentblatt 2020/33**

(62) Dokumentnummer(n) der früheren Anmeldung(en) nach Art. 76 EPÜ:
**17726551.9 / 3 456 041**

(73) Patentinhaber: **Fraunhofer-Gesellschaft zur Förderung
der angewandten Forschung e.V.
80686 München (DE)**

(72) Erfinder:
• **Wippermann, Frank
07745 Jena (DE)**
• **Brückner, Andreas
82194 Gröbenzell (DE)**
• **Bräuer, Andreas
07745 Jena (DE)**

(74) Vertreter: **König, Andreas Rudolf et al
Schoppe, Zimmermann, Stöckeler
Zinkler, Schenk & Partner mbB
Patentanwälte
Radlkoferstraße 2
81373 München (DE)**

(56) Entgegenhaltungen:
WO-A1-2015/037211    WO-A2-2011/063347
DE-A1-102010 031 535

**EP 3 694 207 B1**

**Beschreibung**

Die vorliegende Erfindung bezieht sich auf 3D-Multiaperturabbildungsvorrichtungen und somit auf Multiaperturabbildungsvorrichtungen, die ausgebildet sind, um ein Gesamtgesichtsfeld zumindest stereoskop zu erfassen, auf ein Verfahren zum Bereitstellen eines Ausgangssignals einer 3D-Multiaperturabbildungsvorrichtung und auf ein Verfahren zum Erfassen eines Gesamtgesichtsfeldes.

Konventionelle Kameras übertragen in einem Kanal das gesamte Gesichtsfeld und sind in ihrer Miniaturisierung begrenzt. In mobilen Vorrichtungen, wie etwa Smartphones, werden zwei Kameras genutzt, die in und entgegen dem Richtungssinn der Flächennormalen des Displays orientiert sind. In manchen Multiaperturabbildungssystemen ist jedem Kanal ein zusammenhängendes Teilgesichtsfeld zugeordnet, das in einen zusammenhängenden Teilbildbereich transformiert wird.

WO 2011/063347 A2 offenbart eine 3D-Multiaperturabbildungsvorrichtung. WO 2015/037211 A1 offenbart eine Multiaperturabbildungsvorrichtung, die Metadaten über die Struktur der Multiaperturabbildungsvorrichtung ausgibt.

Wünschenswert ein Konzept, das eine Bildbearbeitung von mit 3D-Multiaperturabbildungsvorrichtungen und Multiaperturabbildungsvorrichtungen erfassten Bilddaten ermöglicht. Wünschenswert wäre ebenfalls ein Konzept, das miniaturisierte Vorrichtungen zum Erfassen eines Gesamtgesichtsfeldes ermöglicht.

Eine Aufgabe der vorliegenden Erfindung besteht deshalb darin, eine 3D-Multiaperturabbildungsvorrichtung und ein Verfahren zum Bereitstellen eines Ausgangssignals einer 3D-Multiaperturabbildungsvorrichtung zu schaffen, die eine Verarbeitung der erfassten Bilder mit einer hohen funktionellen Bandbreite ermöglichen. Eine weitere Aufgabe der vorliegenden Erfindung besteht darin, eine miniaturisierte 3D-Multiaperturabbildungsvorrichtung und ein Verfahren zum Erfassen eines Gesamtgesichtsfeldes zu schaffen, die eine Miniaturisierung der Multiaperturabbildungsvorrichtung ermöglichen.

Diese Aufgaben werden durch den Gegenstand der unabhängigen Patentansprüche gelöst.

Einem ersten Aspekt der vorliegenden Erfindung liegt die Erkenntnis zugrunde, dass das Erzeugen eines Ausgangssignals einer 3D-Multiaperturabbildungsvorrichtung derart erfolgt, dass Bildinformationen von Pixeln der 3D-Multiaperturabbildungsvorrichtung in geeigneter Weise mit Metainformationen zu einem Ausgangssignal verbunden werden, so dass eine nachträgliche Bearbeitung der Bildinformationen und/oder eine Veränderung derselben unabhängig von der 3D-Multiaperturabbildungsvorrichtung ermöglicht wird, wobei gleichzeitig wesentliche Informationen des Aufbaus der 3D-Multiaperturabbildungsvorrichtung berücksichtigt und/oder genutzt werden können. So kann das Konzept des Ausgangssignals auf verschiedene Arten von 3D-Multiaperturabbildungsvorrichtungen angewendet werden, auch wenn sich die 3D-Multiaperturabbildungsvorrichtungen in ihrem Aufbau unterscheiden.

Einem zweiten Aspekt der vorliegenden Erfindung liegt die Erkenntnis zugrunde, dass eine Orientierung oder Position zueinander benachbarter Teilgesichtsfelder eines Gesamtgesichtsfeldes gegenüber einer Orientierung oder Anordnung zueinander benachbarter optischer Kanäle einer Multiaperturabbildungsvorrichtung variiert oder transformiert werden kann, um den Aufbau eines einzeiligen Arrays optischer Kanäle an eine Vorrichtung oder an ein System, in welcher bzw. welchem die Multiaperturabbildungsvorrichtung verbaut wird, anzupassen, ohne eine Einschränkung bezüglich des zu erfassenden Gesichtsfeldes hinnehmen zu müssen.

Gemäß einem Ausführungsbeispiel des ersten Aspekts umfasst eine 3D-Multiaperturabbildungsvorrichtung gemäß Anspruch 2 einen Bildsensor mit einer Vielzahl von Bildsensorbereichen, wobei jeder Bildsensorbereich eine Vielzahl von Pixeln umfasst. Die 3D-Multiaperturabbildungsvorrichtung umfasst eine erste Mehrzahl von optischen Kanälen zum Abbilden sich überlappender erster Teilgesichtsfelder eines Gesamtgesichtsfeldes auf erste Bildsensorbereiche des Bildsensors. Die 3D-Multiaperturabbildungsvorrichtung umfasst eine zweite Mehrzahl von optischen Kanälen zum Abbilden sich gegenseitig und mit den ersten Teilgesichtsfeldern überlappender zweiter Gesichtsfelder des Gesamtgesichtsfeldes auf zwei Bildsensorbereiche des Bildsensors. Die erste und die zweite Mehrzahl von optischen Kanälen sind um einen Basisabstand voneinander lateral versetzt angeordnet. Die 3D-Multiaperturabbildungsvorrichtung umfasst einen Prozessor, der ausgebildet ist, um Bildsensordaten von dem Bildsensor zu empfangen, die Informationen über die auf die erste und zweite Mehrzahl von Bildsensorbereichen abgebildeten ersten und zweiten Teilgesichtsfelder aufweisen, und der ausgebildet ist, um ein Ausgangssignal bereitzustellen, das einen Datenheader und Nutzdaten aufweist. Der Datenheader weist eine Information bezüglich des Aufbaus der 3D-Multiaperturabbildungsvorrichtung auf. Die Nutzdaten weisen aus den Pixeln des ersten Bildsensorbereiches und des zweiten Bildsensorbereiches gewonnene Bildinformationen auf.

Vorteilhaft an diesem Ausführungsbeispiel ist, dass die Nutzdaten nachträglich so verarbeitet werden können, indem die in dem Datenheader bezüglich des Aufbaus der 3D-Multiaperturabbildungsvorrichtung enthaltenen Informationen berücksichtigt werden. Zur Verarbeitung der Bilddaten muss somit der Aufbau der 3D-Multiaperturabbildungsvorrichtung nicht vollständig bekannt sein, da eine entsprechende Information aus dem Ausgangssignal erhalten werden kann. Somit können Bilder unterschiedlicher 3D-Multiaperturabbildungsvorrichtungen verarbeitet werden und die Unterschiede dem Ausgangssignal selbst entnommen werden.

Gemäß einem weiteren Ausführungsbeispiel umfasst ein Bildsignal gemäß Anspruch 13 einen Datenheader, der eine Information bezüglich eines Aufbaus einer 3D-Multiaperturabbildungsvorrichtung aufweist, und Nutzdaten, die aus Pixeln erster Bildsensorbereiche und zweiter Bildsensorbereiche der 3D-Multiaperturabbildungsvorrichtung gewonnene Bildinformationen aufweisen, wobei sich die Bildinformationen der ersten und zweiten Bildsensorbereiche jeweils auf eine Mehrzahl von Teilgesichtsfeldern eines Gesamtgesichtsfeldes beziehen.

Vorteilhaft daran ist, dass sich ein Aufbau und/oder eine Verarbeitbarkeit der Nutzdaten durch den Datenheader darstellen lässt, so dass sich die Bilddaten unterschiedlicher, d. h. einen voneinander verschiedenen Aufbau aufweisenden 3D-Multiaperturabbildungsvorrichtungen mithilfe von Ausgangssignalen beschrieben werden können, die den gleichen Aufbau aufweisen, was eine gleichbleibend hochwertige Verarbeitbarkeit der Nutzdaten ermöglicht.

Gemäß einem weiteren Ausführungsbeispiel umfasst eine Vorrichtung gemäß Anspruch 1 zum Bearbeiten eines Eingangssignals, das die Merkmale des vorangegangen beschriebenen Ausgangssignals oder Bildsignals aufweist, eine Eingangsschnittstelle zum Empfangen des Eingangssignals und einen Prozessor zum Bearbeiten der Nutzdaten unter Berücksichtigung der Information bezüglich des Aufbaus der 3D-Multiaperturabbildungsvorrichtung für zumindest erste Bildsensorinformationen eines ersten Teilgesichtsfeldes und eines zweiten Teilgesichtsfeldes. Vorteilhaft an diesem Ausführungsbeispiel ist, dass die Vorrichtung Eingangssignale von 3D-Multiaperturabbildungsvorrichtungen mit jeweils unterschiedlichem Aufbau empfangen und verarbeiten kann.

Gemäß einem weiteren Ausführungsbeispiel umfasst ein Verfahren gemäß Anspruch 14 zum Bereitstellen eines Ausgangssignals einer 3D-Multiaperturabbildungsvorrichtung folgende Schritte: Bereitstellen eines Bildsensors mit einer Vielzahl von Bildsensorbereichen, wobei jeder Bildsensorbereich eine Vielzahl von Pixeln umfasst; Bereitstellen einer Mehrzahl von optischen Kanälen zum Abbilden sich überlappender erster Teilgesichtsfelder eines Gesamtgesichtsfeldes auf erste Bildsensorbereiche des Bildsensors; Bereitstellen einer zweiten Mehrzahl von optischen Kanälen zum Abbilden sich gegenseitig und mit dem ersten Teilgesichtsfeldern überlappender zweiter Teilgesichtsfelder des Gesamtgesichtsfeldes auf zweite Bildsensorbereiche des Bildsensors, wobei die erste und die zweite Mehrzahl von optischen Kanälen so angeordnet werden, dass sie um einen Basisabstand voneinander lateral versetzt sind; Empfangen von Bildsensordaten von dem Bildsensor, wobei die Bildsensordaten die Informationen über die auf die erste und zweite Mehrzahl von Bildsensorbereichen abgebildeten ersten und zweiten Teilgesichtsfelder aufweisen; und Erzeugen des Ausgangssignals, so dass das Ausgangssignal einen Datenheader und Nutzdaten aufweist, so dass der Datenheader eine Information bezüglich des Aufbaus der 3D-Multiaperturabbildungsvorrichtung aufweist und so dass die Nutzdaten aus den Pixeln des ersten Bildsensorbereiches und des zweiten Bildsensorbereiches gewonnene Bildinformationen aufweisen.

Gemäß einem weiteren Ausführungsbeispiel, das nicht unter den Schutzumfang der Ansprüche fällt, umfasst eine Multiaperturabbildungsvorrichtung einen Bildsensor mit einer Vielzahl von Bildsensorbereichen, wobei jeder Bildsensorbereich eine Vielzahl von Pixeln umfasst. Die Multiaperturabbildungsvorrichtung umfasst eine Mehrzahl von optischen Kanälen zum Abbilden sich überlappender Teilgesichtsfelder eines Gesamtgesichtsfeldes auf Bildsensorbereiche des Bildsensors. Die Mehrzahl von optischen Kanälen bildet ein eindimensionales Array, das entlang einer ersten Richtung angeordnet ist, während die Teilgesichtsfelder des (Gesamt-)Gesichtsfeldes ein eindimensionales Array bilden, das entlang einer zweiten Richtung senkrecht zu der ersten Richtung angeordnet ist.

Vorteilhaft daran ist, dass Erstreckungsrichtungen der optischen Kanäle und der Teilobjektbereiche bzw. Teilgesichtsfelder in dem Gesamtgesichtsfeld zueinander verkippt oder verdreht angeordnet sein können, so dass beispielsweise die Multiaperturabbildungsvorrichtung vertikal in einer Vorrichtung oder einem System, etwa einem Fahrzeug, angeordnet sein kann, während das Gesichtsfeld sich horizontal erstreckt.

Gemäß einem weiteren Ausführungsbeispiel, das nicht unter den Schutzumfang der Ansprüche fällt, umfasst ein Verfahren zum Erfassen eines Gesamtgesichtsfeldes folgende Schritte: Anordnen eines Bildsensors mit einer Vielzahl von Bildsensorbereichen, wobei jeder Bildsensorbereich eine Vielzahl von Pixeln umfasst; Anordnen einer Mehrzahl von optischen Kanälen zum Abbilden sich überlappender Teilgesichtsfelder des Gesamtgesichtsfeldes auf Bildsensorbereiche des Bildsensors. Das Anordnen der Mehrzahl von optischen Kanälen erfolgt so, dass die Mehrzahl von optischen Kanälen ein eindimensionales Array bildet, das entlang einer ersten Richtung angeordnet ist, während die Teilbereiche des Gesichtsfeldes ein eindimensionales Array bilden, das entlang einer zweiten Richtung senkrecht zu der ersten Richtung angeordnet ist.

Bevorzugte Ausführungsbeispiele der vorliegenden Erfindung werden nachfolgend Bezug nehmend auf die beiliegenden Zeichnungen erläutert. Es zeigen:

Fig. 1a     eine schematische perspektivische Ansicht einer 3D-Multiaperturabbildungsvorrichtung gemäß einem Ausführungsbeispiel;

Fig. 1b     die 3D-Multiaperturabbildungsvorrichtung aus Fig. 1a, wie sie gemäß hier beschriebenen Ausführungsbeispielen einsetzbar ist;

Fig. 2     eine schematische Illustration eines Konzepts als Basis zur Verschmelzung von Bildern gemäß hierin beschriebener Ausführungsbeispiele;

Fig. 3     eine schematische Ansicht eines Aufbaus eines Ausgangssignals gemäß hierin beschriebener Ausführungsbeispiele, das den Datenheader und Nutzdaten aufweist, gemäß einem Ausführungsbeispiel;

Fig. 4     eine schematische Ansicht eines Aufbaus des Ausgangssignals, bei dem der Datenheader die Beschreibung einer 3D-Multiaperturabbildungsvorrichtung und eine Information bezüglich einer Segmentierung des Gesamtgesichtsfeldes aufweist, gemäß einem Ausführungsbeispiel;

Fig. 5a-b     eine schematische Ansicht einer Struktur des Ausgangssignals, welches durch den Prozessor durch Berücksichtigung einer Vielzahl von Informationsquellen gebildet wird, gemäß einem Ausführungsbeispiel;

Fig. 6     eine schematische Übersicht über Elemente des Ausgangssignals gemäß einem Ausführungsbeispiel;

Fig. 7     eine schematische Ansicht einer weiteren Multiaperturabbildungsvorrichtung gemäß einem zweiten Aspekt hierin beschriebener Ausführungsbeispiele;

Fig. 8     ein schematisches Blockschaltbild einer Vorrichtung zum Bearbeiten des Ausgangssignals gemäß einem Ausführungsbeispiel;

Fig. 9a     eine schematische Seitenschnittansicht einer Vorrichtung gemäß einem Ausführungsbeispiel in einem ersten Betriebszustand;

Fig. 9b     eine schematische Seitenschnittansicht der Vorrichtung aus Fig. 9a in einem zweiten Betriebszustand;

Fig. 10a     eine schematische Seitenschnittansicht einer Vorrichtung gemäß einem weiteren Ausführungsbeispiel, die eine Abdeckung aufweist;

Fig. 10b     eine schematische Seitenschnittansicht der Vorrichtung aus Fig. 10a in einem zweiten Betriebszustand;

Fig. 10c     eine schematische Seitenschnittansicht der Vorrichtung aus Fig. 10a in einer dritten Position;

Fig. 11a     eine schematische Seitenschnittansicht einer Vorrichtung gemäß einem weiteren Ausführungsbeispiel in dem ersten Betriebszustand, die eine zumindest teilweise transparente Abdeckung aufweist;

Fig. 11b     eine schematische Seitenschnittansicht der Vorrichtung aus Fig. 11a in dem zweiten Betriebszustand;

Fig. 11c     eine schematische Seitenschnittansicht der Vorrichtung aus Fig. 11a, bei der eine Strahlumlenkeinrichtung zusätzlich translatorisch bewegbar ist;

Fig. 12a     eine schematische Seitenschnittansicht einer Vorrichtung gemäß einem Ausführungsbeispiel in dem ersten Betriebszustand mit einer translatorischen verschiebbaren Abdeckung;

Fig. 12b     eine schematische Seitenschnittansicht der Vorrichtung aus Fig. 12a in dem zweiten Betriebszustand;

Fig. 13a     eine schematische Seitenschnittansicht einer Vorrichtung gemäß einem Ausführungsbeispiel, bei der die Abdeckung rotatorisch bewegbar angeordnet ist;

Fig. 13b     eine schematische Seitenschnittansicht der Vorrichtung aus Fig. 13a bei der ein Verfahrschlitten translatorisch bewegbar ist;

Fig. 13c     eine schematische Seitenschnittansicht der Vorrichtung aus Fig. 13a in dem zweiten Betriebszustand;

Fig. 14a     eine schematische Seitenschnittansicht einer Vorrichtung gemäß einem Ausführungsbeispiel in dem ersten Betriebszustand, die gegenüber der Vorrichtung aus Fig. 13 zumindest teilweise transparente Abdeckungen aufweist;

Fig. 14b     eine schematische Seitenschnittansicht der Vorrichtung aus Fig. 14a, bei der die Strahlumlenkeinrichtung eine Zwischenposition zwischen einer ersten Position und einer zweiten Position aufweist;

Fig. 14c    eine schematische Seitenschnittansicht der Vorrichtung aus Fig. 14a, bei der die Strahlumlenkeinrichtung vollständig aus einem Gehäusevolumen herausgefahren ist;

Fig. 14d    eine schematische Seitenschnittansicht der Vorrichtung aus Fig. 14a, bei der ein Abstand zwischen den zumindest teilweise transparenten Abdeckungen verglichen mit den Fig. 14a-c vergrößert ist;

Fig. 15    eine schematische perspektivische Ansicht einer Vorrichtung gemäß einem Ausführungsbeispiel, die drei Multiaperturabbildungsvorrichtungen aufweist;

Fig. 16    eine vergrößerte perspektivische Ansicht eines Ausschnitts der Vorrichtung aus Fig. 15;

Fig. 17    eine schematische perspektivische Ansicht einer Vorrichtung gemäß einem Ausführungsbeispiel bei der die Strahlumlenkeinrichtung mittels Befestigungselementen mit der Multiaperturabbildungsvorrichtung verbunden ist;

Fig. 18a    eine schematische perspektivische Ansicht einer Vorrichtung gemäß einem Ausführungsbeispiel in dem ersten Betriebszustand mit einer exemplarischen Form einer Abdeckung;

Fig. 18b    eine schematische Ansicht der Vorrichtung aus Fig. 18a in dem zweiten Betriebszustand gemäß einem Ausführungsbeispiel;

Fig. 18c    eine schematische Darstellung einer Alternative zu Fig. 18a gemäß einem Ausführungsbeispiel;

Fig. 19a-c    detaillierte Darstellungen einer Multiaperturabbildungsvorrichtung gemäß einem Ausführungsbeispiel;

Fig. 19d-f    Ausgestaltungsformen der Multiaperturabbildungsvorrichtung gemäß Fig. 19a-c für den Fall von einem gemeinsamen Träger gehaltenen Optiken von optischen Kanälen gemäß einem Ausführungsbeispiel;

Fig. 20    die Multiaperturabbildungsvorrichtung gemäß Fig. 19Fig. 19a-c, die gemäß einem Ausführungsbeispiel um zusätzliche Einrichtungen zur für Realisierung von Relativbewegungen für eine optische Bildstabilisierung und zur Anpassung der Fokussierung ergänzt wird;

Fig. 21a    eine schematische Ansicht einer in einem flachen Gehäuse angeordnete Multiaperturabbildungsvorrichtung gemäß einem Ausführungsbeispiel;

Fig. 21b    einen schematischen Aufbau einer Multiaperturabbildungsvorrichtung zum stereoskopischen Erfassen eines Gesamtgesichtsfeldes;

Fig. 22a    eine schematische Ansicht einer weiteren Multiaperturabbildungsvorrichtung gemäß einem Ausführungsbeispiel, die gemäß einem Ausführungsbeispiel um zusätzliche Einrichtungen zur für Realisierung von Relativbewegungen für eine Fokussteuerung und zur optischen Bildstabilisierung ergänzt wird;

Fig. 22b-22e    schematische Seitenansichten einer Strahlumlenkvorrichtung gemäß einem Ausführungsbeispiel;

Fig. 23a    eine schematische Ansicht einer Multiaperturabbildungsvorrichtung mit einer Einstelleinrichtung zum kanalindividuellen Einstellen optischer Eigenschaften, gemäße einem Ausführungsbeispiel;

Fig. 23b    eine Variante einer Multiaperturabbildungsvorrichtung mit der Einstelleinrichtung gemäß einem Ausführungsbeispiel;

Fig. 24    eine schematische Ansicht der um zusätzliche Aktoren ergänzten Vorrichtung aus Fig. 22a gemäß einem Ausführungsbeispiel; und

Fig. 25    eine schematische Ansicht einer Anordnung von Aktoren in einer Multiaperturabbildungsvorrichtung gemäß einem Ausführungsbeispiel.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

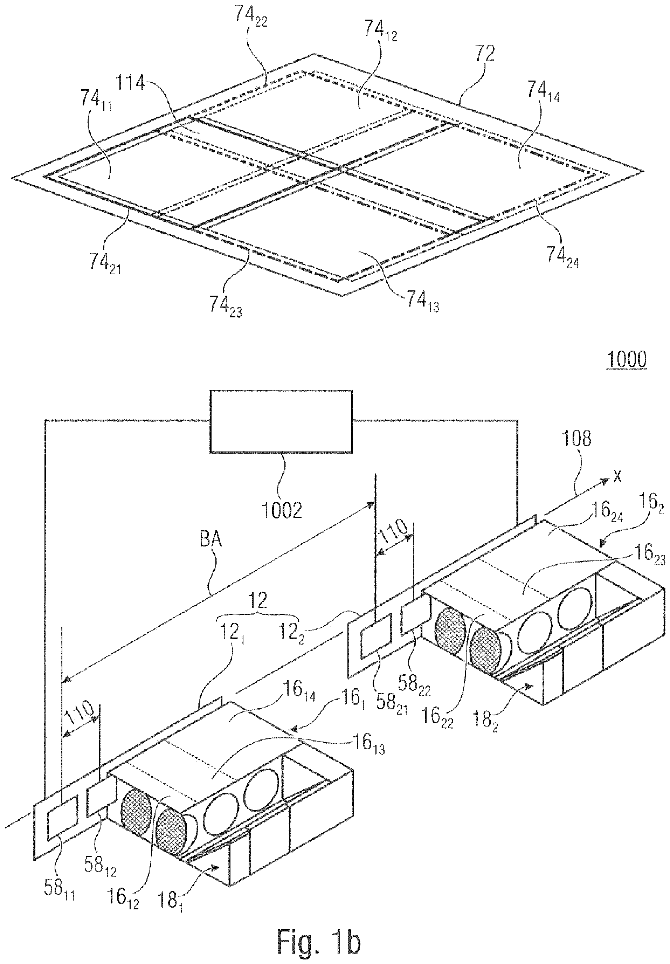

Die Elemente, die mit einem Bezugszeichen versehen sind, das mit einem Index 1 an der ersten Position von links versehen ist, gehören nachfolgend zu der ersten Komponente 1 für die rechten Kanäle, Modul 11a, der Vorrichtung 1000 und die Elemente, die mit einem Bezugszeichen versehen sind, das mit einem Index 2 an der ersten Position von links versehen ist, gehören somit zu der zweiten Komponente 2 oder einem zweiten Modul 11b für die linken Kanäle, Modul 2, der Vorrichtung 1000. Obwohl die Anzahl der Module in Fig. 1b zwei ist, könnte die Vorrichtung auch mehr besitzen, die mit einem jeweiligen Basisabstand zueinander angeordnet sind.

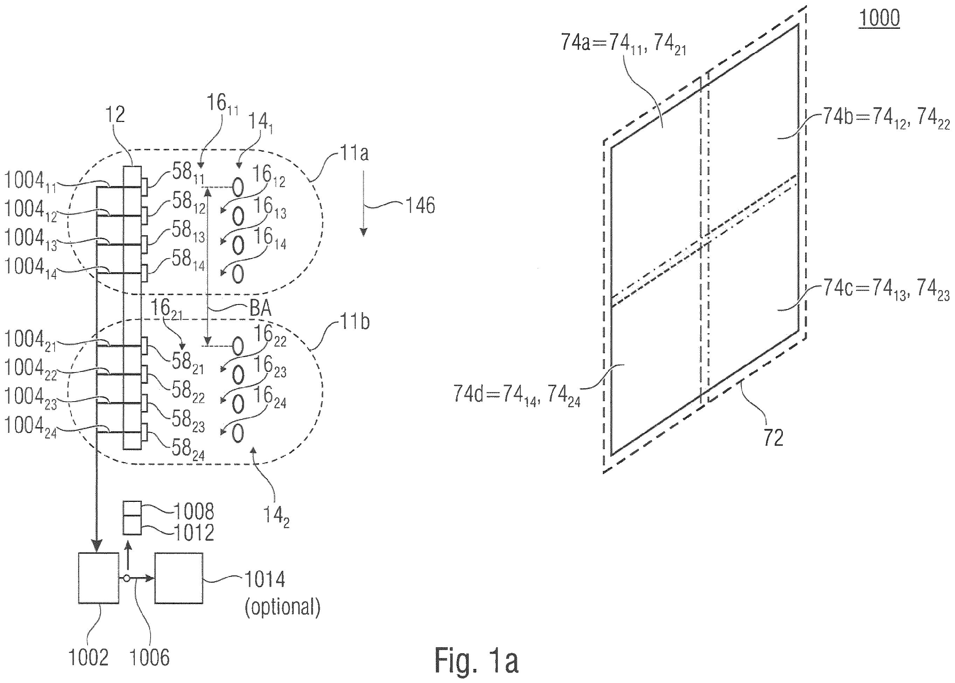

Fig. 1a zeigt eine schematische perspektivische Ansicht einer 3D-Multiaperturabbildungsvorrichtung 1000. Die 3D-Multiaperturabbildungsvorrichtung 1000 umfasst einen Bildsensor 12. Der Bildsensor 12 umfasst eine Vielzahl von Bildsensorbereichen $58_{11}$ - $58_{24}$. Jeder der Bildsensorbereiche $58_{11}$ - $58_{24}$ umfasst eine Vielzahl von Pixeln, so dass jeder der Bildsensorbereiche $58_{11}$ - $58_{24}$ ausgebildet ist, um ein Teilbild eines Gesamtbildes zu erfassen. Das Gesamtbild kann als Abbildung eines Gesamtgesichtsfeldes 72 verstanden werden.

Beispielsweise kann die 3D-Multiaperturabbildungsvorrichtung 1000 zwei oder mehr Module 11 oder Multiaperturabbildungsvorrichtungen 11 aufweisen. Jede der Multiaperturabbildungsvorrichtungen 11a und 11b kann ausgebildet sein, um das Gesamtgesichtsfeld zumindest nahezu vollständig oder vollständig abzubilden, und um einen Kanal eines zumindest stereoskopen Erfassungssystems zu bilden. Ein erster Kanal kann in Anlehnung an eine stereoskope Nomenklatur bspw. ein "rechter" Kanal sein, während ein zweiter Kanal ein "linker" Kanal sein kann. Die Bezeichnung links/rechts soll allerdings in diesem Zusammenhang keine einschränkende Wirkung entfalten, sondern kann auch mit beliebigen anderen Begriffen bezeichnet werden, etwa oben, unten, mittig, vorne, hinten oder dergleichen.

Für die Erfassung umfasst die 3D-Multiaperturabbildungsvorrichtung 1000 bspw. ein erstes Modul 11a mit einer ersten Mehrzahl von optischen Kanälen $16_{11}$ - $16_{14}$, die zu einem Array $14_1$ angeordnet sind. Ferner umfasst die 3D-Multiaperturabbildungsvorrichtung 1000 ein zweites Modul 11b mit einer zweiten Mehrzahl von optischen Kanälen $16_{21}$ - $16_{24}$, die zu einem zweiten Array $14_2$ angeordnet sind. Die Module 11a und 11b sind mit einem Basisabstand BA zueinander versetzt angeordnet, so dass sich basierend auf einer dadurch erhaltenen Disparität zumindest stereoskope Informationen ableiten lassen.

Jeder der optischen Kanäle $16_{11}$ - $16_{24}$ ist ausgebildet, um ein Teilgesichtsfeld 74a - 74d bzw. Teilgesichtsfeld 74a - 74d eines Gesamtgesichtsfeldes 72 zu erfassen. Zumindest benachbarte Teilgesichtsfelder können miteinander überlappen, beispielsweise die Teilgesichtsfelder 74a und 74b oder die Teilgesichtsfelder 74b und 74c, aber auch diagonal benachbarte Teilgesichtsfelder, wie die Teilgesichtsfelder 74a und 74c oder 74b und 74d. Die Überlappung kann eine einfache Berechnung des Gesamtbildes aus Teilbildern ermöglichen, indem die überlappenden Bildbereiche einen Aufschluss darauf liefern, wie die Teilbilder zusammengesetzt werden sollen, etwa im Rahmen eines Stitching-Verfahrens. Bei der dargestellten Anordnung von vier Teilbereichen 74a - 74d, die in zwei Zeilen und zwei Spalten zueinander angeordnet sind, können sich auch alle Teilbereiche 74a - 74d miteinander überlappen.

Wie es durch die Indizierung 11 - 14 und 21 - 24 dargestellt ist, ist der optische Kanal $16_{11}$ beispielsweise ausgebildet, um das Teilgesichtsfeld 74a bzw. $74_{11}$ auf den Bildsensorbereich $58_{11}$ abzubilden. In vergleichbarer Weise ist der optische Kanal $16_{21}$ beispielsweise ausgebildet, um das Teilgesichtsfeld 74a bzw. $74_{21}$ auf den Bildsensorbereich $58_{21}$ abzubilden. Somit wird jeder Teilbereich 74a - 74d durch zwei optische Kanäle auf zwei Bildsensorbereiche abgebildet. Obwohl bspw. der Teilbereich 74a so dargestellt ist, dass er jeweils vollständig durch das Modul 11a als Teilgesichtsfeld $74_{11}$ und vollständig durch das Modul 11b als Teilgesichtsfeld $74_{21}$ abgebildet wird, versteht es sich, dass die Teilgesichtsfelder $74_{11}$ und $74_{21}$ nicht vollständig identisch sind, etwa basierend auf Fertigungstoleranzen. Derartige Effekte können jedoch durch Kalibrierung oder dergleichen kompensiert werden und werden nachfolgend vernachlässigt.

Die Bildsensorbereiche $58_{11}$ - $58_{14}$ und die optischen Kanäle $16_{11}$ - $16_{14}$ können Bestandteile des ersten Abbildungsmoduls 11a sein, während die Bildsensorbereiche $58_{21}$ - $58_{24}$ und die optischen Kanäle $16_{21}$ - $16_{24}$ Bestandteile des zweiten Abbildungsmoduls 11b sein können. Jedes der Abbildungsmodule 11a und 11b ist beispielsweise ausgebildet, um das Gesamtgesichtsfeld 72 zu erfassen, das bedeutet, dass die 3D-Multiaperturabbildungsvorrichtung mittels der Module 11a und 11b das Gesamtgesichtsfeld 72 stereoskop erfassen kann. Das bedeutet, dass beispielsweise die von den optischen Kanälen $16_{21}$ - $16_{24}$ erfassten Teilgesichtsfelder $74_{21}$ - $74_{24}$ im Wesentlichen den Gesichtsfeldern $74_{11}$ - $74_{14}$ entsprechend können, so dass die sich ebenfalls gegenseitig überlappenden Teilgesichtsfelder $74_{21}$ - $74_{24}$ mit den ersten Teilgesichtsfeldern $74_{11}$ - $74_{14}$ im Wesentlichen bzw. vollständig überlappen, was durch die Bezeichnung 74a - 74d dargestellt ist.

Die 3D-Multiaperturabbildungsvorrichtung umfasst einen Prozessor 1002, der ausgebildet ist, um Bildsensordaten $1004_{11}$ - $1004_{14}$ von dem ersten Modul 11a und Bildsensordaten $1004_{21}$ - $1004_{24}$ von dem zweiten Modul 11b zu empfangen. Die Bildsensordaten $1004_{11}$ - $1004_{24}$ können beispielsweise die Signal- oder Abtastwerte der Bildsensorbereiche $58_{11}$ - $58_{24}$ umfassen oder auch hiervon abgeleitete Werte, wie etwa einen Pixelwert oder einen Farbwert umfassen. Beispielsweise kann der Bildsensor als ladungsgekoppelte Vorrichtung (engl.: Charge-Coupled Device - CCD), als komplementärer Metalloxidhalbleiter (engl.: Complementary Metal Oxide Semiconductor - CMOS) oder als anders gebildeter Bildsensor ausgebildet sein. Die Bildsensordaten $1004_{11}$ - $1004_{24}$ können jeweils die Ausgabewerte des jeweiligen Sensors oder Teilsensors sein. Unabhängig von der konkreten Implementierung weisen die Bildsensordaten $1004_{11}$ - $1004_{24}$ Informationen über die auf die Bildsensorbereiche $58_{11}$ - $58_{14}$ und $58_{21}$ - $58_{24}$ abgebildeten Teilgesichtsfelder $74_{11}$ - $74_{14}$ bzw. $74_{21}$ - $74_{24}$ auf.

Der Prozessor 1002 ist ausgebildet, um ein Ausgangssignal 1006 bereitzustellen, das einen Datenheader 1008 und Nutzdaten 1012 aufweist. Der Datenheader 1008 weist eine Information bezüglich des Aufbaus der 3D-Multiaperturabbildungsvorrichtung 1000 auf. Die Nutzdaten 1012 weisen aus den Pixeln der Bildsensorbereiche $58_{11}$ - $58_{14}$ und $58_{21}$ - $58_{24}$ gewonnene Bildinformationen auf. Hierbei handelt es sich um verarbeitete Informationen, was später noch detailliert erläutert wird. Das Ausgangssignal 1006 kann somit ein Bildsignal sein. Alternativ kann es sich auch um ein Videosignal handeln, wenn mehrere Bilder des Gesamtgesichtsfeldes als Video aufgezeichnet werden.

Die 3D-Multiaperturabbildungsvorrichtung 1000 kann optional eine Ausgabeschnittstelle 1014 aufweisen, über die das Ausgangssignal 1004 ausgegeben werden kann. Bei der Ausgabeschnittstelle 1014 kann es sich um eine drahtlose oder drahtgebundene Schnittstelle handeln. Beispielsweise kann die Ausgabeschnittstelle 1014 permanent oder vorübergehend mit einem Speicher verbunden sein, etwa einer Festplatte oder einem externen Speichermedium wie etwa einem USB-Speichermodul (USB = Universal Serial Bus; universeller serieller Bus) oder einer Speicherkarte. Alternativ oder zusätzlich kann die Ausgabeschnittstelle 1014 ausgelegt sein kann, um eine drahtgebundene oder drahtlose Verbindung mit einer anderen Vorrichtung, wie etwa einem Computer oder einem Laptop herzustellen. Alternativ zu der Speicherschnittstelle 1014 kann auch ein Speichermodul angeordnet sein.

Obwohl die Module 11a und 11b so dargestellt sind, dass die optischen Kanäle $16_{11}$ und $16_{21}$ das Teilgesichtsfeld 74a, die optischen Kanäle $16_{12}$ und $16_{22}$ das Teilgesichtsfeld 74b, die optischen Kanäle $16_{13}$ und $16_{23}$ das Teilgesichtsfeld 74c und die optischen Kanäle $16_{14}$ und $16_{24}$ das Teilgesichtsfeld 74d erfassen und in den Modulen 11a und 11b in gleicher Reihenfolge entlang einer Zeilenerstreckungsrichtung 146 der Arrays $14_1$ und $14_2$ angeordnet sind, können die Module 11a und 11b auch in voneinander abweichender Reihenfolge angeordnet sein und/oder eine von einander verschiedene Anzahl aufweisen. Das bedeutet, dass der optische Kanal $16_{21}$ ein von dem optischen Kanal $16_{11}$ verschiedenes Teilgesichtsfeld 74a - 74d erfassen kann, dass der optische Kanal $16_{22}$ ein von dem optischen Kanal $16_{12}$ verschiedenes Teilgesichtsfeld 74a - 74d erfassen kann, dass der optische Kanal $16_{23}$ ein von dem optischen Kanal $16_{13}$ verschiedenes Teilgesichtsfeld erfassen kann und/oder dass der optische Kanal $16_{24}$ ein von

dem optischen Kanal $16_{14}$ verschiedenes Teilgesichtsfeld 74a - 74d erfassen kann. Das bedeutet auch, dass die Teilgesichtsfelder 74a - 74d so abgebildet werden können, dass eine gleiche, konstante Disparität zwischen optischen Kanälen, die auf dasselbe Teilgesichtsfeld 74a - 74d gerichtet sind, vorliegt, wie es in Fig. 1a beschrieben ist, oder dass alternativ für verschiedene Teilgesichtsfelder 74a - 74d verschiedene Disparitäten vorliegen können.

Fig. 1b zeigt die 3D-Multiaperturabbildungsvorrichtung 1000, wie sie gemäß hier beschriebenen Ausführungsbeispielen einsetzbar ist. Der Bildsensor 12 kann in zwei Komponenten $12_1$ bzw. $12_2$ aufgeteilt sein, eine Komponente $12_1$ für die "rechten" optischen Kanäle $16_1$ und die andere Komponente $12_2$ für die "linken" Kanäle $16_2$. Das bedeutet, dass der Bildsensor 12 aus Fig. 1a auch mehrere als mehrere Komponenten gebildet sein kann, wobei bspw. jedes Modul 11a und 11b eine der Komponenten aufweisen kann.

Die rechten und die linken optischen Kanäle $16_1$ und $16_2$ sind bei dem Beispiel von Fig. 1b identisch aufgebaut, allerdings um den Basisabstand BA lateral versetzt voneinander angeordnet, um möglichst viele Tiefeninformationen bezüglich der im Gesichtsfeld der Vorrichtung 1000 befindlichen Szene zu erhalten.

In dem exemplarischen Fall von Fig. 1b umfasst jede Mehrzahl $16_1$ und $16_2$ von optischen Kanälen vier nebeneinander angeordnete optische Kanäle. Die einzelnen "rechten" Kanäle seien durch den zweiten tiefgestellten Index unterschieden. Die Kanäle seien dabei von rechts nach links indexiert. D. h., der optische Kanal $16_{11}$, der in Fig. 1b wegen einer zum Zwecke der Übersichtlichkeit gewählten Teilwegnahme nicht dargestellt ist, ist beispielsweise entlang der Basisabstandsrichtung 108, entlang welcher die linken und die rechten Kanäle voneinander unter dem Basisabstand BA versetzt zueinander angeordnet sind, am äußersten rechten Rand angeordnet, d. h. am weitesten entfernt von der Mehrzahl $16_2$ linker Kanäle, wobei die anderen rechten Kanäle $16_{12}$ - $16_{14}$ entlang der Basisabstandsrichtung 108 folgen. Die Kanäle $16_{11}$ - $16_{14}$ bilden also ein einzeiliges Array von optischen Kanälen, dessen Zeilenerstreckungsrichtung der Basisabstandsrichtung 108 entspricht. Ebenso sind auch die linken Kanäle $16_2$ aufgebaut. Auch sie seien durch den zweiten tiefgestellten Index voneinander unterschieden. Die linken Kanäle $16_{21}$ - $16_{24}$ sind nebeneinander und in der gleichen Richtung aufeinanderfolgend angeordnet wie die rechten Kanäle $16_{11}$ - $16_{14}$, nämlich so, dass der Kanal $16_{21}$ den rechten Kanälen am nächsten ist und der Kanal $16_{24}$ am weitesten entfernt von Letztgenannten.

Jeder der rechten Kanäle $16_{11}$ - $16_{14}$ umfasst eine entsprechende Optik, die, wie es in Fig. 1b angedeutet ist, aus einem Linsensystem bestehen kann. Alternativ könnte jeder Kanal eine Linse aufweisen. Jeder optische Kanal $16_{11}$ - $16_{14}$ nimmt eines von sich überlappenden Teilgesichtsfeldern 74a-d bzw. $74_{11-14}$ des Gesamtgesichtsfeldes 72 auf, die sich gegenseitig überlappen, wie es im Zusammenhang mit der Fig. 1a beschrieben ist. Der Kanal $16_{11}$ bildet beispielsweise das Teilgesichtsfeld $74_{11}$ auf einen Bildsensorbereich $58_{11}$ ab, der optische Kanal $16_{12}$ das Teilgesichtsfeld $74_{12}$ auf einen Bildsensorbereich $58_{12}$, der optische Kanal $16_{13}$ ein zugeordnetes Teilgesichtsfeld $74_{13}$ auf einen entsprechenden in Fig. 1b nicht sichtbaren Bildsensorbereich $58_{13}$ des Bildsensors 12 und der optische Kanal $16_{14}$ ein zugeordnetes Teilgesichtsfeld $74_{14}$ auf einen entsprechenden Bildsensorbereich $58_{14}$, der ebenfalls in Fig. 1b wegen Verdeckung nicht gezeigt ist.

in Fig. 1b sind die Bildsensorbereiche $58_{11}$ - $58_{14}$ des Bildsensors 12 bzw. der Komponente $12_1$ des Bildsensors 12 in einer Ebene parallel zur Basisabstandsrichtung BA bzw. parallel zur Zeilenerstreckungsrichtung 108 angeordnet, und zu dieser Ebene sind auch Linsenebenen der Optiken der optischen Kanäle $16_{11}$ - $16_{14}$ parallel. Zudem sind die Bildsensorbereiche $58_{11}$ - $58_{14}$ untereinander mit einem lateralen Interkanalabstand 110 angeordnet, mit welchem auch die Optiken der optischen Kanäle $16_{11}$ - $16_{14}$ untereinander in dieser Richtung angeordnet sind, so dass die optischen Achsen und Strahlengänge der optischen Kanäle $16_{11}$ - $16_{14}$ zwischen den Bildsensorbereichen $58_{11}$ - $58_{14}$ und den Optiken $16_{11}$ - $16_{14}$ parallel zueinander verlaufen. Beispielsweise sind Zentren der Bildsensorbereiche $58_{11}$ - $58_{14}$ und optische Zentren der Optiken der optischen Kanäle $16_{11}$ - $16_{14}$ auf der jeweiligen optischen Achse angeordnet, die senkrecht zu der vorerwähnten gemeinsamen Ebene der Bildsensorbereiche $58_{11}$ - $58_{14}$ verlaufen.

Die optischen Achsen bzw. Strahlengänge der optischen Kanäle $16_{11}$ - $16_{14}$ werden durch eine Strahlumlenkeinrichtung $18_1$ umgelenkt und damit mit einer Divergenz versehen, die dazu führt, dass sich die Teilgesichtsfelder $74_{11}$ - $74_{14}$ der optischen Kanäle $16_{11}$ - $16_{14}$ gegenseitig nur teilweise überlappen, wie z. B. so, dass sich paarweise die Teilgesichtsfelder $74_{11}$ - $74_{14}$ höchstens zu 50 % im Raumwinkel überlappen. Die Strahlumlenkeinrichtung $18_1$ kann, wie es in Fig. 1b angedeutet ist, beispielsweise für jeden optischen Kanal $16_{11}$ - $16_{14}$ eine reflektive Facette aufweisen, die unter den Kanälen $16_{11}$ - $16_{14}$ unterschiedlich gegeneinander verkippt sind. Eine mittlere Neigung der reflektiven Facetten gegenüber der Bildsensorebene lenkt das Gesamtgesichtsfeld der rechten Kanäle $16_{11}$ - $16_{14}$ in eine Richtung um, die beispielsweise senkrecht zu der Ebene steht, in welcher die optischen Achsen der Optiken der optischen Kanäle $16_{11}$ - $16_{14}$ vor bzw. ohne Strahlumlenkung durch die Vorrichtung $18_1$ verlaufen, oder weicht von dieser senkrechten Richtung weniger als 10° ab. Alternativ könnte die Strahlumlenkeinrichtung $18_1$ auch Prismen zur refraktiven Strahlumlenkung der einzelnen optischen Achsen bzw. Strahlengänge der optischen Kanäle $16_{11}$ - $16_{14}$ verwenden.

Die Strahlumlenkeinrichtung $18_1$ versieht die Strahlengänge der optischen Kanäle $16_{11}$ - $16_{14}$ mit einer Divergenz derart, dass die eigentlich linear in der Richtung 108 nebeneinander angeordneten Kanäle $16_{11}$ - $16_{14}$ das Gesamtgesichtsfeld 72 zweidimensional oder in einer zweiten Richtung senkrecht zur Zeilenerstreckungsrichtung 108 abdecken.

Es sei darauf hingewiesen, dass die Strahlengänge bzw. optischen Achsen auch von der beschrieben Parallelität abweichen könnte, dass dennoch die Parallelität der Strahlengänge der optischen Kanäle aber immer noch so ausgeprägt sein könnte, dass sich die Teilgesichtsfelder, die durch die einzelnen Kanäle $16_{11}$ - $16_{14}$ abgedeckt bzw. auf die jeweiligen Bildsensorbereiche $58_{11}$ - $58_{14}$ abgebildet werden, ohne weitere Maßnahmen, wie nämlich die Strahlumlenkung, größtenteils überlappen würden, so dass, um ein größeres Gesamtgesichtsfeld durch die Multiaperturabbildungsvorrichtung 1000 abzudecken, die Strahlumlenkeinrichtung 18 die Strahlengänge so mit einer zusätzlichen Divergenz versieht, dass sich die Teilgesichtsfelder der Kanäle $16_{11}$ - $16_{14}$ weniger gegenseitig überlappen. Die Strahlumlenkeinrichtung 18, sorgt beispielsweise dafür, dass das Gesamtgesichtsfeld einen über alle azimutalen Winkel bzw. über alle Transversalrichtungen gemittelten Öffnungswinkel aufweist, der größer ist als 1,5-mal dem entsprechenden mittleren Öffnungswinkel der Teilgesichtsfelder der optischen Kanäle $16_{11}$ - $16_{14}$.

Ebenso wie die rechten Kanäle $16_{11}$ - $16_{14}$ sind nun auch die linken Kanäle $16_{21}$ - $16_{24}$ aufgebaut und relativ zu jeweiligen zugeordneten Bildsensorbereichen $58_{21}$ - $58_{24}$ positioniert, wobei die in der gleichen Ebene wie die optischen Achsen der Kanäle $16_{11}$ - $16_{14}$ parallel zueinander verlaufenden optischen Achsen der optischen Kanäle $16_{21}$ - $16_{24}$ durch eine korrespondierende Strahlumlenkeinrichtung $18_2$ umgelenkt werden, so dass die optischen Kanäle $16_{21}$ - $16_{24}$ das gleiche Gesamtgesichtsfeld 72 in nahezu kongruenter Art und Weise aufnehmen, nämlich in Teilgesichtsfeldern $74_{21}$ - $74_{24}$, in die das Gesamtgesichtsfeld 72 zweidimensional aufgeteilt ist, die sich gegenseitig überlappen, und von denen jedes nahezu vollständig mit dem entsprechenden Teilgesichtsfeld $74_{11}$ - $74_{14}$ eines entsprechenden Kanals der rechten Kanäle $16_{11}$ - $16_{14}$ überlappt. Beispielsweise überlappen die Teilgesichtsfelder $74_{11}$ und das Teilgesichtsfeld $74_{21}$ nahezu vollständig miteinander, die Teilgesichtsfelder $74_{12}$ und $74_{22}$ usw. Die Bildsensorbereiche $58_{11}$ - $58_{24}$ können beispielsweise jeweils aus einem Bildsensorchip gebildet sein, wie es für den Bildsensor 12 in 1a beschrieben ist, aus einigen wenigen Bildsensorchips, aus zweien oder nur aus einem gemeinsamen Bildsensorchip bestehen.

Zusätzlich zu den vorerwähnten Komponenten umfasst die 3D-Multiaperturabbildungsvorrichtung einen Prozessor 1002, der die Aufgabe übernimmt, beispielsweise die Bilder, die bei einer Aufnahme durch die 3D-Multiaperturabbildungsvorrichtung 1000 durch die rechten optischen Kanäle $16_{11}$ - $16_{14}$ aufgenommen worden sind, zu einem ersten Gesamtbild zu verschmelzen. Das Problem, das dabei zu bewältigen ist, ist das Folgende: Aufgrund der Interkanalabstände 110 zwischen benachbarten Kanälen der rechten Kanäle $16_{11}$ - $16_{14}$ können

die Bilder, die bei einer Aufnahme durch die Kanäle $16_{11}$ - $16_{14}$ in den Bildbereichen $58_{11}$ - $58_{14}$ aufgenommen werden, nicht einfach bzw. translatorisch gegenseitig verschoben und aufeinander gelegt werden. In anderen Worten ausgedrückt, lassen sie sich nicht ohne weiteres aneinanderfügen. Disparität nennt man den lateralen Versatz entlang der Richtung BA, 108 bzw. 110 in den Bildern der Bildsensorbereiche $58_{11}$ - $58_{14}$ bei Aufnahme einer gleichen Szene, die einander korrespondieren sich aber in unterschiedlichen Bildern befinden. Die Disparität einander korrespondierender Bildinhalte hängt aber wiederum von der Entfernung dieses Bildinhalts in der Szene ab, d. h. der Entfernung des entsprechenden Objekts von der Vorrichtung 1000. Der Prozessor 1002 könnte nun versuchen, Disparitäten unter den Bildern der Bildsensorbereiche $58_{11}$ - $58_{14}$ selbst auszuwerten, um diese Bilder miteinander zu einem ersten Gesamtbild, nämlich zu einem "rechten Gesamtbild" zu verschmelzen. Nachteilig ist allerdings, dass die Interkanalabstand 110 zwar vorhanden ist, und damit eben erst das Problem hervorruft, dass der Interkanalabstand 110 aber andererseits auch relativ gering ist, so dass die Tiefenauflösung bzw. -abschätzung lediglich ungenau ist. Der Versuch, einander korrespondierende Bildinhalte in einem Überlappbereich zwischen zwei Bildern, wie z. B. in dem Überlappbereich 114 zwischen den Bildern der Bildsensorbereiche $58_{11}$ und $58_{12}$ beispielsweise mittels Korrelation zu ermitteln, ist deshalb schwierig.

Der Prozessor von Fig. 1b verwendet deshalb in dem Überlappbereich 114 zwischen den Teilgesichtsfeldern $74_{11}$ und $74_{12}$ zur Verschmelzung Disparitäten in einem Paar von Bildern, von denen eines durch einen der linken Kanäle $16_{21}$ oder $16_{22}$ aufgenommen ist, dessen abgebildetes zweites Teilgesichtsfeld, nämlich $74_{21}$ bzw. $74_{22}$, mit dem Überlappbereich 114 überlappt. Beispielsweise wertet der Prozess 1002 zur Verschmelzung der Bilder der Bildsensorbereiche $58_{11}$ und $58_{12}$ Disparitäten in Bildern aus, von denen eines durch einen der Bildsensorbereiche $58_{21}$ oder $58_{22}$ und ein anderes durch einen der an dem Überlappbereich 114 beteiligten Kanäle aufgenommen ist, d. h. ein Bild, das durch einen der Bildsensorbereiche $58_{11}$ oder $58_{12}$ aufgenommen ist. Ein solches Paar besitzt dann einen Basisabstand entsprechend des Grundbasisabstands BA plus/minus einem oder keinem eines Kanalbasisabstands 110. Letzterer Basisabstand ist deutlich größer als ein einzelner Kanalbasisabstand 110, weshalb sich die Disparitäten in dem Überlappbereich 86 für den Prozessor 1002 leichter ermitteln lassen. Der Prozessor 1002 wertet deshalb für die Verschmelzung der Bilder der rechten Kanäle Disparitäten aus, die sich mit einem Bild der linken Kanäle ergibt und zwar vorzugsweise, aber nicht ausschließlich, zwischen Bildern von einem der rechten Kanäle und einem der linken Kanäle.

Spezifischer ausgedrückt, ist es möglich, dass der Prozessor 1002 denjenigen Teil des Teilgesichtsfeldes $74_{11}$, der nicht mit einem der anderen Teilgesichtsfelder der rechten Kanäle überlappt, mehr oder weniger direkt aus dem Bild $58_{11}$ übernimmt und das Gleiche unternimmt für die nicht-überlappenden Bereiche der Teilgesichtsfelder $74_{12}$, $74_{13}$ und $74_{14}$ auf Basis der Bilder der Bildsensorbereiche $58_{12}$ - $58_{14}$, wobei die Bilder der Bildsensorbereiche $58_{11}$ - $58_{14}$ beispielsweise gleichzeitig aufgenommen wurden. Lediglich in den Überlappbereichen benachbarter Teilgesichtsfelder, wie z. B. der Teilgesichtsfelder $74_{11}$ und $74_{12}$, zieht dann der Prozessor 1002 Disparitäten aus Bildpaaren heran, deren Überlapp im Gesamtgesichtsfeld 72 im Überlappbereich überlappt, aber von denen in der Mehrzahl aber nicht ausschließlich eines durch einen der rechten Kanäle aufgenommen wurde und das andere durch einen der linken Kanäle, wie z. B. wiederum zur gleichen Zeit.

Gemäß einer alternativen Vorgehensweise wäre es allerdings ebenfalls möglich, dass der Prozessor 1002 alle Bilder des rechten Kanals warpt, und zwar gemäß einer Auswertung von Disparitäten zwischen Paaren von Bildern, von denen jeweils eines durch die rechten Kanäle und das andere durch die linken Kanäle aufgenommen wurde. So könnte beispielsweise das Gesamtbild, das durch den Prozessor 1002 für die Bilder der rechten Kanäle berechnet wird, virtuell nicht nur im Überlappbereich der Teilgesichtsfelder $74_{11}$ - $74_{14}$ der rechten Kanäle, sondern auch in dem Nicht-Überlappbereich virtuell auf einen Blick-Punkt "gewarpt" werden, der beispielsweise lateral in der Mitte zwischen den rechten Kanälen $16_{11}$ - $16_{14}$ liegt, und zwar indem auch für diejenigen Bereiche der Teilgesichtsfelder $74_{11}$ - $74_{14}$, die sich nicht gegenseitig überlappen, Disparitäten aus Bildpaaren durch den Prozessor 1002 ausgewertet werden, bei denen ein Bild durch einen der rechten Kanäle und ein anderes Bild durch einen der linken Kanäle aufgenommen wurde.

Die 3D-Multiaperturabbildungsvorrichtung 1000 von Fig. 1b ist nicht nur in der Lage, ein Gesamtbild aus den Bildern der rechten Kanäle zu erzeugen, sondern die 3D-Multiaperturabbildungsvorrichtung 140 von Fig. 1b ist zumindest auch in einem Betriebsmodus in der Lage, aus einer Aufnahme zusätzlich zu dem Gesamtbild der ersten Kanäle auch ein Gesamtbild der Bilder der linken Kanäle und/oder zusätzlich zu dem Gesamtbild der rechten Kanäle eine Tiefenkarte zu erzeugen.

Gemäß der ersten Alternative ist der Prozessor 1002 beispielsweise ausgebildet, um Bilder, die durch die linken optischen Kanäle $16_{21}$ - $16_{24}$ bzw. die Bildsensorbereiche $58_{21}$ - $58_{24}$ aufgenommen sind, zu einem zweiten Gesamtbild zu verschmelzen, nämlich einem Gesamtbild linken Kanals, und dabei in einem Überlappbereich von lateral benachbarten der Teilgesichtsfelder $74_{21}$ - $74_{24}$ der linken optischen Kanäle Disparitäten in einem Paar von Bildern zu verwenden, von denen in der Mehrzahl aber nicht ausschließlich eines durch einen rechten optischen Kanal $16_{11}$ - $16_{14}$ aufgenommen ist und mit dem entsprechenden Überlappbereich des Paars von Teilgesichtsfeldern $74_{21}$ - $74_{24}$ überlappt, und das andere vorzugsweise durch einen der linken optischen Kanäle aufgenommen ist, dessen Teilgesichtsfeld mit dem jeweiligen Überlappbereich überlappt.

Gemäß der ersten Alternative gibt also für eine Aufnahme der Prozessor 1002 zwei Gesamtbilder aus, nämlich eines für die rechten optischen Kanäle und das andere für die linken optischen Kanäle. Diese beiden Gesamtbilder könnten beispielsweise einem Benutzer der beiden Augen des Benutzers getrennt zugeführt werden und somit zu einem dreidimensionalen Eindruck der aufgenommenen Szene führen.

Gemäß der anderen vorerwähnten Alternative erzeugt der Prozessor 1002 zusätzlich zu dem Gesamtbild zu den rechten Kanälen eine Tiefenkarte, und zwar unter Verwendung von Disparitäten in Paaren von Bildern, die zumindest für jedes der rechten Kanäle $16_{11}$ - $16_{14}$ zumindest ein Paar aufweist, das ein Bild aufweist, das durch den jeweiligen rechten Kanal aufgenommen ist, und ein weiteres Bild, das durch eines der linken Kanäle aufgenommen ist.

Bei dem Ausführungsbeispiel, bei dem die Tiefenkarte durch den Prozessor 1002 erzeugt wird, ist es auch möglich, dass vorerwähnte Warpen für die gesamten Bilder, die durch die rechten Kanäle aufgenommen sind, auf Basis der Tiefenkarte vorzunehmen. Da die Tiefenkarte über das Gesamtgesichtsfeld 72 hinweg Tiefeninformationen aufweist, ist es möglich, die gesamten Bilder, die durch die rechten Kanäle aufgenommen sind, d. h. nicht nur in den Überlappbereichen derselben, sondern auch in den Nicht-Überlapp-bereichen, auf einen virtuellen gemeinsamen Aperturpunkt bzw. ein virtuelles optisches Zentrum zu warpen.

Die beiden Alternativen können auch beide durch den Prozessor 1002 abgearbeitet werden: Er könnte zunächst die beiden Gesamtbilder, nämlich eines für die rechten optischen Kanäle und das andere für die linken optischen Kanäle, wie oben beschrieben erzeugen, indem bei der Verschmelzung der Bilder der rechten Kanäle in den Überlappbereichen zwischen den Bildern der rechten Kanäle auch Disparitäten aus Paaren von Bildern verwendet werden, von denen eines zu den Bildern der linken Kanäle gehört, und bei der Verschmelzung der Bilder der linken Kanäle in den Überlappbereichen zwischen den Bildern der linken Kanäle auch Disparitäten aus Paaren von Bildern verwendet werden, von denen eines zu den Bildern der rechten Kanäle gehört, um dann aus den so gewonnen Gesamtbildern, die die Szene in dem Gesamtgesichtsfeld aus unterschiedlichen Perspektiven darstellen, ein Gesamtbild mit zugehöriger Tiefenkarte zu erzeugen, wie z. B. ein Gesamtbild, das zu einer virtuellen Ansicht bzw. bzw. zu einem virtuellen optischen Zentrum zwischen den optischen Zentren der Optiken der rechten und linken optischen Kanäle liegt, möglicher Weise aber nicht ausschließlich mittig dazwischen. Zur Berechnung der Tiefenkarte und zum Warpen eines der beiden Gesamtbilder oder Warpen und Verschmelzen beider Gesamtbilder in die virtuelle Ansicht verwendete der Prozessor 1002 dann das rechte und linke Gesamtbild, quasi als Zwischenergebnis aus der vorangegangenen Verschmelzung der linken bzw. rechten Einzelbilder. Der Prozessor wertete hier also Disparitäten in den beiden Zwischenergebnisgesamtbildern aus, um die Tiefenkarte zu erhalten und das Warpen oder Warpen/Verschmelzen derselben durchzuführen.

Es sei erwähnt, dass der Prozessor 1002 die Auswertung von Disparitäten in einem Paar von Bildern beispielsweise vermittels Kreuzkorrelation von Bildbereichen durchführen kann.

Es sei erwähnt, dass bei einer anderen Abdeckung des Gesamtgesichtsfeldes 72 durch die Teilgesichtsfelder der linken Kanäle einerseits und durch die Teilgesichtsfelder der rechten Kanäle andererseits sich ggf. auch mehr oder weniger als vier Kanäle (unbeachtlich ihrer Zugehörigkeit zu den linken oder rechten Kanälen) einander gegenseitig überlappen, wie es z. B. ja auch an dem gegenseitigen Überlapp zwischen den Überlappbereichen von in Zeilenrichtung oder Spaltenrichtung benachbarten Teilgesichtsfeldern der bisherigen Beispiele der Fall war, wo die Teilgesichtsfelder der rechten Kanäle sowie die Teilgesichtsfelder der linken Kanäle jeweils für sich in Spalten und Zeilen angeordnet waren. Dann gilt für die Anzahl an Disparitätsquellen ganz allgemein, dass sie $\binom{N}{2}$, wobei N die Anzahl der Kanäle mit sich miteinander überlappenden Teilgesichtsfeldern bezeichne.

Zusätzlich zur vorhergehenden Beschreibung sei noch erwähnt, dass der Prozessor 1002 optional u.a. noch eine kanalweise Korrektur perspektivischer Abbildungsstörungen des jeweiligen Kanals und/oder einen Angleich der Bildhelligkeiten sowohl in jedem Kanal als auch zwischen den Kanälen untereinander vornimmt.

Es sei darauf hingewiesen, dass das Ausführungsbeispiel von Fig. 1b in vielerlei Hinsicht lediglich exemplarisch war. Das betrifft beispielsweise die Anzahl an optischen Kanälen. Beispielsweise beträgt die Anzahl an rechten optischen Kanälen nicht Vier, sondern ist irgendwie größer gleich 2 oder liegt zwischen 2 und 10, beides inklusive, und der Überlappbereich der Teilgesichtsfelder der rechten optischen Kanäle kann, soweit für jedes Teilgesichtsfeld bzw. jeden Kanal, das Paar mit dem größten Überlapp zu dem jeweiligen Teilgesichtsfeld betrachtet wird, flächenmäßig für all diese Paare zwischen 1/2 und 1/1000 einer mittleren Bildgröße der Bilder, die von den Bildbereichen $58_{11}$ - $58_{14}$ aufgenommen werden, liegen, gemessen beispielsweise in der Bildebene, d. h. der Ebene der Bildsensorbereiche. Gleiches gilt beispielsweise für die linken Kanäle. Die Anzahl kann allerdings zwischen den rechten Kanälen und den linken Kanälen unterschiedlich sein.

Das heißt, dass die Anzahl der linken optischen Kanäle, $N_L$, und rechten optischen Kanäle, $N_R$, nicht unbedingt gleich sein muss und eine Aufteilung des Gesamtgesichtsfeldes 72 in die Teilgesichtsfelder der linken Kanäle und die Teilgesichtsfelder der rechten Kanäle nicht in etwa gleich zu sein hat, wie dies bei Fig. 1b der Fall war. Hinsichtlich der Teilgesichtsfelder und deren Überlapp kann es sich beispielsweise so verhalten, dass die Teilgesichtsfelder beispielsweise um mindestens 20, 100, 500 oder 1000 Pixel ineinander ragen, soweit eine Bildentfernung bzw. Objektentfernung von 10 m betrachtet wird, jedenfalls für alle Paare mit größtem Überlapp, wobei dies für die rechten Kanäle ebenso wie für die linken Kanäle gelten kann.

Anders als im Vorhergehenden erörtert, ist es zudem nicht notwendig, dass die linken optischen Kanäle bzw. die rechten optischen Kanäle einzeilig gebildet sind. Die linken und/oder die rechten Kanäle könnten auch ein zweidimensionales Array von optischen Kanälen bilden. Zudem ist es nicht notwendig, dass die einzeiligen Arrays eine kollineare Zeilenerstreckungsrichtung aufweisen. Die Anordnung von Fig. 1b ist allerdings vorteilhaft, da sie zu einer minimalen Bauhöhe senkrecht zu der Ebene ergibt, in welcher die optischen Achsen der optischen Kanäle, d. h. sowohl der rechten als auch der linken Kanäle, vor bzw. ohne Strahlumlenkung, führt. Hinsichtlich des Bildsensors 12 war bereits erwähnt worden, dass selbiger aus ein, zwei oder mehreren Chips gebildet sein kann. Beispielsweise könnte ein Chip pro Bildsensorbereich $58_{11}$ - $58_{14}$ und $58_{21}$ - $58_{24}$ vorgesehen sein, wobei in dem Fall mehrerer Chips selbige auf einem oder mehreren Platinen befestigt sein können, wie z. B. eine Platine für die linken Kanäle bzw. die Bildsensoren der linken Kanäle und eine Platine für die Bildsensoren der rechten Kanäle.

Bei dem Ausführungsbeispiel von Fig. 1b ist es also möglich, benachbarte Kanäle innerhalb der Kanäle der rechten oder linken Kanäle so dicht wie möglich zu platzieren, wobei im optimalen Fall der Kanalabstand 110 in etwa dem Linsendurchmesser entspricht. Hieraus ergibt sich ein geringer Kanalabstand und mithin eine geringe Disparität. Die rechten Kanäle einerseits und die linken Kanäle andererseits können aber zueinander mit einem beliebigen Abstand BA angeordnet werden, so dass sich große Disparitäten realisieren lassen. Insgesamt ergibt sich die Möglichkeit einer artefaktreduzierten oder auch -freien Bildfusion und eine Erstellung von Tiefenkarten mit einem passiven optischen Abbildungssystem.

Gegenüber obigen Beispielen wäre es möglich, mehr als nur zwei Gruppen von Kanälen $16_1$ und $16_2$ zu verwenden, etwa durch eine Anzahl von Multiaperturabbildungsvorrichtungen, die größer ist als zwei. Die Gruppenanzahl könnte mit N bezeichnet werden. Wären dann auch in diesem Fall die Anzahl von Kanälen pro Gruppe gleich sowie die Gesamtgesichtsfeldaufteilung in Teilgesichtsfelder für alle Gruppen gleich, dann ergäbe sich pro Überlappbereich von Teilgesichtsfeldern der Gruppe $16_1$ beispielsweise eine Anzahl von Disparitätsquellen von $\binom{2N}{2}$. Eine unterschiedliche Gesamtgesichtsfeldaufteilung für die Gruppen von Kanälen ist aber ebenfalls denkbar, wie oben schon erwähnt wurde.

Schließlich wird darauf hingewiesen, dass bei der vorhergehenden Beschreibung lediglich der exemplarische Fall aufgegriffen wurde, dass der Prozessor 1002 die Bilder der rechten Kanäle verschmilzt. Selbiges Vorgehen könnte von dem Prozessor 1002 wie im Vorhergehenden erwähnt für beide bzw. alle Kanalgruppen durchgeführt werden, oder auch für die linke oder dergleichen.

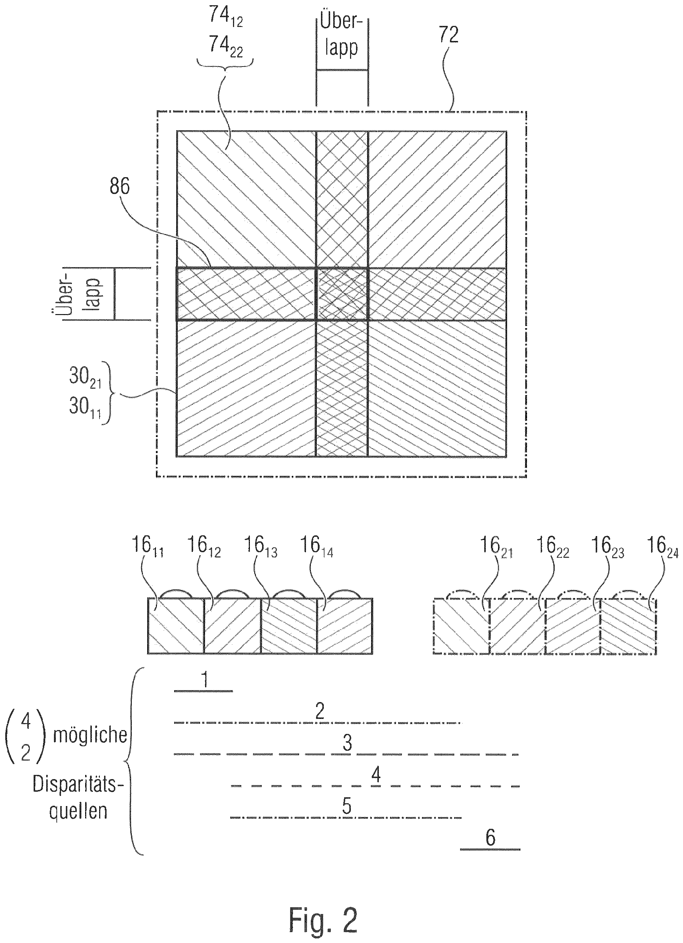

Fig. 2 zeigt zusätzlich, dass der Prozessor 1002 als Basis zur Verschmelzung von Bildern, die durch ein Paar von Bildsensoren ausgenommen wurden, auf die ein Paar von Optiken der linken Kanäle ein Paar von unmittelbar benachbarten Teilgesichtsfeldern abbildet, wie es exemplarisch für die Teilgesichtsfelder $74_{11}$ und $74_{12}$ der Fall ist, über dieses Paar von Bildern hinaus noch Disparitäten in einem oder mehreren weiteren der insgesamt $\binom{4}{2}$, d. h. "Zwei aus Vier", Disparitätsquellen verwenden kann, d. h. Paare von Bildern von Bildsensorbereichen, die Disparitäten zu Szenenobjekten in dem Überlappbereich zwischen diesem Paar von unmittelbar benachbarten Teilgesichtsfeldern betreffen. In Fig. 2 ist dies exemplarisch für den kreuzschraffierten Überlappbereich zwischen den Teilgesichtsfelder $74_{11}$ und $74_{12}$ angedeutet: Neben dem zu verschmelzenden Paar von Bildern der rechten Kanäle $16_{11}$ und $16_{12}$ selbst (Disparitätsquelle 1) existieren vier Paare von Bildern, von denen eines durch einen rechten Kanal und eines durch einen linken Kanal auf einen jeweiligen Bildsensorbereich abgebildet und von letzterem aufgenommen wird (Disparitätsquelle 2,3,4, 5), nämlich Bilder die vermittels der Kanäle $16_{11}$ und $16_{21}$ aufgenommen sind (Disparitätsquelle 2), Bilder die vermittels der Kanäle $16_{11}$ und $16_{22}$ aufgenommen sind (Disparitätsquelle 3), Bilder die vermittels der Kanäle $16_{12}$ und $16_{22}$ aufgenommen sind (Disparitätsquelle 4) und Bilder die vermittels der Kanäle $16_{12}$ und $16_{21}$ aufgenommen sind (Disparitätsquelle 5). Ferner existiert ein Paar von Bildern, von denen beide durch einen linken Kanal auf einen jeweiligen Bildsensorbereich abgebildet und von letzterem aufgenommen wird (Disparitätsquelle 2, 3, 4, 5). Der Prozessor kann einen oder mehrere der zusätzlichen Quellen 2 bis 5 zur Verschmelzungsunterstützung verwenden. Berechnet der Prozessor 1002 gemäß oben angesprochener Alternative auch eine Tiefenkarte für das Gesamtgesichtsfeld 72, so kann der Prozessor entsprechend der Vorgehensweise bei der Bildverschmelzung die Tiefenkarte an jedem Punkt des Gesichtsfeldes 72 aus der Auswertung der Disparitäten von mehr als einem Paar von Bildern bestimmen, von denen eines durch einen rechten Kanal und eines durch einen linken Kanal auf einen jeweiligen Bildsensorbereich abgebildet und von letzterem aufgenommen wird, nämlich an Punkten, an denen sich über das Teilgesichtsfeld eines rechten Kanals und das Teilgesichtsfeld eines linken Kanals hinaus noch ein anderes Paar gegenseitig überlappt. In Fig. 2 ist dies lediglich an den Überlappbereichen von Teilgesichtsfeldern rechter Kanäle der Fall, die aufgrund der Kongruenz mit den Teilgesichtsfeldern linker Kanäle mit den Überlappbereichen von Teilgesichtsfeldern linker Kanäle identisch sind, aber bei anderen Ausführungsbeispielen liegt die Kongruenz ja vielleicht nicht vor.

Die 3D-Multiaperturabbildungsvorrichtung von Fig. 1a und 1b kann beispielsweise in ein flaches Gehäuse eines mobilen Geräts, wie z. B. eines Mobiltelefons, eingebaut sein. Dabei kann die Ebene der Bildsensorbereiche $12_{11}$ - $12_{14}$ und $12_{21}$ - $12_{24}$ sowie jegliche Linsenebene der Optiken der linken und rechten Kanäle parallel zu einer Dickenrichtung des flachen Gehäuses verlaufen. Durch die Strahlumlenkung durch die Strahlumlenkvorrichtung $18_1$ bzw. $18_2$ läge das Gesamtgesichtsfeld der 3D-Multiaperturabbildungsvorrichtung beispielsweise vor einer Vorderseite, in welcher beispielsweise ein Bildschirm des mobilen Geräts positioniert ist, oder vor einer Rückseite des mobilen Geräts.

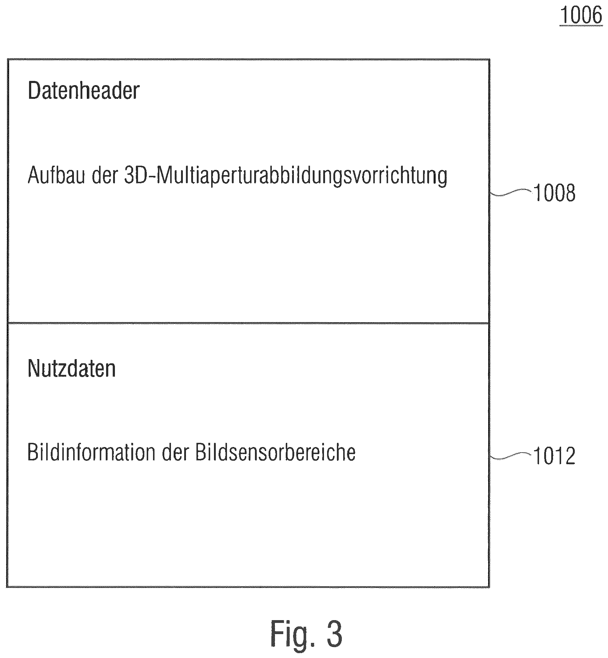

Anhand nachfolgender Fig. 3, 4, 5a, 5b und 6 wird beispielhaft erläutert, welche Inhalte oder Informationen in dem Datenheader 1008 und/oder den Nutzdaten (Payload) 1012 enthalten sein können. Obwohl sich die nachfolgenden Ausführungen darauf beziehen, dass das Ausgangssignal 1006 jeweils zwei Bestandteile, nämlich den Datenheader 1008 und die Nutzdaten 1012 aufweist, können der Datenheader 1008 und die Nutzdaten 1012 auch verschränkt miteinander oder in einer beliebigen Reihenfolge angeordnet sein, solange eine Zuordnung der jeweiligen Inhalte zu dem Datenheader 1008 oder den Nutzdaten 1012 ermöglicht ist. Ferner kann das Ausgangssignal 1006 auch weitere Bestandteile aufweisen, wie etwa laufende Nummern oder Checksummen.

Fig. 3 zeigt eine schematische Ansicht eines Aufbaus des Ausgangssignals 1006, das den Datenheader bzw. Header 1008 und die Nutzdaten (Payload) 1012 aufweist. Der Datenheader 1008 umfasst Informationen bezüglich des Aufbaus der 3D-Multiaperturabbildungsvorrichtung. Die Informationen bezüglich des Aufbaus der 3D-Multiaperturabbildungsvorrichtung können eine Reihe von Aufbaudaten berücksichtigen, hierunter eine Anzahl der Abbildungsmodule, eine Zuordnung der optischen Kanäle zu den Teilgesichtsfeldern, eine Größe und/oder Anordnung der Teilgesichtsfelder im Gesamtgesichtsfeld oder dergleichen. Die Nutzdaten 1012 umfassen Bildinformationen der Bildsensorbereiche. Hierbei kann es sich bspw. um verarbeitete oder unverarbeitete Bildsensorwerte handeln. Die Bildinformationen können bspw. fortlaufend für einzelne Pixel oder bereits sortiert bezüglich des Gesamtbildes vorliegen.

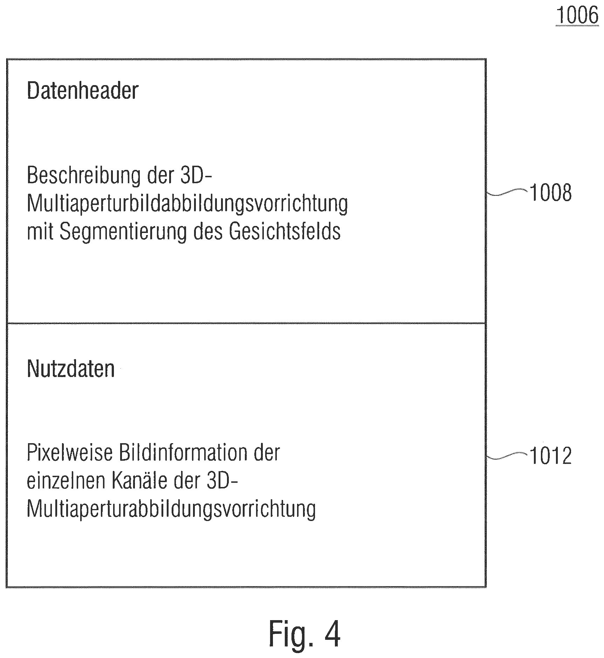

Fig. 4 zeigt eine schematische Ansicht eines Aufbaus des Ausgangssignals 1006, bei dem der Datenheader 1008 die Beschreibung der 3D-Multiaperturabbildungsvorrichtung und eine Information bezüglich einer Segmentierung des Gesamtgesichtsfeldes aufweist. Die Information der Segmentierung des Gesamtgesichtsfeldes kann sich auf die ersten oder zweiten Teilgesichtsfelder des ersten oder zweiten bzw. eines weiteren Moduls der 3D-Multiaperturabbildungsvorrichtung beziehen. Die Information kann beispielsweise eine Angabe darüber umfassen, in welcher Anzahl von Teilgesichtsfeldern das Gesamtgesichtsfeld segmentiert wird, beispielsweise basierend darauf, welche Anzahl von optischen Kanälen in dem jeweiligen Abbildungsmodul angeordnet ist. Die Segmentierung kann gleich für zumindest zwei oder alle Abbildungsmodule sein, kann sich aber auch für zumindest zwei oder alle Abbildungsmodule voneinander unterscheiden.

Beispielsweise sind die zumindest zwei Abbildungsmodule der 3D-Multiaperturabbildungsvorrichtung gleich aufgebaut. Insofern kann eine einzelne Angabe bezüglich der Segmentierung des Gesichtsfeldes in dem Datenheader 1008 ausreichend sein, da diese Information auf alle Abbildungsmodule übertragbar ist. Gemäß einem weiteren Ausführungsbeispiel ist zumindest ein erstes Abbildungsmodul von einem weiteren Abbildungsmodul verschieden ausgebildet, das bedeutet, die Anzahl und/oder Anordnung der Teilgesichtsfelder in dem Gesamtgesichtsfeld unterscheidet sich. Insofern kann der Datenheader 1008 die Information bezüglich der Segmentierung des Gesichtsfeldes für zwei, mehrere oder auch alle der Abbildungsmodule der 3D-Multiaperturabbildungsvorrichtung aufweisen. Die Information bezüglich der Segmentierung des Gesamtgesichtsfeldes kann sich somit auf eine Position und/oder Orientierung eines Teilgesichtsfeldes im Gesamtgesichtsfeld beziehen und/oder sich darauf beziehen, auf welchen Bildsensorbereich das Teilgesichtsfeld abgebildet wird.

Zusätzlich kann sich die Information bezüglich des Aufbaus der 3D-Multiaperturabbildungsvorrichtung auf die Anzahl, die Ausbildung, die Orientierung der Abbildungsmodule im Raum oder auch Abstände zwischen den Abbildungsmodulen in der 3D-Multiaperturabbildungsvorrichtung, d. h., den Basisabstand BA beziehen.

Die Beschreibung der 3D-Multiaperturabbildungsvorrichtung kann sich auf den Aufbau der 3D-Multiaperturabbildungsvorrichtung beziehen. Beispielsweise kann der Datenheader 1008 Informationen darüber aufweisen, welchen Basisabstand die Abbildungsmodule aufweisen, welche Anzahl von optischen Kanälen in dem Array $14_1$ und/oder $14_2$ angeordnet ist oder welche Reihenfolge oder Orientierung dieselben im Raum oder in den Abbildungsmodulen aufweisen. Alternativ oder zusätzlich kann auch eine Position der Abbildungsmodule und/oder eine Orientierung derselben im Raum angegeben werden. Bei einer vergleichbaren Ausbildung der Abbildungsmodule kann eine einzelne Information bezüglich dieser Ausgestaltung ausreichend sein, um alle Abbildungsmodule der 3D-Multiaperturabbildungsvorrichtung zu beschrieben. Das bedeutet, dass der Prozessor ausgebildet sein kann, um das Ausgangssignal so zu bilden, dass der Datenheader 1008 eine Information bezüglich des Basisabstandes BA aufweist.

Gemäß dem in Fig. 4 dargestellten Ausführungsbeispiel, das nicht unter den Schutzumfang der Ansprüche fällt, umfassen die Nutzdaten pixelweise Bildinformationen der einzelnen optischen Kanäle der 3D-Multiaperturabbildungsvorrichtung. Das bedeutet, dass die Informationen der Pixel der Bildsensorbereiche des Bildsensors sequenziell nacheinander gemäß einer vordefinierten Reihenfolge in den Nutzdaten 1012 angeordnet sein können. Gemäß weiteren Ausführungsbeispielen können zusätzliche und/oder alternative Informationen angeordnet sein. So können beispielsweise die Bildinformationen, d. h. die Pixelwerte in verarbeiteter Form vorliegen. Als verarbeitete Form ist beispielsweise ein Bildformat, etwa JPEG, Blender, IGES oder dergleichen mit und ohne Kompression implementierbar. Es können sowohl Informationen bezüglich eines dreidimensionalen Bildes Teil der Nutzdaten 1012 sein, aber auch eine Mehrzahl von zweidimensionalen Bildern, aus denen dann dreidimensionale Effekte oder Informationen ableitbar sind. Das bedeutet, dass auf die erste und zweite Mehrzahl von Bildsensorbereichen abgebildeten ersten und zweiten Teilgesichtsfelder bezüglich der gelieferten Bildwerte komprimiert werden können, um komprimierte Bilddaten zu erhalten. Der Prozessor 1002 ist gemäß einem Ausführungsbeispiel ausgebildet, um das Ausgangssignal so zu bilden, dass die Nutzdaten eine Information bezüglich der komprimierten Bilddaten aufweisen.

Gemäß einem Ausführungsbeispiel, das nicht unter den Schutzumfang der angefügten Ansprüche fällt, kann der Prozessor 1002 ausgebildet sein, um beispielsweise sequenziell nacheinander jedem Bildsensorbereich und somit jedes Teilgesichtsfeld sequenziell nacheinander auszuwerten und die erhaltenen Bildinformationen aus den Pixeln der Bildsensorbereiche zu verarbeiten. Das bedeutet, dass die pixelweise Bildinformation der Nutzdaten 1012 eine Struktur aufweisen kann, in der mosaikartig jedes Teilgesichtsfeld nacheinander beschrieben ist. Eine mosaikartige Form kann bspw. über eine Verschränkung der Teilgesichtsfelder 74a-d in den Überlappbereichen 114 erhalten werden. Der Prozessor 1002 ist gemäß einem Ausführungsbeispiel ausgebildet, um die Bildinformationen der Bildsensorbereiche vorzuverarbeiten, etwa um ein De-mosaiktes Gesamtbild zu erhalten. Der Prozessor 1002 ist ausgebildet, um das Ausgangssignal 1006 so zu bilden, dass die Nutzdaten 1012 eine Information bezüglich des Gesamtbildes aufweisen. Beispielsweise kann sequenziell nacheinander jede Spalte oder jede Zeile des Gesamtbildes als pixelweise Bildinformation wiedergegeben werden. Demgegenüber kann bei der mosaikartigen Darstellung eine spaltenweise oder zeilenweise Darstellung jedes Teilbildes erfolgen.

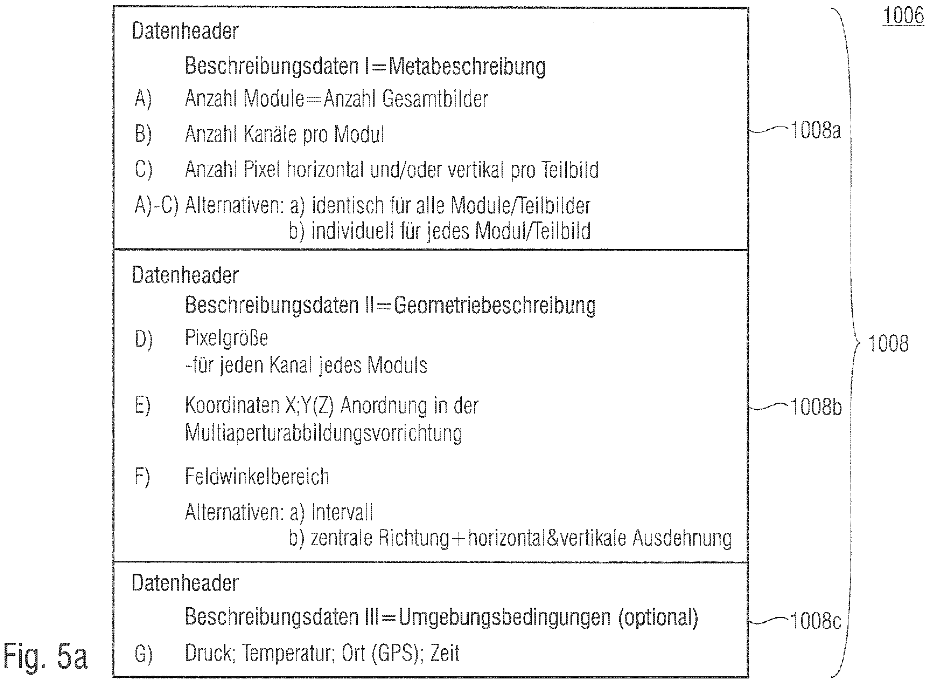

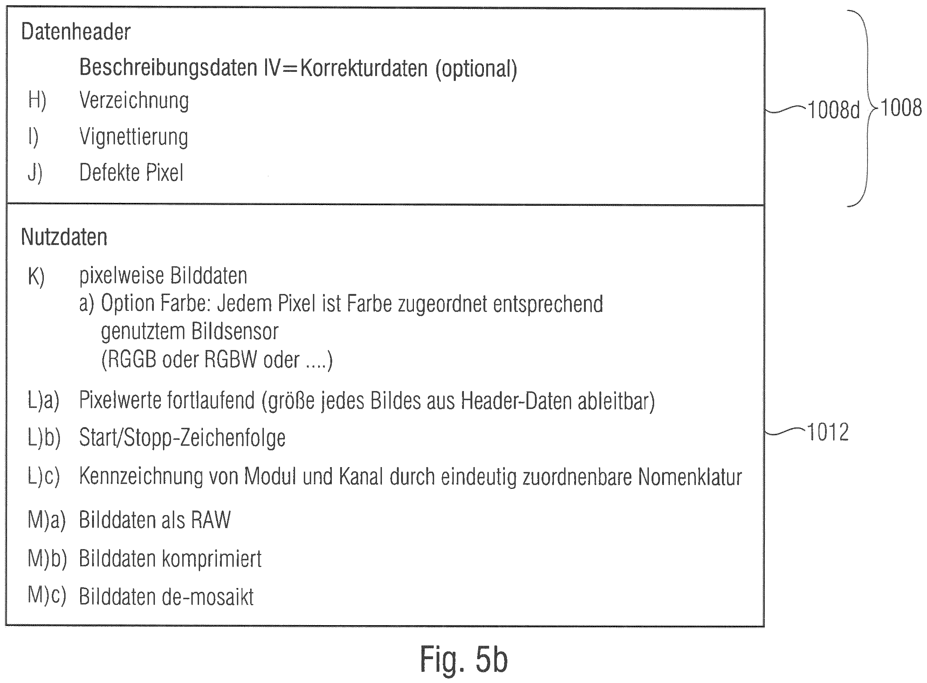

Die Fig. 5a und 5b zeigen eine schematische Ansicht einer Struktur des Ausgangssignals 1006, welches durch den Prozessor 1002 durch Berücksichtigung einer Vielzahl von Informationsquellen gebildet wird. Dabei sind die Fig. 5a und 5b als eine Figur zu verstehen, das bedeutet, dass der in Fig. 5b dargestellte Abschnitt des Datenheaders 1008 Teil des in Fig. 5a dargestellten Datenheaders 1008 ist und dass die in Fig. 5b dargestellten Nutzdaten 1012 ebenso Teil des Ausgangssignals 1006 sind, wie die in der Fig. 5a dargestellten Teile des Datenheaders 1008. Obwohl Bestandteile 1008a, 1008b, 1008c und 1008d als voneinander getrennte Informationsblöcke dargestellt sind, können in dem Datenheader 1008 enthaltene Informationen eine beliebige Struktur untereinander aufweisen. Die dargestellte Segmentierung dient lediglich der Veranschaulichung und soll keine einschränkende Wirkung entfalten.

Der Prozessor 1002 kann ausgebildet sein, um das Ausgangssignal 1006 so zu bilden, dass der Datenheader eine Information bezüglich der Anzahl der Abbildungsmodule 11 aufweist. Die Abbildungsmodule können ausgebildet sein, um jeweils das Gesamtgesichtsfeld komplett zu erfassen, das bedeutet, die Information bezüglich der Anzahl der Abbildungsmodule kann gleichgesetzt werden mit einer Anzahl von Gesamtbildern des Gesamtgesichtsfeldes.

Gemäß einem Ausführungsbeispiel weist der Datenheader eine Information darüber auf, welche Anzahl von optischen Kanälen pro Abbildungsmodul 11 angeordnet ist. Zusätzlich kann der Datenheader 1008 eine Information darüber aufweisen, welche Anzahl von Pixel entlang einer ersten und/oder zweiten Bildachse angeordnet sind, die beispielsweise als horizontal und vertikal bezeichnet werden kann. Die Information kann sich auf die Anzahl der Pixel pro Teilbild, das heißt Bildsensorbereich, und/oder Gesamtbild aufgenommener oder in dem Gesamtbild angeordneter Pixel beziehen. Das bedeutet, dass der Prozessor ausgebildet sein kann, um das Ausgangssignal 1006 so zu bilden, dass die Nutzdaten eine Information bezüglich der Bildsensorbereiche 58 aufweisen, etwa bezüglich einer Anzahl von Pixeln entlang einer Zeile und/oder Spalte oder einer geometrischen Ausdehnung der Bildsensorbereiche 58.

Die jeweiligen Informationen können identisch für alle Abbildungsmodule 11 und/oder für die optischen Kanäle, das heißt die Teilbilder sein, so dass eine Anwesenheit der Information bezüglich aller Abbildungsmodule und/oder Teilbilder zu einer ausreichenden Beschreibung führt. Alternativ kann für zumindest jede abweichende Ausführung aber auch individuell für jedes Abbildungsmodul oder Teilbild eine individuelle Information in dem Datenheader 1008 angeordnet sein. Diese vorangehende Beschreibung der A) Anzahl der Module, B) Anzahl der Kanäle pro Modul und C) Anzahl der Pixel entlang der Bildachsen und/oder des Basisabstands kann als Metabeschreibung bezüglich des Aufbaus der 3D-Multiaperturabbildungsvorrichtung 1000 angeordnet sein und ist als Element 1008a des Datenheaders 1008 gekennzeichnet. Die Informationen können individuell und in beliebiger Kombination zueinander von dem Prozessor eingefügt werden, wobei bspw. eine Angabe einer Modellnummer oder dergleichen eines Abbildungsmoduls oder 3D-Multiapeturabbildungsvorrichtung eine ebensolche Information liefern kann, wenn die Implementierung des Moduls oder der Vorrichtung hierdurch codiert ist. Vereinfacht ausgedrückt ist der Prozessor 1002 ausgebildet, um dem Ausgangssignal 1006 Informationen darüber hinzuzufügen, welcher optische Kanal in welchen Abschnitt des Gesamtgesichtsfeldes blickt und/oder welchen Abstand die optischen Kanäle zueinander haben. Dies kann insbesondere für die einzelnen Teilbilder in dem Ausgangssignal 1006 vorteilhaft sein.

Als Element 1008b des Datenheaders 1008 ist eine Geometriebeschreibung gekennzeichnet, die von dem Prozessor 1002 in den Datenheader 1008 des Ausgangssignals 1006 eingefügt werden kann. Die Geometriebeschreibung kann sich auf D) eine Pixelgröße der Pixel der Bildsensorbereiche 58 des Bildsensors 12 beziehen. Gemäß einem Ausführungsbeispiel weisen die Pixel identische oder vergleichbare Größen auf. Die Angabe der Pixelgröße kann somit global für alle Pixel erfolgen. Gemäß einem weiteren Ausführungsbeispiel weist die Gesamtzahl von Pixeln der Bildsensorbereiche 58 voneinander verschiedene Größen auf. Die Pixelgröße kann für jede unterschiedliche Ausführung der Pixel sowie für eine Zuordnung der Größe zu den jeweiligen Pixeln in dem Element 1008b angeordnet sein. Das bedeutet, dass der Prozessor 1002 ausgebildet sein kann, um das Ausgangssignal 1006 so zu bilden, dass der Datenheader 1008 zumindest für einen der Bildsensorbereiche 58 eine Information bezüglich einer Anzahl von Pixeln bezüglich einer ersten Bilderstreckungsrichtung und einer Anzahl von Pixeln für eine zweite Bilderstreckungsrichtung aufweisen kann. Hierbei kann es sich bspw. um die Erstreckungsrichtungen handeln entlang derer sich die Teilgesichtsfelder im Raum erstrecken. Die erste und zweite Richtung können senkrecht zueinander angeordnet sein und einer Anzahl von Zeilen oder Spalten entsprechen.

Ferner kann der Prozessor 1002 ausgebildet sein, um E) für einen, mehrere oder jeden optischen Kanal eines jeden Moduls 11 zweidimensionale (X/Y) oder dreidimensionale (X/Y/Z) Koordinaten einzufügen oder zumindest eine relative Positionierung zueinander einzufügen. Bei den Koordinaten kann es sich somit um lokale Koordinaten einer Anordnung der optischen Kanäle 16 bezüglich anderer optischer Kanäle und/oder globaler Koordinaten, d. h. einer Anordnung der optischen Kanäle innerhalb der 3D-Multiaperturabbildungsvorrichtung, handeln. In beiden Fällen kann eine Anordnung der optischen Kanäle 16 in dem Modul 11 und/oder in der 3D-Multiaperturabbildungsvorrichtung 1000 beschrieben werden. Das bedeutet, dass der Prozessor 1002 ausgebildet sein kann, um das Ausgangssignal 1006 so zu bilden, dass der Datenheader 1008 für zumindest einen der optischen Kanäle 16 eine Information bezüglich einer Raumkoordinate des zumindest einen optischen Kanals 16 in der 3D-Multiaperturabbildungsvorrichtung 1000 aufweist. Vereinfacht kann das Ausgangssignal 1006 so gebildet sein, dass es eine Information über eine geometrische Anordnung der optischen Kanäle aufweist.

Das Element 1008b des Datenheaders 1008 kann ferner so von dem Prozessor 1002 gebildet werden, dass es eine Information F) bezüglich eines Feldwinkelbereiches zumindest eines optischen Kanals oder auch des Abbildungsmoduls umfasst. Der Feldwinkelbereich kann entlang einer, vorzugsweise entlang zweier Bildrichtungen als Intervall angegeben werden. Dies kann auch als "reichend von ...... bis ....." "oder Blickrichtung $\pm xy$" bezeichnet werden. Alternativ oder zusätzlich kann der Feldwinkelbereich durch eine zentrale Richtung des Moduls 11 oder des optischen Kanals 16 angegeben werden und durch eine Ausdehnung des Feldwinkelbereiches entlang der zumindest einer, vorzugsweise zweier Bildachsen ergänzt werden.

Der Datenheader 1008 kann zusätzlich ein optionales Element 1008c umfassen, das Informationen G) über Umgebungsbedingungen der 3D-Multiaperturabbildungsvorrichtung 1000 aufweist. Hierzu können beispielsweise ein Druck einer die 3D-Multiaperturabbildungsvorrichtung umgebenden Atmosphäre oder Umgebung, eine Umgebungstemperatur der 3D-Multiaperturabbildungsvorrichtung, eine Betriebstemperatur der 3D-Multiaperturabbildungsvorrichtung, eine Zeit der Bilderfassung oder der Generierung des Ausgangssignals 1006 und/oder eine Position der 3D-Multiaperturabbildungsvorrichtung in den Datenheader 1008 eingefügt werden. Der Ort kann beispielsweise mittels eines Positionsbestimmungssystems wie etwa GPS, Galileo oder Glonass bestimmt oder von einer externen Datenquelle wie einem Sensor bereitgestellt werden. Die Angabe der Temperatur, bei der die Bilderfassung erfolgte, kann Vorteile bieten, wenn Bilddaten später korrigiert werden. So kann die Temperatur einen Einfluss auf eine plastische Verformung einer Abbildungsoptik und/oder auf Gehäuseteile der 3D-Multiaperturabbildungsvorrichtung haben, die zu einer Veränderung der Abbildung des Gesamtgesichtsfeldes auf die Bildsensorbereiche 58 führen. Bei Kenntnis der temperaturabhängigen Veränderung der Verformung kann diese Temperaturabhängigkeit korrigiert werden. Alternativ oder zusätzlich kann der Prozessor ausgebildet sein, um den Datenheader 1008 so zu bilden, dass er eine Information über eine Orientierung oder Blickrichtung der zumindest eines optischen Kanals, eines Moduls und/oder der 3D-Multiaperturabbildungsvorrichtung aufweist. Alternativ oder zusätzlich kann der Prozessor ausgebildet sein, um den Datenheader 1008 so zu bilden, dass das Element 1008c eine kameraspezifische Information bezüglich zumindest eines Autofukusantriebs aufweist. Der zumindest eine Autofokusantrieb, kann bspw. zur Fokussierung des erfassten Bildes genutzt worden sein. Die kameraspezifische Information kann dabei eine Angabe über eine Fokussierung der Bildinformationen oder Nutzdaten umfassen. Hierbei kann es sich um eine für alle Module gemeinsam verwendete Fokussierung, d. h. ein Autofokusantrieb, für eine modulindividuelle Fokussierung, d. h. zumindest zwei Autofokusantriebe, oder eine kanalindividuelle Fokussierung, d. h. eine Vielzahl von Autofokusantrieben aufweisen. Bei der Information kann es sich um die Angabe einer globalen oder relativen Position eines Elements des Autofokusantriebs und/oder um eine Regelgröße, etwa eine Stromgröße oder eine Spannungsgröße zum Ansteuern des Autofokusantriebs handeln. Aus der Regelgröße kann die globale oder relative Position rekonstruierbar sein, so dass auf die Fokussierung rückgeschlossen werden kann.

Der Datenheader 1008 des Ausgangssignals 1006 kann ferner, wie es in der Fig. 5b dargestellt ist, ein optionales Element 1008d aufweisen, das Informationen bezüglich möglicher Korrekturen aufweist.

Unabhängig von anderen Informationen kann das Element 1008d und somit der Datenheader 1008 eine Information bezüglich einer H) Angabe zumindest eines optischen Kanals der 3D-Multiaperturabbildungsvorrichtung, bezüglich einer I) Vignettierung, d. h. einer Abschattung des Gesamtbildes oder Teilbildes zum Bildrand hin, und/oder eine Information über J) defekte Pixel auf dem Bildsensor bzw. den Bildsensorbereichen 58. Jede der Informationen H), I) und J) kann später ebenfalls für eine Korrektur des Bildes verwendet werden.

Die Nutzdaten 1012 können, wie es im Zusammenhang mit der Fig. 4 durch K) beschrieben ist, pixelweise Bilddaten umfassen. In einem ersten Ausführungsbeispiel können fortlaufend kennzeichnende Informationen bezüglich der Pixel angegeben sein, beispielsweise gemäß einer Option a) eine Farbinformation. Basierend auf einem genutzten Bildsensor, etwa einer Zuordnung von vier Farbwerten je Pixel gemäß einem Rot-Grün-Grün-Blau-Schema, etwa gemäß einem Bayer-Filter oder gemäß einer Rot-Grün-Blau-Weiß-Anordnung oder dergleichen. Die jeweilige Farbinformation und/oder Helligkeitsinformation kann fortlaufend für fortlaufende Pixel in den Nutzdaten 1012 angeordnet sein. Alternativ können die Farbinformationen auch einem anderen, rekonstruierbarem Schema folgend von dem Prozessor 1002 angeordnet werden. Die Bilddaten können auch pixelweise Tiefendaten aufweisen, eine Angabe über eine Segmentierung von Pixeln hin zu Pixelcluster aufweisen und/oder eine Angabe von Tiefeninformationen und/oder Abstandsinformationen bezüglich Pixelclustern aufweisen. Bspw. können die Bilddaten in den Nutzdaten cluster-weise sortiert angeordnet sein und die Tiefendaten oder die Clusterinformationen entsprechend in dem Datenheader angeordnet sein.

Wie es durch die Option L)a) angedeutet ist, können die Pixelwerte ggf. ohne Trenninformation, Umbruchsinformation oder Zwischeninformation fortlaufend angeordnet sein, etwa wenn die Größe jedes Bildes aus den Header-Daten ableitbar ist, etwa durch die Information C). Alternativ oder zusätzlich kann zwischen den Pixelwerten oder zwischen einigen Pixelwerten eine Start/Stopp-Zeichenfolge angeordnet sein. Die Start/Stopp-Zeichenfolge kann zumindest ein Bit umfassen und angeben, dass ein neuer Abschnitt des Bildes beginnt, etwa ein neues Teilbild, eine neue Bildspalte oder eine neue Bildzeile. Das bedeutet, dass die Nutzdaten eine Information bezüglich eines Zeilenumbruchs oder eines Spaltenumbruchs des erfassten Bildes aufweisen können. Dies kann vorteilhaft sein, wenn die zuvor genannte Information C) in den Header-Daten abwesend ist. Alternativ oder zusätzlich kann für jede Gruppe von Pixeln eine Information in den Header-Daten eingefügt sein, die eine Kennzeichnung des Abbildungsmoduls 11 und des optischen Kanals 16, das heißt eine Zuordnung der Pixel zu dem Modul 11 und dem optischen Kanal 16 ermöglicht, wie es durch die Option L)c) angedeutet ist.

Die Bilddaten sind im Rahmen der Ausführungsbeispiele als M)a) Rohdaten (RAW) und/oder als M)b) komprimierte Bilddaten und/oder als M)c) De-mosaikte Bilddaten in den Nutzdaten 1012 angeordnet. Alternativ oder zusätzlich zu K) können die Bilddaten pixelweise Tiefendaten aufweisen, eine Angabe über eine Segmentierung von Pixeln hin zu Pixelcluster aufweisen und/oder eine Angabe von Tiefeninformationen und/oder Abstandsinformationen bezüglich Pixelclustern aufweisen.

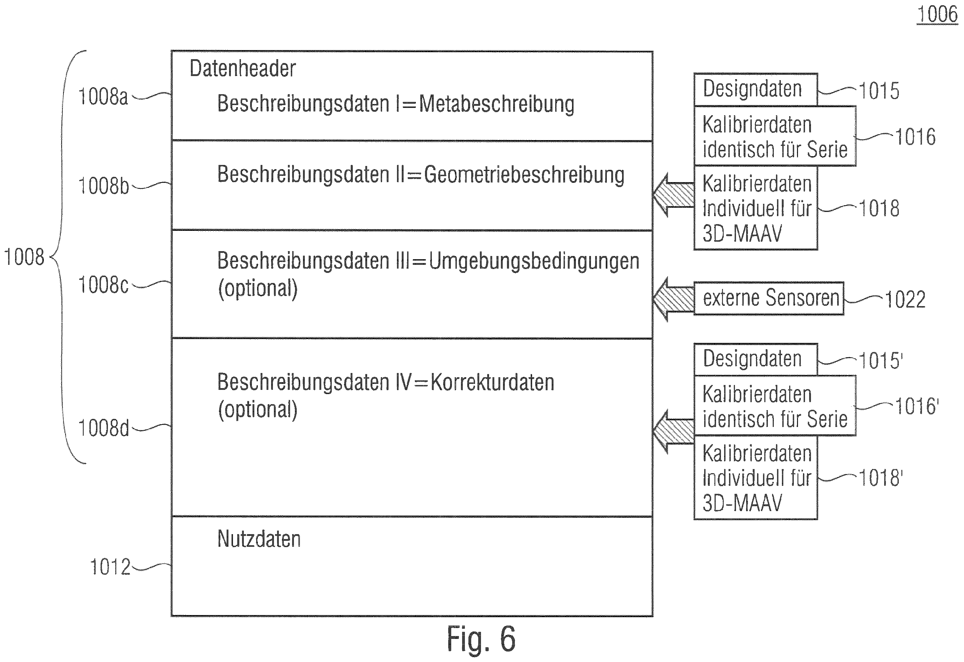

Fig. 6 zeigt eine schematische Übersicht über das Ausgangssignal 1006, das die Elemente 1008a - 1008d des Datenheaders 1008 aufweisen kann. Für die Geometriebeschreibung des Elementes 1008b und/oder die Korrekturdaten des Elementes 1008d können Designdaten 1015 der 3D-Multiaperturabbildungsvorrichtung (3D-MAAV) von dem Prozessor 1002 berücksichtigt werden. Hierzu kann beispielsweise die Pixelgröße D) gehören. Alternativ oder zusätzlich können auch Kalibrierdaten 1016 von dem Prozessor 1002 genutzt werden, etwa indem der Prozessor 1002 diese von einem Datenspeicher liest. Die Kalibrierdaten, beispielsweise der Feldwinkelbereich F) kann über eine Serie gleich oder identisch aufgebauter Multiaperturabbildungsvorrichtungen gleich sein.

Alternativ können auch individuelle Kalibrierdaten 1018 von dem Prozessor 1002 verwendet werden, etwa solche Kalibrierdaten, die individuell für die 3D-Multiaperturabbildungsvorrichtung sind, wie etwa die tatsächlichen Koordinaten E) der optischen Kanäle in der 3D-Multiaperturabbildungsvorrichtung. So können beispielsweise Fertigungstoleranzen ausgeglichen werden.

Dahingegen kann bei dem Element 1008d eine Verwertung von Designdaten 1015' durch den Prozessor 1002 dahin gehend erfolgen, dass die Verzeichnung H) der optischen Kanäle und/oder die Vignettierung I) berücksichtigt werden. Alternativ oder zusätzlich können diese Daten oder Informationen H) und/oder I) auch als Kalibrierdaten 1016', die identisch für die Serie von 3D-Multiaperturabbildungsvorrichtungen sind, genutzt werden. Alternativ oder zusätzlich können Kalibrierdaten 1018' von dem Prozessor 1002 genutzt werden, beispielsweise durch Vermessung der Pixel, um die defekten Pixel J) zu erkennen und um dies in den Nutzdaten und/oder in den Korrekturdaten 1008d zu berücksichtigen.

Das Ausgangssignal 1006 kann beispielsweise als Datei oder Datenblock in einem Speicher gespeichert oder als Signal übertragen werden.

In anderen Worten können bei einer gleichen Ausbildung aller Abbildungsmodule 11 in dem Datenheader 1008 global für alle Module 11 eine Anzahl von optischen Kanälen pro Bild, eine Anzahl von Modulen und/oder eine Anzahl von horizontalen und vertikalen Pixeln pro Teilbild angegeben sein. Die Anzahl der Module kann dabei eine Anzahl von quasi-redundanten Bildern sein, die eine Multiplizität der Ansichten darstellt. So kann beispielsweise bei einer Anzahl von zwei Modulen eine Stereoaufnahme, bei einer Anzahl von drei Modulen eine Triplet-Aufnahme und bei einer Anzahl von vier Modulen eine Quattro-Aufnahme erhalten werden. Alternativ können auch mehrere, d. h. mehr als vier Abbildungsmodule oder Multiaperturabbildungsvorrichtungen angeordnet sein.

Weist die 3D-Multiaperturabbildungsvorrichtung bspw. drei Multiaperturabbildungsvorrichtungen, d. h. Module, auf, so umfasst sie bspw. eine dritte Mehrzahl von optischen Kanälen zum Abbilden sich gegenseitig und mit den ersten Teilgesichtsfeldern überlappender dritter Teilgesichtsfelder des Gesamtgesichtsfeldes auf dritte Bildsensorbereiche des Bildsensors, wobei die erste und die zweite Mehrzahl von optischen Kanälen um einen Basisabstand voneinander lateral versetzt angeordnet sind. Der Prozessor ist ausgebildet, um Bildsensordaten von dem Bildsensor zu empfangen, die Informationen über die auf die dritte Mehrzahl von Bildsensorbereichen abgebildeten dritten Teilgesichtsfelder aufweisen, und ausgebildet ist, um das Ausgangssignal so bereitzustellen, dass die Nutzdaten aus den Pixeln der ersten Bildsensorbereiche, der zweiten Bildsensorbereiche und der dritten Bildsensorbereiche gewonnene Bildinformationen aufweisen. Die Informationen des Datenheaders können sich auf einen Aufbau oder eine Anordnung der drei Module beziehen. Alternativ sind, wie bereits beschrieben auch eine höhere Anzahl von Modulen möglich.

Alternativ kann auch eine Anzahl von Modulen, für zumindest zwei Module 11 oder für jedes Modul 11 eine Anzahl optischer Kanäle pro Bild und/oder eine Anzahl von Pixel horizontal und vertikal pro Teilbild angegeben werden, etwa wenn die Module voneinander verschieden sind. Individuelle und globale Informationen bezüglich der Module können auch gemeinsam in dem Ausgangssignal 1006 angeordnet sein, wobei dies zu einer redundanten Informationswiedergabe führen kann.

Die Geometriedaten 1008b der Kanalanordnung können sich auf eine Anzahl und/oder Bezeichnung des Moduls, auf eine Anzahl und/oder Bezeichnung des optischen Kanals in dem jeweiligen Modul 11, auf eine zweidimensionale oder dreidimensionale Koordinate des Kanals oder Moduls und/oder auf eine Winkelorientierung zumindest eines optischen Kanals in der 3D-Multiaperturabbildungsvorrichtung beziehen. Die Geometriedaten können basierend auf einer Kenntnis der Konstruktionsdaten abgeleitet und/oder bereitgestellt werden, etwa in einem Speicher. Alternativ können die Geometriedaten auch durch eine Messung bestimmt werden, was zu einer zumindest teilweisen Kompensation von Fertigungstoleranzen führen kann. Die Geometriedaten können dabei zusätzlich eine Abhängigkeit von äußeren Einflussgrößen wie Temperatur und Druck aufweisen. Eine Kenntnis dieser Größen bei einer weiteren Bildbearbeitung oder Bildrekonstruktion ermöglicht eine Durchführung einer entsprechend angepassten Korrektur. Alternativ oder zusätzlich können Kamerainformationen, etwa bezüglich einem Hersteller, einem Modell, einer Blendenzahl, einer Belichtungszeit, einem ISO-Wert, einem Lichtwert, einer Brennweite, einer Blitznutzung und/oder einer Blitzstärke, ähnlich wie bei DSLR-Kameras in die Geometriedaten 1008b eingefügt werden. Alternativ oder zusätzlich können die Kamerainformationen Informationen zu Positionsdaten bzw. Angabe einer Regelgröße (Steuerstrom, Steuerspannung) der Autofokusantriebe aufweisen.

Die Geometriedaten 1008b können ferner kanalweise, das heißt für jeden optischen Kanal, einen Feldwinkelbereich und/oder ein zentrales Feld oder Blickrichtung sowie eine Ausdehnung (horizontal/vertikal) des Feldwinkels entlang der Bildachsen angeben. Die Feldwinkeldaten können Designdaten sein. Alternativ oder zusätzlich können die Feldwinkeldaten auch im Zuge einer Kalibrierung gemessen werden, wobei die Kalibrierung am konkreten Aufbau bestimmt sein kann oder typischen Werten entsprechen kann, die an einem repräsentativen Exemplar bestimmt werden. Alternativ oder zusätzlich kann eine Einbeziehung zusätzlicher Parameter wie Druck und Temperatur zur Auswahl bzw. Berechnung des Datensatzes erfolgen, wobei die Datensätze aus Designdaten oder aus Kalibrierung gewonnen sein können, wobei die Kalibrierung am konkreten Aufbau bestimmt sein kann und typischen Werten entspricht, die an einem repräsentativen Exemplar bestimmt wurden.

Die Geometriedaten 1008b können alternativ oder zusätzlich eine Anzahl von Zeilen und/oder Spalten pro optischem Kanal, ebenfalls global oder individuell pro Kanal, aufweisen. Alternativ oder zusätzlich kann eine Angabe bezüglich der Pixelgröße von dem Prozessor 1002 eingefügt werden.

Das Element 1008d kann zusätzliche Umgebungsbedingungen, wie etwa Druck, Temperatur, Zeit oder Ort aufweisen. Derartige Informationen können durch eine Verbindung des Prozessors 1002 mit externen Sensoren durch die in der Fig. 6 dargestellten Sensordaten 1022 von dem Prozessor 1002 erhalten werden.

Das optionale Element 1008d kann Korrekturdaten für die Optik enthalten. Bezüglich der Verzeichnung H) können von dem Prozessor 1002 Designdaten bezüglich der optischen und/oder perspektivischen (Keystone'schen) Verzeichnung für den Prozessor 1002 zugänglich und von diesem verarbeitet werden. Alternativ oder zusätzlich können gemessene Daten aus einer Kalibrierung verarbeitet werden, wobei die Kalibrierung am konkreten Aufbau bestimmt sein oder typischen Werten entsprechen kann, die an einem repräsentativen Exemplar einer 3D-Multiaperturabbildungsvorrichtung bestimmt wurden.

Bezüglich der Vignettierung I) kann es sich um globale oder kanalindividuelle Designdaten oder Kalibrierdaten handeln, wie vorangehend erläutert. Alternativ oder zusätzlich können Informationen J) bezüglich defekter Pixel auf dem Bildsensor 12 angeordnet sein.

Die Nutzdaten 12, das heißt der Payload kann Bilddaten jedes Bildes aufweisen. Hierbei können fest vorgegebene Anzahlen von Zeilen und/oder Spalten berücksichtigt werden. Alternativ können beispielsweise Start/Stopp-Bits angeordnet sein. Alternativ oder zusätzlich kann eine Kennzeichnung des Moduls und/oder des Kanals erfolgen. Die Bilddaten können im Rahmen der Ausführungsbeispiele als RAW, als komprimierte oder gepackte Bilddaten, wie etwa JPEG oder dergleichen und/oder als De-mosaiktes Bild in den Nutzdaten 1012 angeordnet sein. Es können auch verschiedene Dateien mit Geometriedaten, Korrekturdaten und Payload von dem Prozessor 1002 erzeugt werden, das bedeutet, das Ausgangssignal 1006 kann in unzusammenhängender Weise erzeugt werden. Das Ausgangssignal 1006 kann auch so erzeugt werden, dass für jeden optischen Kanal eine eigene Payload-Datei von dem Prozessor 1002 ausgegeben wird. Es sei hierbei erwähnt, dass die kanalweisen oder clusterweisen Tiefeninformationen auch in Form von Geometriedaten von dem Prozessor 1002 in den Datenheader 1008 eingefügt werden können.

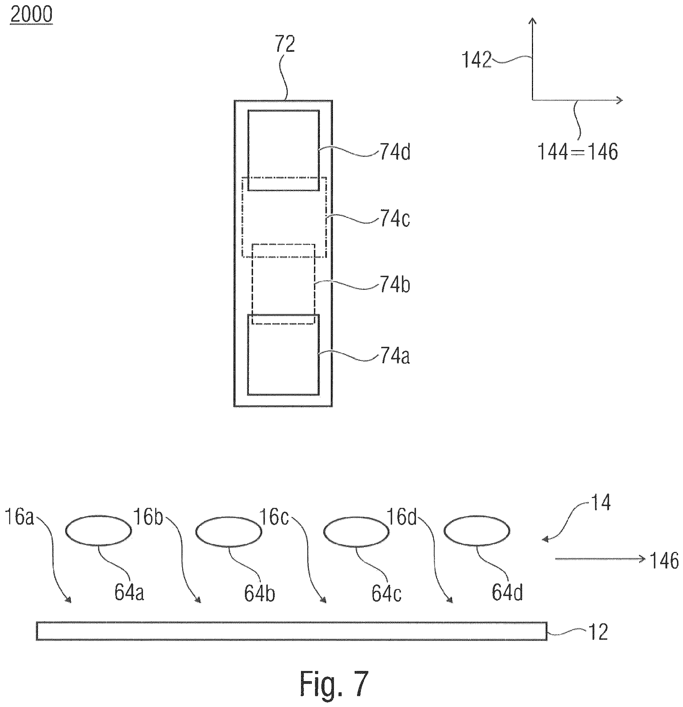

Fig. 7 zeigt eine schematische Ansicht einer Multiaperturabbildungsvorrichtung 2000 gemäß einem zweiten Aspekt hierin beschriebener Ausführungsbeispiele, die beispielsweise als Abbildungsmodul 11 in der 3D-Multiaperturabbildungsvorrichtung 1000 angeordnet sein kann. Die Multiaperturabbildungsvorrichtung 2000 ist ausgebildet, um die Teilgesichtsfelder 74a - 74d mittels der optischen Kanäle 16a - 16d, die jeweils zumindest eine Optik oder Linse 64a - 64d aufweisen, auf den Bildsensor 12 abzubilden. Das Array 14 ist beispielsweise entlang der Zeilenerstreckungsrichtung 146 angeordnet. Die optischen Kanäle 16a - 16d sind somit in einem eindimensionalen Array 14 angeordnet, das bedeutet, die optischen Kanäle 16a - 16d sind beispielsweise in einer einzigen Zeile angeordnet.

Das Gesamtgesichtsfeld 72 kann sich entlang einer ersten Bildrichtung 142 und entlang einer zweiten Bildrichtung 144 im Raum erstrecken, wobei die Richtungen 142 und 144 senkrecht zueinander stehen können. Die Teilgesichtsfelder 74a - 74d können entlang der Richtung 142 nebeneinander und einander überlappend angeordnet sein, so dass eine Ausdehnung des Bildes entlang der Richtung 144 durch die Anzahl der Pixel und/oder durch den Feldwinkel der optischen Kanäle 16a - 16d entlang der Richtung 144 und die Ausdehnung des Bildes entlang der Richtung 142 durch die Anzahl der Pixel und den Feldwinkel der optischen Kanäle 16a - 16a entlang der Richtung 142 sowie zusätzlich durch die Anzahl der Teilgesichtsfelder 74a - 74d sowie durch die Überlappungsfaktoren beeinflusst oder bestimmt ist. Das bedeutet, dass die Mehrzahl von optischen Kanälen 16a - 16d das eindimensionale Array 14 bildet, das entlang der Richtung 144 und 146 im Raum angeordnet ist, während die Teilgesichtsfelder 74a - 74d des Gesamtgesichtsfeldes ebenfalls ein eindimensionales Array bilden, das entlang der Richtung 142 senkrecht zu der Richtung 144 angeordnet ist. Die Multiaperturabbildungsvorrichtung 2000 kann somit das Merkmal aufweisen, dass eine Umsetzung zwischen einer Anordnungsrichtung des Arrays 14 und einer Anordnung der korrespondierenden Teilgesichtsfelder 74a - 74d im Raum erfolgt. Dies kann beispielsweise durch eine jeweilige Blickrichtung der optischen Kanäle 16a - 16d erfolgen. Alternativ oder zusätzlich kann die Multiaperturabbildungsvorrichtung 2000 eine nicht dargestellte Strahlumlenkeinrichtung aufweisen, die eine derartige Umlenkung vornimmt.

Beispielsweise kann die Multiaperturabbildungsvorrichtung 2000 in vorteilhafterweise in Systemen angeordnet werden, in denen im Wesentlichen Bilder erfasst werden, die eine wesentlich größere Ausdehnung entlang einer ersten Bildrichtung 142 verglichen mit einer zweiten Bildrichtung 144 aufweisen. Dies kann beispielsweise auf Kamerasysteme in Fahrzeugen zutreffen, die entlang einer horizontalen Richtung einen Fahrtweg des Fahrzeugs erfassen. Das bedeutet, die Richtung 142 kann beispielsweise eine horizontale Richtung sein. In einem derartigen Beispiel können die optischen Kanäle 16a - 16d entlang einer vertikalen Richtung in dem Fahrzeug angeordnet sein. Es versteht sich, dass die Richtungen 142 und 146 wechselseitig vertauschbar sind, das bedeutet, die Angaben horizontal und vertikal sollen keine einschränkende Wirkung entfalten.

Die Multiaperturabbildungsvorrichtung 2000 kann in zumindest zweifacher Ausführung als Modul 11a und 11b in der 3D-Multiaperturabbildungsvorrichtung 1000 angeordnet sein. Die 3D-Multiapeturvorrichtung kann abweichend von der Darstellung weniger oder mehr als 4 Kanäle aufweisen, jedoch mindestens zwei.

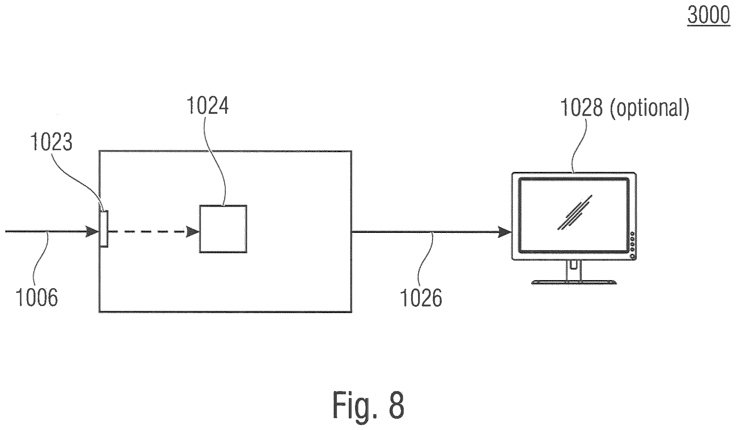

Fig. 8 zeigt ein schematisches Blockschaltbild einer Vorrichtung 3000 zum Bearbeiten des Ausgangssignals 1006. Die Vorrichtung 3000 kann eine drahtlose oder drahtgebundene Schnittstelle 1023 zum Empfangen des Ausgangssignals 1006 aufweisen. Im Nachfolgenden wird das Signal 1006 deshalb als Eingangssignal für die Vorrichtung 3000 bezeichnet. Die Vorrichtung 3000 umfasst einen Prozessor 1024 zum Bearbeiten der Nutzdaten 1012 des Eingangssignals 1006 unter Berücksichtigung der Information bezüglich des Aufbaus der 3D-Multiaperturabbildungsvorrichtung 1000 für zumindest erste Bildsensorinformationen eines Teilgesichtsfeldes $74_{11}$ - $74_{24}$ des ersten Moduls 11a und eines Teilgesichtsfeldes $74_{21}$ - $74_{24}$ des zweiten Moduls 11b. Zusätzlich kann der Prozessor 1024 ausgebildet sein, um andere oder zusätzliche Informationen des Datenheaders 1008 zu verarbeiten. Eine Funktion, die von dem Prozessor 1024 implementiert werden kann, ist beispielsweise eine nachträgliche Veränderung einer Scharfstellung variierender Bereiche in den Bilddaten, die in den Nutzdaten 1012 des Eingangssignals 1006 enthalten sind.

Die Vorrichtung 3000 kann ausgebildet sein, um ein Bildsignal 1026 auszugeben, das eine Darstellung der nachbearbeiteten Bilddaten ermöglicht. So kann das Signal 1026 beispielsweise auf einem optionalen Monitor 1028 oder Display 1028 dargestellt werden. Alternativ oder zusätzlich kann das Signal 1026 auch drahtgebunden oder drahtlos übertragen werden, etwa zu einer anderen Vorrichtung. Bei der anderen Vorrichtung kann es sich um eine weitere Verarbeitungsvorrichtung oder um ein Speicherelement handeln.

Die Vorrichtung 3000 kann ausgebildet sein, um das Ausgangssignal auch dann zu verarbeiten, wenn es angibt, dass eine Anzahl von mehr als zwei Modulen zum Erfassen des Gesamtgesichtsfeldes genutzt wurde.

Die aufgenommenen Bilddaten der 3D-Multiperturabbildungsvorrichtung 1000 können somit in einem Format gespeichert werden, dass die Berechnung dreidimensionaler Objektdaten und die nachträgliche, also nach der eigentlichen Bildaufnahme, objektabstandsabhängige Festlegung der scharfzustellenden Bereiche ermöglicht.

Das Datenformat kann aus einem Header- und einem Payload-Bereich bestehen oder diese zumindest aufweisen. Im Header-Bereich können beschreibende Daten des bildaufnehmenden Multiaperturabbildungssystems und ggf. zusätzliche Sensordaten aufgeführt sein, wohingegen im Payload-Bereich im Wesentlichen die pixelweisen Bilddaten aufgeführt sein können.

So erhaltene Multiaperturabbildungssysteme können eine lineare Kanalanordnung, d. h. einzeilig angeordnete optische Kanäle, aufweisen und eine geringe oder gar minimale Baugröße aufweisen. Die vorangehend beschriebenen Aspekte ermöglichen eine anpassbare dreidimensionale Bildaufnahme und -darstellung. Darüber hinaus kann eine nachträgliche Festlegung des Schärfetiefenbereichs erfolgen.

Nachfolgend wird Bezug genommen auf weitere vorteilhafte Ausgestaltungsformen von Multiaperturabbildungsvorrichtungen und 3D-Multiaperturabbildungsvorrichtungen, die jeweils als zusätzliche Merkmale mit den Merkmalen der 3D-Multiaperturabbildungsvorrichtung 1000 kombiniert werden können. Das bedeutet, dass die nachfolgend beschriebenen Multiaperturabbildungsvorrichtungen in der 3D-Multiaperturabbildungsvorrichtung 1000 als ein Abbildungsmodul angeordnet sein können.

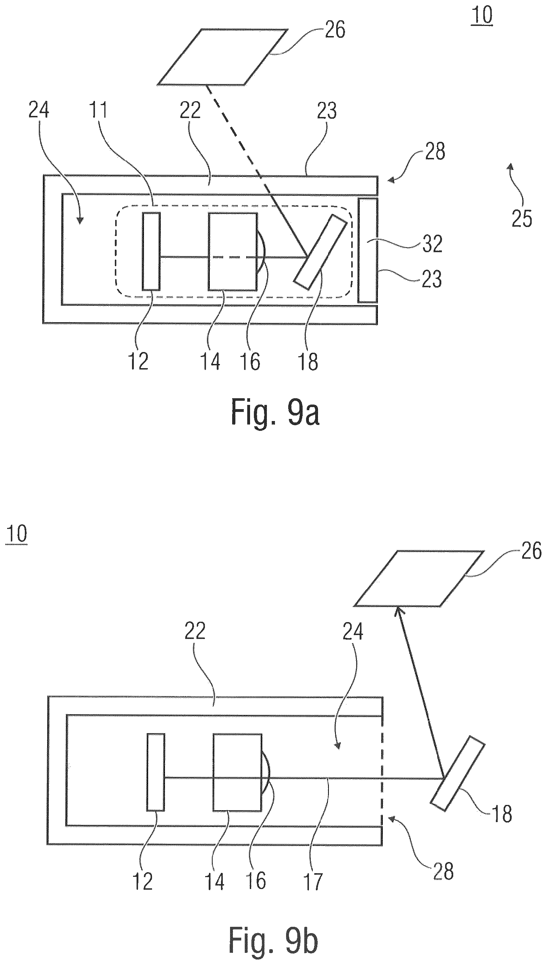

Fig. 9a zeigt eine schematische Seitenschnittansicht einer Vorrichtung 10 gemäß einem Ausführungsbeispiel in einem ersten Betriebszustand. Bei der Vorrichtung 10 kann es sich um eine mobile oder immobile Vorrichtung handeln, wie etwa ein Mobiltelefon, ein Smartphone, ein mobiler Computer, wie etwa ein Tablet-Computer und/oder eine mobile Musikabspieleinrichtung.

Die Vorrichtung 10 umfasst eine Multiaperturabbildungsvorrichtung 11, die einen Bildsensor 12, ein Array 14 von nebeneinander angeordneten optischen Kanälen 16 und eine Strahlumlenkeinrichtung 18 aufweist. Die Strahlumlenkeinrichtung 18 ist ausgebildet, um einen Strahlengang 17 der optischen Kanäle 16 umzulenken und wird später ausführlich beschrieben. Die Vorrichtung 10 umfasst ein Gehäuse 22, das Außenflächen 23 aufweist, die ein Gehäusevolumen 24 umschließen. Das bedeutet, das Gehäusevolumen 24 kann ein Innenvolumen des Gehäuses 22 und das Volumen des Gehäuses 22 umfassen. Das Gehäusevolumen beinhaltet dabei auch ein Volumen, dass durch die Gehäusewände beansprucht wird und wird somit von den Außenflächen 23 des Gehäuses umschlossen. Das Gehäuse 22 kann transparent oder opak gebildet sein und bspw. Kunststoffmaterialien und/oder Metallmaterialien umfassen. Die Strahlumlenkeinrichtung 18 weist eine erste Position innerhalb des Gehäusevolumens 24 auf. Löcher oder Durchbrüche in den Gehäuseseiten, etwa für akustische Kanäle von Mikrophonen oder für elektrische Kontakte der Vorrichtung 10 können für die Bestimmung des Gehäusevolumens 24 vernachlässigt werden. Das Gehäuse 22 und/oder in dem Gehäuse 22 angeordnete Bauteile können den Strahlengang 17 der optischen Kanäle 16 nach einer Umlenkung durch die Strahlumlenkeinrichtung 18 blockieren, so dass ein außerhalb des Gehäuses 22 angeordnetes Gesichtsfeld 26 mit der Multiaperturabbildungsvorrichtung 11 erfasst werden soll nicht oder nur eingeschränkt erfassbar ist. Bei den Bauteilen kann es sich etwa um einen Akku, Platinen, nicht transparente Bereiche des Gehäuses 22 oder dergleichen handeln. Anders ausgedrückt kann an einem Gehäuse anstelle eines bisherigen Kameraobjektivs ein anderes, ggf. nicht-optisches Bauelement angeordnet werden.

Das Gehäuse 22 kann eine Öffnung 28 aufweisen, durch die das Gehäusevolumen 24 mit einem Außenvolumen 25 des Gehäuses 22 verbunden ist. Die Öffnung 28 kann zeitweise von einer Abdeckung 32 ganz oder teilweise verschlossen sein. Der erste Betriebszustand der Vorrichtung 10 kann ein inaktiver Betriebszustand der Multiaperturabbildungsvorrichtung 11 sein, bei dem die optischen Kanäle 16 bspw. auf die Innenseite des Gehäuses 22 gelenkt werden oder nicht umgelenkt werden.

In anderen Worten wird die Bauhöhe des Aufbaus der Multiaperturabbildungsvorrichtung zumindest teilweise vom Durchmesser von Optiken der optischen Kanäle 16 (Linsen) bestimmt. In einem (ggf. optimalen) Fall ist die Ausdehnung der Spiegel (Strahlumlenkeinrichtung) in dieser Dickenrichtung gleich groß der Ausdehnung der Linsen in dieser Richtung. Dabei wird jedoch der Strahlengang des optischen Kanals 16 durch den Spiegel 18 beschnitten. Dies führt zu einer Reduzierung der Bildhelligkeit, wobei diese Reduzierung abhängig vom Feldwinkel ist. Die vorliegenden Ausführungsbeispiele lösen dies Problem, indem Teile oder aber der gesamte Multikanalkameraaufbau bewegt wird, so dass im Betriebszustand der Kamera Teile des Aufbaus über das Gehäuse z. B. eines Smartphones herausragen verglichen mit dem Zustand der Nichtnutzung der Kamera. Die Bewegung der Teile, wie z. B. die Strahlumlenkeinrichtung, kann rotativ (Ausklappen oder Aufklappen), translativ (Ausfahren) oder aus einer Mischform bestehen. Die zusätzlichen Bewegungen von Teilen bzw. des Gesamtsystems ermöglichen, ähnlich bekannter Zoom-Objektive an Kompaktkameras, eine minimale Bauform im Nichtnutzungsmodus der Kameras und eine für die Realisierung der technischen Funktion optimierte, größere Bauform im Nutzungsmodus der Kamera.

Fig. 9b zeigt eine schematische Seitenschnittansicht der Vorrichtung 10 in einem zweiten Betriebszustand. In dem zweiten Betriebszustand weist die Strahlumlenkeinrichtung 18 eine zweite Position außerhalb des Gehäusevolumens 24 auf. Dies ermöglicht, dass die Strahlumlenkeinrichtung 18 die Strahlengänge 17 der optischen Kanäle 16 außerhalb des Gehäusevolumens 24 umlenkt und das Gesichtsfeld 26 außerhalb des Gehäuses 22 von der Multiaperturabbildungsvorrichtung 11 erfassbar ist. Die Abdeckung 32 kann aus der in Figur 1a gezeigten Position wegbewegt sein, so dass die Strahlumlenkeinrichtung 18 durch die Öffnung 28 des Gehäuses 22 aus dem Gehäusevolumen 24 bewegbar ist. Die Strahlumlenkeinrichtung 18 kann translatorisch und/oder rotatorisch zwischen der ersten Position und der zweiten Position bewegt werden. Vorteilhaft ist, dass die Bauteile innerhalb des Gehäuses 22 und/oder das Gehäuse 22 den umgelenkten Strahlengang 17 der optischen Kanäle 16 nicht blockieren.

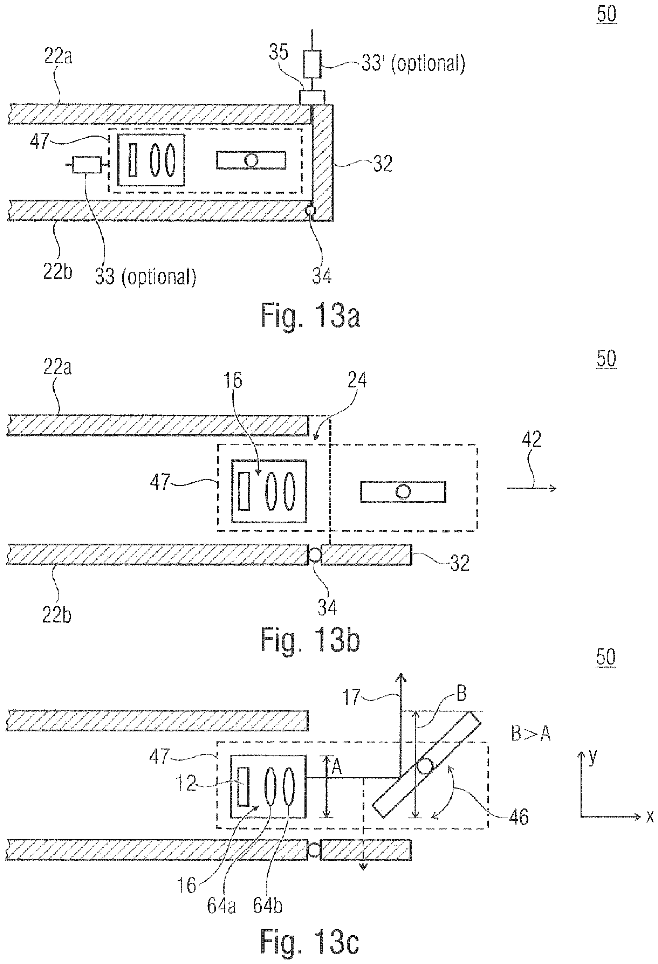

Die Multiaperturabbildungsvorrichtung 11 kann in einem Kameragehäuse angeordnet sein, das wiederum zumindest teilweise in dem Gehäuse 22 angeordnet ist. Das Kameragehäuse kann bspw. zumindest teilweise von einem Verfahrschlitten, wie er im Zusammenhang mit Fig. 13 beschrieben ist, gebildet sein. Dies unterscheidet sich von einem Konzept, bei dem eine einkanalige Kamera mittels eines Umklapp-Mechanismus in verscheide Richtungen orientiert wird, dadurch, dass vorliegend eine Rotation oder Verkippung eines Bildsensors und/oder der Abbildungsoptik vermeidbar ist.

Ein Gesamtgesichtsfeld kann mittels der Vorrichtung 10 so erfasst werden, dass die Strahlumlenkeinrichtung ausgehend von der ersten Position in die zweite Position bewegt wird, in der die Strahlumlenkeinrichtung zumindest teilweise außerhalb eines Gehäusevolumens platziert wird. Weist die Strahlumlenkeinrichtung die zweite Position auf, kann das Gesamtgesichtsfeld und mit dem Array von nebeneinander angeordneten optischen Kanälen der Multiaperturabbildungsvorrichtung, deren Strahlengänge von der Strahlumlenkeinrichtung umgelenkt werden, erfasst werden.

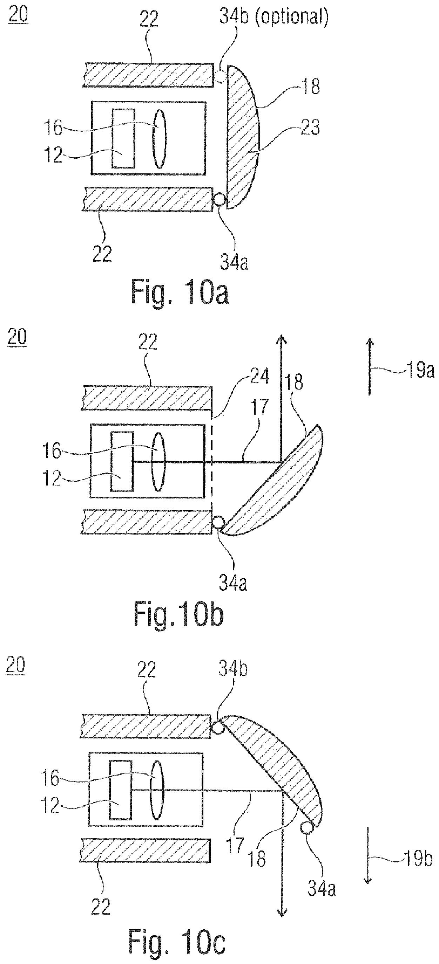

Fig. 10a zeigt eine schematische Seitenschnittansicht einer Vorrichtung 20 gemäß einem weiteren Ausführungsbeispiel in einem ersten Betriebszustand. Die Vorrichtung 20 weist die Abdeckung 23 auf, die drehbar an dem Gehäuse 22 gelagert ist, etwa über ein Verbindungselement 34a und/oder über ein optionales Verbindungselement 34b. Das Verbindungselement 34a und/oder 34b kann ausgebildet sein, um ein Verkippen und mithin eine rotatorische Bewegung zwischen der Abdeckung 23 der Strahlumlenkeinrichtung 18 gegenüber dem Gehäuse 22 zu ermöglichen und bspw. als Scharnier oder Walzenlager gebildet sein.

Die Strahlumlenkeinrichtung 18 kann eine Abdeckung des Gehäuses bilden oder ein Teil hiervon sein. Eine der strahlumlenkenden Oberflächen der Strahlumlenkeinrichtung 18 kann eine Außenkannte des Gehäuses sein. Die Strahlumlenkeinrichtung 18 weist eine erste Position auf und verschließt das Gehäuse 22 teilweise oder vollständig. Bspw. kann die Strahlumlenkeinrichtung 18 einen reflektiven Bereich zum Umlenken des Strahlengang 17 aufweisen und Kontaktbereiche aufweisen, die ausgebildet sind, um mit dem Gehäuse 22 in er ersten Position einen mechanischen Kontakt zu bilden. Vereinfacht ausgedrückt, kann die Kamera nicht oder kaum sichtbar sein, wenn sie nicht benutzt wird.

Fig. 10b zeigt eine schematische Seitenschnittansicht der Vorrichtung 20 in einem zweiten Betriebszustand. In dem zweiten Betriebszustand kann die Strahlumlenkeinrichtung 18 rotatorisch gegenüber dem Gehäuse 22 bewegt, d. h., ausgeklappt, sein, so dass das Gehäusevolumen 24 geöffnet ist. Die rotatorische Verkippung ermöglicht eine geneigte oder verkippte Orientierung der Strahlumlenkeinrichtung 18 gegenüber einem Verlauf des Strahlengangs 17 der optischen Kanäle 16 zwischen dem Bildsensor 12 und der Strahlumlenkeinrichtung 18, so dass der Strahlengang 17 an der Strahlumlenkeinrichtung 18 in eine erste Richtung 19a umgelenkt wird.

Fig. 10c zeigt eine schematische Seitenschnittansicht der Vorrichtung 20 in einer dritten Position. Die Vorrichtung 20 kann den zweiten Betriebszustand aufweisen. Verglichen mit der zweiten Position, wie sie in Fig. 10b dargestellt ist, kann die Strahlumlenkeinrichtung 18 den Strahlengang 17 der optischen Kanäle 16 in eine andere Richtung 19b umlenken, so dass ein anderes Gesichtsfeld oder ein an einem anderen Ort positioniertes Gesichtsfeld erfassbar ist. Bspw. kann es sich um eine erste Seite und eine gegenüberliegende Seite, wie etwa Vorderseite und Rückseite, Links und Rechts oder Oben und Unten der Vorrichtung 20 und/oder eines Nutzers handeln, in die das Strahlengang 17 umgelenkt wird. Die Verbindungselemente 34a und 34b können bspw. mit einer Rahmenstruktur und der Strahlumlenkeinrichtung 18 verbunden sein, so dass die Strahlumlenkeinrichtung 18 wechselseitig die zweite oder dritte Position aufweisen kann. Durch eine umschaltbare Blickrichtung der Multiaperturabbildungsvorrichtung können bisherige Lösungen insbesondere in Smartphones unter Nutzung zweier Kameras mit Blickrichtung nach vorn und hinten durch einen Aufbau ersetzt werden.

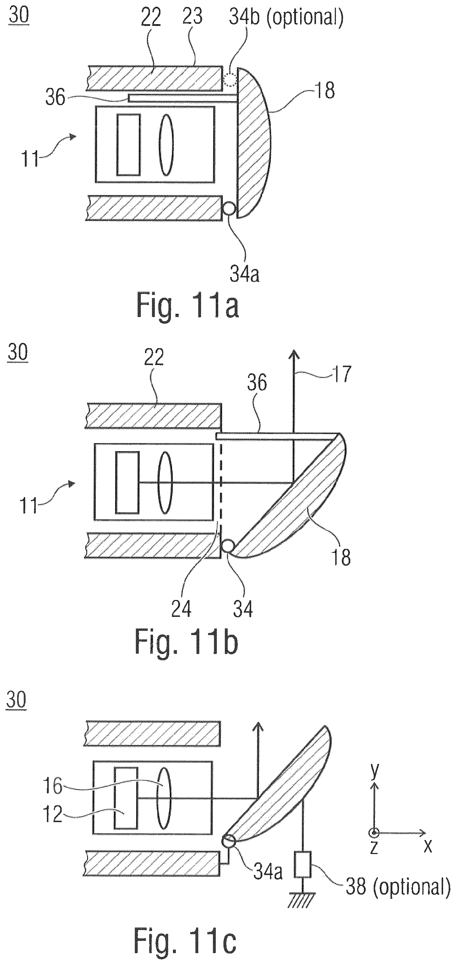

Fig. 11a zeigt eine schematische Seitenschnittansicht einer Vorrichtung 30 gemäß einem weiteren Ausführungsbeispiel in dem ersten Betriebszustand.

Verglichen mit der Vorrichtung 20, wie sie in den Figuren 2a-c beschrieben ist, weist die Vorrichtung 30 eine zumindest teilweise transparente Abdeckung 36 auf, die zwischen einer Außenkannte 23 des Gehäuses 22 und der Multiaperturabbildungsvorrichtung 11 angeordnet ist. Die zumindest teilweise transparente Abdeckung ist mit der Strahlumlenkeinrichtung 18 verbunden und ausgebildet, um sich basierend auf einer Bewegung der Strahlumlenkeinrichtung 18 zu bewegen. Die zumindest teilweise transparente Abdeckung 36 kann bspw. polymere und/oder Glasmaterialien aufweisen.

In anderen Worten können u. a. Vorrichtungen vorgesehen sein, die eine Kapselung der Optik zum Schutz vor Verschmutzung unter Möglichkeit der Änderung des gekapselten Volumens ermöglichen (bewegliche Deckgläser).

Fig. 11b zeigt eine schematische Seitenschnittansicht der Vorrichtung 30 in dem zweiten Betriebszustand. Verglichen mit der Vorrichtung 20 in Fig. 10b ist die zumindest teilweise transparente Abdeckung zumindest teilweise aus dem Gehäusevolumen 24 herausbewegt. Dies kann durch eine Rotationsbewegung der Strahlumlenkeinrichtung um das Verbindungselement 34 erfolgen. Die Strahlumlenkeinrichtung 18 ist ausgebildet, um den Strahlengang 17 der optischen Kanäle 16 so umzulenken, dass die optischen Kanäle durch die zumindest teilweise transparente Abdeckung verlaufen. Die Abdeckung 36 ist ausgebildet, um einen Eintritt von Partikeln, Schmutz und/oder Feuchtigkeit in das Gehäusevolumen 24 zu reduzieren oder zu verhindern. Die Abdeckung 36 kann dabei für die Strahlengänge 17 transparent gebildet sein und/oder teilweise opak ausgebildet sein. Bspw. kann die Abdeckung 36 für bestimmte Wellenlängenbereiche elektromagnetischer Strahlung intransparent sein. Vorteilhaft an der Abdeckung 36 ist, dass durch den reduzierten Umfang von Partikeln, Schmutz und/oder Feuchtigkeit eine lange Betriebsdauer der Vorrichtung und/oder eine dauerhaft hohe Bildqualität erhalten werden kann, da eine Verschmutzung von Optiken der optischen Kanäle gering ist.

Fig. 11c zeigt eine schematische Seitenschnittansicht der Vorrichtung 30, bei der die Strahlumlenkeinrichtung 18 mit einem optionalen Aktor 38 translatorisch entlang einer Richtung y senkrecht zu einer Richtung x des Strahlengangs 17 zwischen dem Bildsensor 12 und den optischen Kanälen 16 und senkrecht zu einer Richtung z senkrecht zu einer Zeilenerstreckungsrichtung des Arrays von optischen Kanälen 16 bewegbar ist. Die Strahlumlenkeinrichtung 18 kann auch basierend auf der Rotationsbewegung um das Verbindungselement 34 translatorisch bewegt werden, etwa über eine Führung, einen Hebel oder dergleichen. Das Aufklappen (Rotationsbewegung) kann manuell oder unter Nutzung eines Aktors erfolgen. Der optionale Aktor 38 kann an der Strahlumlenkeinrichtung 18 angeordnet sein. Alternativ kann der Aktor 38 zwischen dem Gehäuse 22 und der Strahlumlenkeinrichtung 18 angeordnet sein. Der Aktor 38 kann bspw. zwischen dem Gehäuse 22 und dem Verbindungselement 34a und/oder zwischen dem Verbindungselement 34a und der Strahlumlenkeinrichtung 18 angeordnet sein. Vorteilhaft daran ist, dass durch die translatorische Bewegung der Strahlumlenkeinrichtung entlang der x-Richtung das Gehäuse eine Abschattung des zu erfassenden Gesichtsfeldes durch das Gehäuse 22 reduzierbar ist.

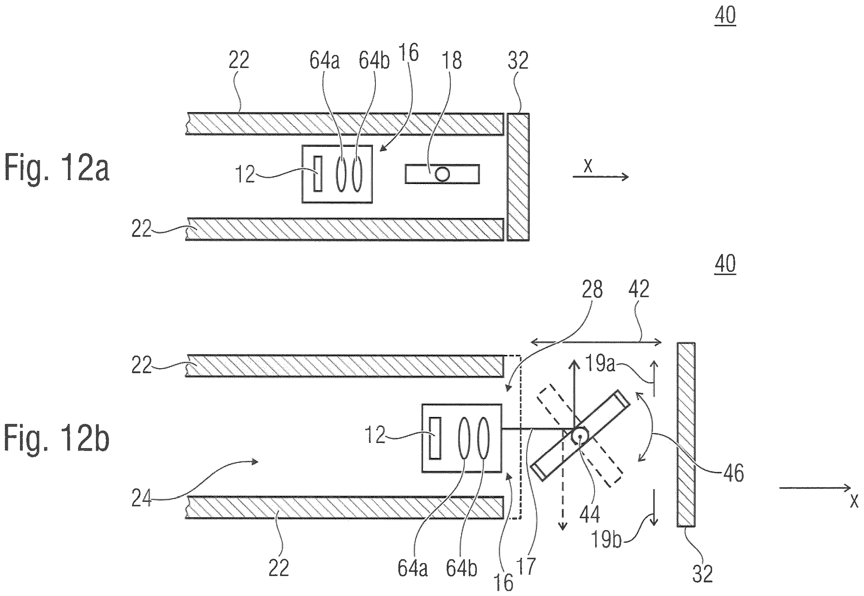

Fig. 12a zeigt eine schematische Seitenschnittansicht einer Vorrichtung 40 gemäß einem Ausführungsbeispiel in dem ersten Betriebszustand. Die Strahlumlenkeinrichtung 18 ist in der ersten Position innerhalb des Gehäusevolumens des Gehäuses 22 angeordnet und ausgebildet, um basierend auf einer translatorischen Bewegung 42 von der ersten Position in die zweite Position bewegt zu werden, die schematisch in Fig. 12b dargestellt ist. Wie in Fig. 12a dargestellt, kann das Gehäuse die Abdeckung 32 aufweisen, die das Gehäuse 22 bzw. eine Öffnung darin in dem ersten Betriebszustand verschließt. Die Strahlumlenkeinrichtung 18 kann in dem ersten Betriebszustand so orientiert sein, dass sie senkrecht zu einer Richtung x, die durch den optischen Strahlengang innerhalb des Gehäuses 22 definiert wird, eine minimale Ausdehnung aufweist.

Fig. 12b zeigt eine schematische Seitenschnittansicht der Vorrichtung 40 in dem zweiten Betriebszustand. Die Strahlumlenkeinrichtung ist basierend auf der translatorischen Bewegung 42, bspw. entlang der x-Richtung aus dem Gehäusevolumen 24 herausbewegt.

Hierfür kann die Strahlumlenkeinrichtung 18 durch die Öffnung 28 bewegt werden. Die Strahlumlenkeinrichtung 18 kann um eine Rotationsachse 44 rotatorisch bewegbar sein. Während der translatorischen Bewegung zwischen dem ersten Betriebszustand und dem zweiten Betriebszustand kann die Strahlumlenkeinrichtung 18 eine rotatorische Bewegung um die Rotationsachse 44 ausführen. Eine Winkelorientierung der Strahlumlenkeinheit kann verglichen mit dem ersten Betriebszustand aus Fig. 12a verändert sein, so dass die vom Strahlengang der Multiaperturabbildungsvorrichtung genutzte Fläche der Strahlumlenkeinrichtung verglichen mit dem ersten Betriebszustand zunimmt. Eine Rotationsbewegung 46 um die Rotationsachse 44 ermöglicht eine veränderliche Neigung der Strahlumlenkeinrichtung 18 gegenüber dem Strahlengang 17 zwischen den optischen Kanälen 16 und der Strahlumlenkeinrichtung 18 und mithin eine veränderliche Richtung in die der Strahlengang 17 der optischen Kanäle 16 abgelenkt wird. Die optischen Kanäle 16 können Optiken 64a-b aufweisen.

Zusätzlich zur Strahlumlenkeinrichtung 18 können in dem zweiten Betriebszustand Optiken 64a-b der optischen Kanäle 16 und/oder der Bildsensor 12 außerhalb des Gehäusevolumens 24 angeordnet sein. Bspw. können die Optiken 64a-b der optischen Kanäle 16 und/oder der Bildsensor 12 mit der Strahlumlenkeinrichtung 18 mitbewegt werden.

In anderen Worten umfassen Multiaperturkameras mit linearer Kanalanordnung mehrere optische Kanäle, die nebeneinander angeordnet sind, und jeweils Teile des Gesamtgesichtsfeldes übertragen. Vorteilhafterweise ist ein Spiegel vor den Abbildungslinsen angebracht, der zur Strahlumlenkung genutzt werden kann und zur Reduzierung der Bauhöhe beiträgt. In Kombination mit einem kanalweise angepassten Spiegel, etwa ein Facettenspiegel, wobei die Facetten plan oder beliebig gekrümmt oder mit einer Freiformfläche versehen sind, ist es vorteilhafterweise möglich, dass die Abbildungsoptiken der optischen Kanäle im Wesentlichen identisch aufgebaut sind, wohingegen die Blickrichtung der Kanäle durch die einzelnen Facetten des Spiegel-Arrays vorgegeben sind. Eine Oberfläche der Strahlumlenkeinrichtung ist zumindest an den optischen Kanälen zugeordneten reflektierenden Facetten verspiegelt. Es ist auch möglich, dass die Abbildungsoptiken der Kanäle unterschiedlich ausgeprägt sind, so dass sich unterschiedliche Blickrichtungen durch den Winkel der Spiegelfacette und der Gestaltung des jeweiligen optischen Kanals ergeben. Es ist weiterhin möglich, dass mehrere Kanäle denselben Bereich der Strahlumlenkeinrichtung nutzen und damit die Anzahl von Facetten kleiner als die der Kanäle ist. Der Ablenkspiegel kann dabei drehbar gelagert sein, wobei die Drehachse bspw. parallel zur Erstreckungsrichtung der Kanäle verläuft. Der Ablenkspiegel kann beidseitig reflektiv sein, wobei metallische oder dielektrische Schichten(folgen) genutzt werden können. Die Drehung des Spiegels kann analog oder bistabil oder mehrfach stabil erfolgen. Basierend auf der Dreh- oder Rotationsbewegung kann die Strahlumlenkeinrichtung zwischen zumindest einer ersten Stellung und einer zweiten Stellung bewegbar sein, wobei die Strahlengänge in jeder Stellung in voneinander verschiedene Richtungen umgelenkt werden. Ähnlich, wie es für die Stellungen der Strahlumlenkeinrichtung 18 in den Fig. 10a-c beschrieben ist kann die Strahlumlenkeinrichtung auch um eine Rotationsachse bewegt werden. Zusätzlich zur translatorischen Bewegung der Gehäuseabdeckung 32 und der Strahlumlenkeinrichtung 18 können Teile bzw. alle zusätzlichen Komponenten der Multiaperturabbildungsvorrichtung translativ in dieselbe Richtung mitbewegt werden, wobei gleiche oder auch unterschiedliche Stellwege möglich sind.

Fig. 13a zeigt eine schematische Seitenschnittansicht einer Vorrichtung 50 bei der die Abdeckung 32 rotatorisch bewegbar über ein Bewegungselement 34 an einer Gehäuseseite 22b des Gehäuses 22 angeordnet ist. Die Strahlumlenkeinrichtung 18 kann mit einem Verfahrschlitten 47 mechanisch verbunden sein. Der Verfahrschlitten 47 kann als mechanische Transporteinrichtung zum Bewegen zumindest der Strahlumlenkeinrichtung 18 verstanden werden. Die Vorrichtung 50 kann einen Aktor 33 umfassen, der ausgebildet ist, um den Verfahrschlitten 47 translatorisch zu bewegen. Der Aktor kann einen beliebigen Antrieb, etwa einen Schrittmotor, einen piezoelektrischen Antrieb oder einen Tauchspulenantrieb umfassen. Alternativ oder zusätzlich zu dem Aktor 33 kann die Vorrichtung 50 einen Aktor 33' umfassen, der ausgebildet ist, um eine mechanische Verriegelung 35 zu lösen, die die Abdeckung 32 und das Gehäuse an zumindest einer Gehäuseseite 22a verriegelt. Bspw. kann die Strahlumlenkeinrichtung oder der Verfahrschlitten 47 mittels einer Federkraft aus dem Gehäuse fahrbar sein, wenn die Verriegelung 33' gelöst wird. Das bedeutet, die Verriegelung 35 kann ausgebildet sein, um die Strahlumlenkeinrichtung 18 in der ersten Position zu halten. Der Verfahrschlitten 47 kann auch in Vorrichtung 40 angeordnet sein. Das bedeutet, der Verfahrschlitten 47 ist auch bei einer translatorischen Bewegung der Abdeckung 32 einsetzbar.

Fig. 13b zeigt eine schematische Seitenschnittansicht der Vorrichtung 50 bei der der Verfahrschlitten 47 entlang der translatorischen Bewegungsrichtung 42 bewegt ist, so dass die Strahlumlenkeinrichtung 18 aus dem Gehäusevolumen 24 herausbewegt ist. Der Bildsensor 12 und/oder Optiken der optischen Kanäle 16 können ebenfalls mit dem Verfahrschlitten 47 mechanisch verbunden sein und mit der Strahlumlenkeinrichtung 18 in einem gleichen Umfang mitbewegbar sein. Alternativ können der Bildsensor 12 und/oder die Optiken der optischen Kanäle 16 in einem geringeren Umfang als die Strahlumlenkeinrichtung 18 bewegbar sein, so dass ein Abstand zwischen dem Bildsensor 12, den Optiken und/oder Strahlumlenkeinrichtung 18 während eines Herausfahrens vergrößert wird. Alternativ oder zusätzlich können der Bildsensor 12 und/oder die Optiken der optischen Kanäle ortsfest bzgl. des Gehäuses angeordnet sein, so dass lediglich die Strahlumlenkeinrichtung 18 mittels des Verfahrschlittens 47 bewegt wird. Ein sich vergrö-βernder Abstand zwischen dem Bildsensor 12, den Optiken und/oder Strahlumlenkeinrichtung 18 während eines Herausfahrens ermöglicht einen geringen Abstand der Komponenten in dem ersten Betriebszustand, so dass die Multiaperturabbildungsvorrichtung mit einem geringen Bauraumbedarf in dem Gehäuse 22 untergebracht werden kann.

Fig. 13c zeigt eine schematische Seitenschnittansicht der Vorrichtung 50 in dem zweiten Betriebszustand. Die Strahlumlenkeinrichtung kann rotatorisch gelagert sein, um die Rotationsbewegung 46 auszuführen, wie es bspw. für die Vorrichtung 40 beschrieben ist. Wie es im Zusammenhang mit Fig. 12b beschrieben ist, kann die Winkelorientierung der Strahlumlenkeinrichtung 18 verglichen mit dem ersten Betriebszustand aus Fig. 13a oder dem Zustand in Fig. 13b verändert sein, so dass die vom Strahlengang der Multiaperturabbildungsvorrichtung genutzte Fläche der Strahlumlenkeinheit verglichen mit dem ersten Betriebszustand zunimmt. Eine den optischen Kanälen 16 bzw. dem Bildsensor 12 zugewandte Seite der Strahlumlenkeinrichtung 18 kann eine Abmessung B senkrecht zu der translatorischen Bewegungsrichtung 42, bspw. entlang der y-Richtung aufweisen, die größer ist, als eine Abmessung A des Bildsensors 12 bzw. der optischen Kanäle 16 entlang dieser Richtung. Die Abmessung B ist bspw. senkrecht zu einer Zeilenerstreckungsrichtung des Arrays und parallel zu einer Oberfläche eines Bildsensors, auf den die optischen Kanäle treffen. Dies kann dazu führen, dass ein hohes Maß an Licht von der Stahlumlenkeinrichtung 18 umlenkbar ist und eine Helligkeit eines zu erfassenden Bildes hoch ist. In der in Fig. 13a gezeigten Stellung ist die Ausdehnung oder Abmessung B kleiner als in der in Fig. 13c gezeigten Stellung oder einer Stellung, in der die Strahlumlenkeinrichtung 18 den Strahlengang in eine andere Blickrichtung lenkt.

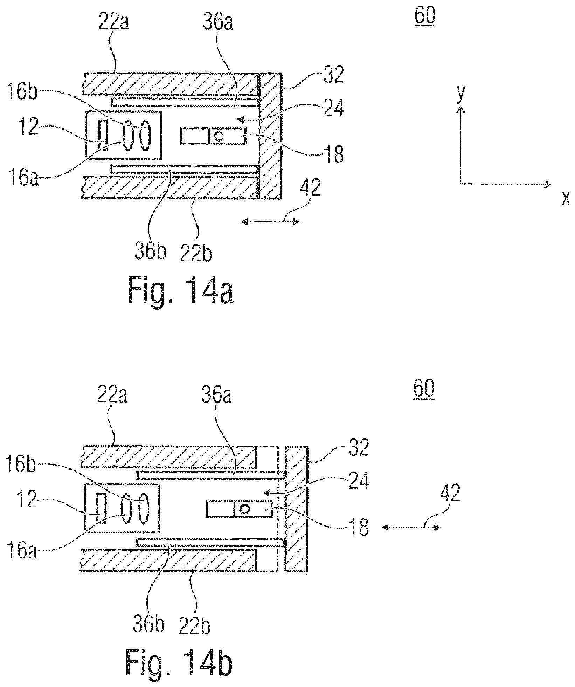

Fig. 14a zeigt eine schematische Seitenschnittansicht einer Vorrichtung 60 gemäß einem Ausführungsbeispiel in dem ersten Betriebszustand. Die Strahlumlenkeinrichtung 18 weist die erste Position auf. Verglichen mit der Vorrichtung 40 und der Vorrichtung, wie sie in den Figuren 4a und 4b beschrieben ist, weist die Vorrichtung 50 zumindest teilweise transparente Abdeckungen 36a und 36b auf, die mit der Abdeckung 32 verbunden sind und mit dieser entlang der translatorischen Bewegungsrichtung 42 bewegbar sind. Die zumindest teilweise transparenten Abdeckungen 36a und 36b können jeweils an voneinander verschiedenen Seiten der Strahlumlenkeinrichtung 18 zwischen selbiger und dem Gehäuse 22 angeordnet sein. in dem ersten Betriebszustand können die Abdeckungen 36a und 36b teilweise oder vollständig innerhalb des Gehäusevolumens 24 angeordnet sein. Die Abdeckungen 36a und 36b können bspw. an dem in den Fig. 13a-c dargestellten Verfahrschlitten 47 angeordnet oder transparente Bereiche des Verfahrschlittens 47 sein.

Fig. 14b zeigt eine schematische Seitenschnittansicht der Vorrichtung 60, bei der die Strahlumlenkeinrichtung 18 eine Zwischenposition zwischen der ersten Position und der zweiten Position aufweist. Bspw. kann die Zwischenposition der Strahlumlenkeinrichtung während eines Einfahrens oder eines Ausfahrens der Strahlumlenkeinrichtung 18 in das Gehäusevolumen 24 hinein bzw. aus dem Gehäusevolumen 24 heraus erhalten werden. Die Strahlumlenkeinrichtung 18 ist teilweise aus dem Gehäusevolumen 24 herausbewegt.

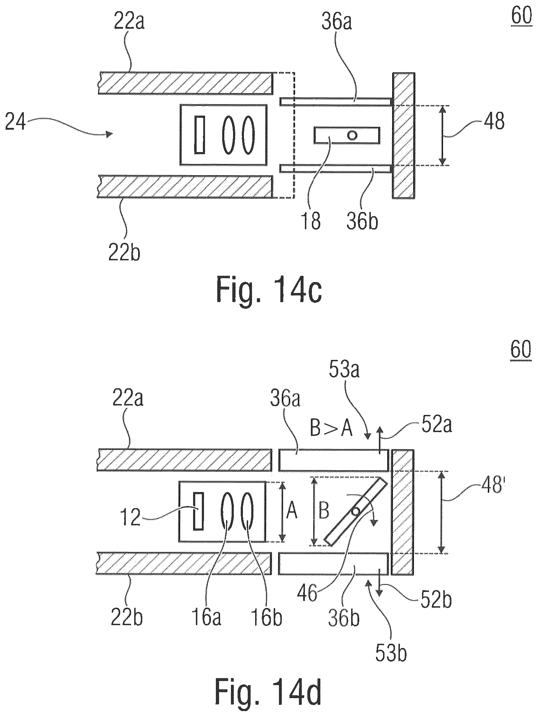

Fig. 14c zeigt eine schematische Seitenschnittansicht der Vorrichtung 60, bei der die Strahlumlenkeinrichtung 18 die zweite Position aufweist, d. h., die Strahlumlenkeinrichtung 18 ist bspw. vollständig aus dem Gehäusevolumen 24 herausgefahren. Die zumindest teilweise transparenten Abdeckungen 36a und 36b weisen einen Abstand 48 zueinander auf, der kleiner ist als ein vergleichbarer Abstand zwischen Seitenflächen des Gehäuses 22a und 22b.

Fig. 14d zeigt eine schematische Seitenschnittansicht der Vorrichtung 60, bei der ein Abstand der zumindest teilweise transparenten Abdeckungen 36a und 36b verglichen mit den Fig. 14a-c vergrößert ist. Die zumindest teilweise transparenten Abdeckungen 36a und/oder 36b können entlang einer von der jeweils anderen zumindest teilweise transparenten Abdeckung 36a bzw. 36b abgewandte translatorische Bewegungsrichtung 52a bzw. 52b, bspw. entlang einer positiven oder negativen y-Richtung bewegbar sein. Der in den Fig. 14a-c dargestellte Zustand der zumindest teilweise transparenten Abdeckungen 36a und 36b kann als eingefahrener oder zusammengeklappter Zustand verstanden werden. Der in Fig. 14d dargestellte Zustand kann als ausgefahrener oder ausgeklappter Zustand verstanden werden, bei dem ein Abstand 48' zwischen den zumindest teilweise transparenten Abdeckungen 36a und 36b gegenüber dem Abstand 48 verändert, bspw. vergrößert ist. Der Abstand 48' kann bspw. größer oder gleich sein, als der Abstand zwischen den vergleichbaren Seiten des Gehäuses 22. Die Strahlumlenkeinrichtung 18 ist ausgebildet, um die Strahlengänge der optischen Kanäle so umzulenken, dass sie durch die zumindest teilweise transparenten Abdeckungen 36a und/oder 36b verlaufen. Wie es im Zusammenhang mit Fig. 12b, Fig. 13a und Fig. 13b beschrieben ist, kann die Winkelorientierung der Strahlumlenkeinrichtung 18 verglichen mit dem ersten Betriebszustand aus Fig. 14a oder dem Zustand in Fig. 14b oder 14c verändert sein, so dass die vom Strahlengang der Multiaperturabbildungsvorrichtung genutzte Fläche der Strahlumlenkeinheit verglichen mit dem ersten Betriebszustand zunimmt. Der vergrößerte Abstand 48' kann alternativ oder zusätzlich einen erhöhten Umfang der rotatorischen Bewegung 46 ermöglichen. Mit der rotatorischen Bewegung 46 kann die Strahlumlenkeinrichtung 18 zwischen zumindest einer ersten und einer weiteren Stellung umschaltbar sein, wobei jede Stellung einer Blickrichtung der Multiaperturabbildungsvorrichtung zugeordnet werden kann. Die Drehung des Spiegels kann analog oder bistabil oder mehrfach stabil erfolgen. Die rotatorische Bewegung 46 zur Veränderung einer Blickrichtung der Multiaperturabbildungsvorrichtung kann mit einer Rotationsbewegung der Strahlumlenkeinrichtung 18 zur optischen Bildstabilisierung kombiniert werden, was im Zusammenhang mit Fig. 9 beschrieben ist. Die Abdeckungen 36a und/oder 36b können die anderen Komponenten der Multiaperturabbildungsvorrichtung kapseln.

Die gegenüberliegend angeordneten Abdeckungen 36a und/oder 36b bzw. transparente Bereiche hiervon können eine schaltbare Blende aufweisen, so dass die schaltbare Blende bspw. ober- und/oder unterhalb oder entlang einer beliebigen anderen Richtung der Strahlumlenkeinrichtung eingebracht ist. Die Blende kann nach Betriebszustand und Blickrichtung der Kamera geschaltet werden. Bspw. kann jeweils eine nicht genutzt Blickrichtung der Multiaperturabbildungsvorrichtung von der Blende zumindest teilweise verschlossen werden, um einen Eintritt von Falschlicht zu reduzieren. Die Blenden können z. B. mechanisch bewegt oder elektrochrom sein. Die von der Blende beeinflussten Bereiche können zusätzlich mit einer schaltbaren Blende ausgestattet sein, die den optischen Aufbau für den Fall der Nichtbenutzung abdeckt. Die Blende kann elektrisch steuerbar sein und eine elektro-chrome Schicht(folge) umfassen. Die Blende kann ein mechanisch bewegtes Teil umfassen. Die Bewegung kann unter Nutzung pneumatischer, hydraulischer, piezoelektrischer Aktoren, DC-Motoren, Schrittmotoren, thermischer Aktoren, elektrostatischer Aktoren, elektrostriktiver und/oder magnetostriktiver Aktoren oder Antriebe erfolgen. In einem Zustand der Multiaperturabbildungsvorrichtung, bei der die Blickrichtung eine Blende durchdringt kann die Blende so geschaltet werden, um die Strahlengänge der optischen Kanäle durchzulassen. Das bedeutet, dass die Multiaperturabbildungsvorrichtung einen ersten Betriebszustand und einen zweiten Betriebszustand aufweisen kann. Die Strahlumlenkeinrichtung kann den Strahlengang der optischen Kanäle in dem ersten Betriebszustand so umlenken, dass dieser durch einen ersten transparenten Bereich der Abdeckung 36a verläuft. In dem zweiten Betriebszustand kann der Strahlengang der optischen Kanäle so umgelenkt werden, dass dieser durch einen zweiten transparenten Bereich der Abdeckung 36b verläuft. Eine erste Blende 53a kann ausgebildet sein, um den ersten transparenten Bereich in dem zweiten Betriebszustand optisch zumindest teilweise zu verschließen. Eine zweite Blende 53b kann ausgebildet sein, um den zweiten transparenten Bereich in dem ersten Betriebszustand optisch zeitweise zumindest teilweise zu verschließen. So kann ein Eintritt von Falschlicht aus einer Richtung, die nicht die aktuelle Blickrichtung der Multiaperturabbildungsvorrichtung ist, reduziert werden, was sich vorteilhaft auf die Bildqualität auswirkt. Die erste und/oder zweite Blende 53a-b kann für zumindest einen, für zumindest zwei oder für alle der optischen Kanäle wirksam sein. Bspw. können zumindest einer, zumindest zwei oder alle optischen Kanäle der Multiaperturabbildungsvorrichtung durch die erste Blende verlaufen, wenn der Strahlengang der optischen Kanäle durch den ersten transparenten Bereich gelenkt wird und durch die zweite Blende verlaufen, wenn der Strahlengang der optischen Kanäle durch den zweiten transparenten Bereich gelenkt wird.

Es wird darauf hingewiesen, dass es möglich ist, einen Mechanismus zum Ausklappen der Strahlumlenkeinrichtung gemäß den Figuren 2 und 3 mit einem Mechanismus zum translatorischen Bewegen zu kombinieren, d. h., es können Mischformen auftreten. Ein Aufklappen des Gehäuses und/oder ein Ausfahren der Strahlumlenkeinrichtung kann derart erfolgen, dass ggf. das Abbildungsmodul, d. h., die optischen Kanäle, Optiken davon und/oder der Bildsensor aus dem Gehäusevolumen bewegt werden. Eine Winkeländerung der Strahlumlenkeinrichtung kann ermöglichen, dass eine Ausdehnung der Multiaperturabbildungsvorrichtung in Dickenrichtung groß ist und/oder dass die Strahlumlenkeinrichtung den Strahlengang ungehindert nach "vorn" und "hinten" umlenken kann. Deckgläser, etwa die Abdeckungen 36 können auch bzgl. der ausgeklappten bzw. ausgefahrenen Elemente fixiert sein. Die Deckgläser können beliebige, ebene oder nicht-ebene Flächen aufweisen.

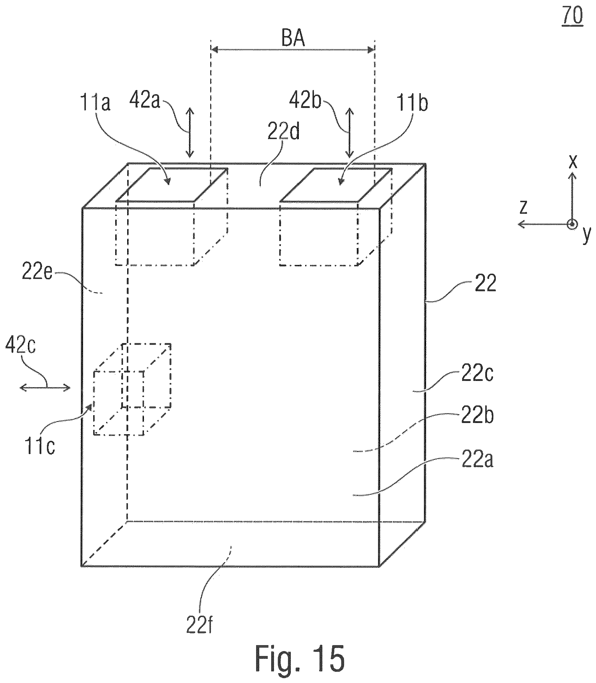

Fig. 15 zeigt eine schematische perspektivische Ansicht einer Vorrichtung 70 gemäß einem Ausführungsbeispiel, die drei Multiaperturabbildungsvorrichtungen 11a-c aufweist. Die Vorrichtung 70 kann den Prozessor 1002 aufweisen, wie es für die Multiaperturabbildungsvorrichtung 1000 beschrieben ist. Die Multiaperturabbildungsvorrichtungen 11a-c können translatorisch entlang einer jeweiligen translatorischen Bewegungsrichtung 42a-c bewegbar sein. Die Multiaperturabbildungsvorrichtungen 11a-c können in Nebenseiten 22c-f des Gehäuses 22 angeordnet sein. Das Gehäuse kann flach gebildet sein, das bedeutet, eine erste Ausdehnung des Gehäuses 22 entlang einer ersten Gehäuserichtung, bspw. eine x-Richtung, und eine zweite Ausdehnung des Gehäuses 22 entlang einer zweiten Gehäuserichtung, bspw. eine z-Richtung, kann mindestens eine dreifache Abmessung, mindestens eine fünffache oder mindestens eine siebenfache Abmessung verglichen mit einer dritten Ausdehnung des Gehäuses 22 entlang einer dritten Gehäuserichtung, etwa die y-Richtung, aufweisen. Eine Hauptseite 22a und/oder 22b des Gehäuses 22 kann die erste und die zweite Abmessung aufweisen und bspw. parallel zu einer x/z-Ebene im Raum angeordnet sein. Die Nebenseiten 22c-f können die Hauptseiten 22a und 22b verbinden bzw. dazwischen angeordnet sein.

Die Multiaperturabbildungsvorrichtungen 11a und 11b können in oder an derselben Seite 22d in dem Gehäuse 22 angeordnet sein und bspw. einen Basisabstand BA zueinander aufweisen, wie zum Beispiel zum Zweck der Stereoskopie. Mehr als zwei Module wären ebenfalls denkbar. So kann das Gesamtgesichtsfeld bspw. stereoskopisch oder höher durch eine Verwendung der Multiaperturabbildungsvorrichtung 11c und zumindest einer weiteren Multiaperturabbildungsvorrichtung 11a und/oder 11b erfasst werden. Die Multiaperturabbildungsvorrichtungen 11a, 11b und/oder 11c können einzeln bewegbar sein. Alternativ können zwei oder mehrere die Module auch gemeinsam als Gesamtsystem bewegbar sein.

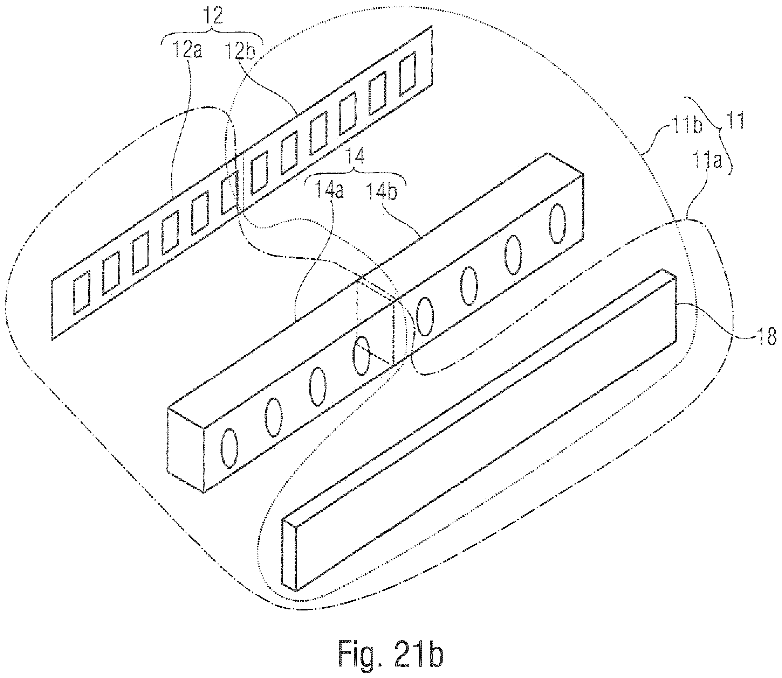

Wie es nachfolgend ausführlich beschrieben ist, kann die Vorrichtung 70 ausgebildet sein, um ein Gesamtgesichtsfeld zumindest stereoskopisch zu erfassen. Das Gesamtgesichtsfeld ist bspw. an einer der Hauptseite 22a oder 22b angeordnet, kann jedoch auch an einer Nebenseite 22c-f angeordnet sein. Beispielsweise können die Multiaperturabbildungsvorrichtungen 11a-c jeweils das Gesamtgesichtsfeld aufnehmen. Obwohl die Multiaperturabbildungsvorrichtungen 11a-c räumlich voneinander beabstandet angeordnet dargestellt sind, können die Multiaperturabbildungsvorrichtungen 11a, 11b und/oder 11c auch räumlich benachbart oder kombiniert angeordnet sein. Bspw. können die ggf. einzeilig gebildeten Arrays der Abbildungsvorrichtungen 11a und 11b nebeneinander oder parallel zu einander angeordnet sein, wie es bspw. im Zusammenhang mit Fig. 21b beschrieben ist. Die Arrays können Zeilen zueinander bilden, wobei jede Multiaperturabbildungsvorrichtung 11a und 11b ein einzeiliges Array aufweist. Die Abbildungsvorrichtungen 11a und 11b können eine gemeinsame Strahlumlenkeinrichtung und/oder einen gemeinsamen Träger von Optiken der optischen Kanäle und/oder ein gemeinsamen Bildsensor aufweisen.

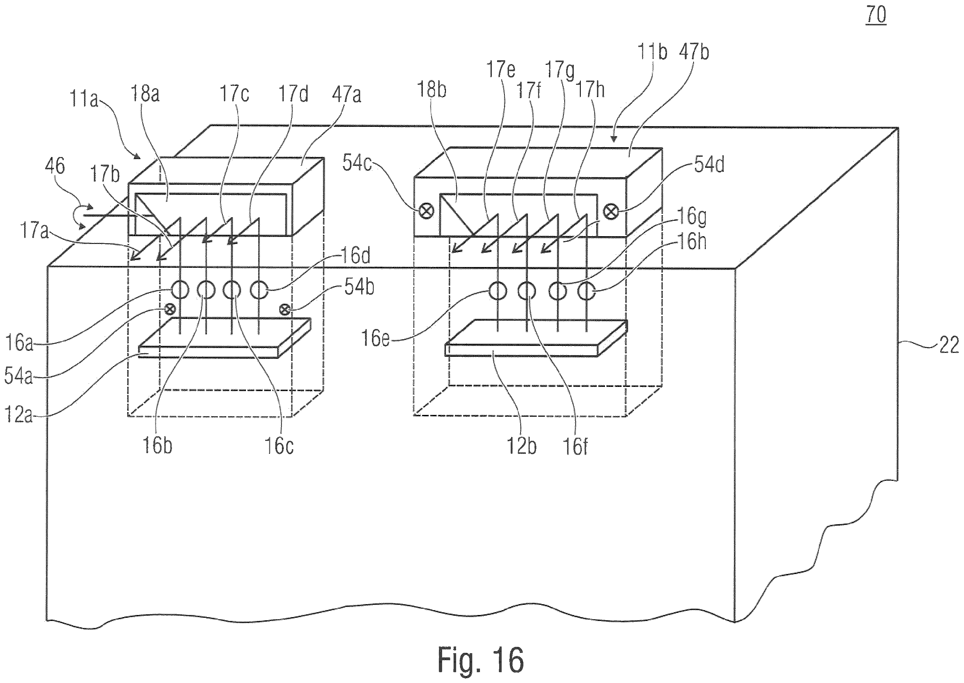

Fig. 16 zeigt eine vergrößerte perspektivische Ansicht eines Ausschnitts der Vorrichtung 70 und der Multiaperturabbildungsvorrichtungen 11a und 11b. Die Vorrichtung 70 weist den zweiten Betriebszustand auf. Bspw. ragt die Multiaperturabbildungsvorrichtung 11 a und/oder 11b über die ursprüngliche Gehäuseseite heraus. Die Strahlumlenkeinrichtungen 18a und 18b sind basierend auf den translatorischen Bewegungsrichtungen 42a und 42b zumindest teilweise außerhalb des Gehäusevolumens bewegt. Alternativ kann in dem zweiten Betriebszustand auch lediglich ein Teil der Strahlumlenkeinrichtungen der Multiaperturabbildungsvorrichtungen 11a-c aus dem Gehäusevolumen des Gehäuses 22 bewegt sein.

Die Multiaperturabbildungsvorrichtungen 11a-b weisen bspw. jeweils vier optische Kanäle 16a-d und 16e-h auf. Die Strahlumlenkeinrichtungen 18a und 18b sind jeweils ausgebildet, um die Strahlengänge 17a-d bzw. 17e-h der optischen Kanäle 16a-d bzw. 17e-h umzulenken. Wie später ausführlich beschrieben ist, können andere Multiaperturabbildungsvorrichtungen eine voneinander verschiedene Anzahl von optischen Kanälen aufweisen. Die Multiaperturabbildungsvorrichtungen 11a-b können eine gleiche oder eine voneinander verschiedene Anzahl optischer Kanäle aufweisen.

Die Multiaperturabbildungsvorrichtungen 11a und 11b weisen jeweils Beleuchtungseinrichtungen 54a und 54b bzw. 54c und 54d auf. Die Beleuchtungseinrichtungen 54a-d sind ausgebildet, um das zu erfassende Gesamtgesichtsfeld zumindest teilweise zu beleuchten und können bspw. jeweils ausgebildet sein, um ein Zentrum des zu erfassenden Gesamtgesichtsfeldes (Objektbereich) zu beleuchten. Gemäß einem Ausführungsbeispiel kann zumindest eine der Beleuchtungseinrichtungen 54a oder 54b bzw. 54c oder 54d so angeordnet sein, dass sie entlang einer mittleren Blickrichtung der optischen Kanäle 16a-d bzw. 16e-h das Gesamtgesichtsfeld beleuchtet. Das Gesamtgesichtsfeld kann voneinander verschiedene Teilgesichtsfelder aufweisen, die jeweils von zumindest einem optischen Kanal 16a-d bzw. 16e-h erfasst werden. Eine mittlere Blickrichtung von optischen Kanälen 16a-d oder 16e-h kann bspw. ein geometrisches Mittel der Blickrichtungen oder ein Medianwert der Blickrichtungen sein.

Die Beleuchtungseinrichtungen 54a-b und 54c-d können als Blitzlicht der jeweiligen Multiaperturabbildungsvorrichtung 11a oder 11b betrieben werden und eine beliebige Lichtquelle umfassen. Vorteilhaft kann die Lichtquelle bspw. als lichtemittierende Diode (LED) ausgeführt sein, da diese einen geringen Bauraumbedarf und einen geringen Energiebedarf aufweisen. Gemäß weiteren Ausführungsbeispielen kann eine Multiaperturabbildungsvorrichtung keine, eine oder mehr als zwei Beleuchtungseinrichtungen 54a-d umfassen, wobei die Anzahl von Beleuchtungseinrichtungen 54a-d einer Multiaperturabbildungsvorrichtung von anderen Multiaperturabbildungsvorrichtungen einer Vorrichtung verschieden oder gleich sein kann. Zumindest eine der Beleuchtungseinrichtungen 54a-d kann ausgebildet ist, um mehrere Gesichtsfelder auszuleuchten. So kann bspw. Licht wahlweise in eine oder in mehrere Richtungen von der Beleuchtungseinrichtung ausgesendet werden. Die Beleuchtungseinrichtung kann entlang zumindest zweier Blickrichtungen der Multiaperturabbildungsvorrichtung Licht aussenden. Hierfür kann die Beleuchtungseinrichtung zumindest zwei Lichtquellen umfassen. Die Lichtquellen können Licht in gegenüberliegenden Seiten der Vorrichtung aussenden. Bspw. kann jeweils eine Lichtquelle auf einer Ober- und einer Unterseite, einer Vorder- und einer Rückseite und/oder einer linken und rechten Seite des Verfahrschlittens 47 angebracht sein, wobei jeweils nur die Lichtquelle(n) der Seite genutzt werden, die dem aufzunehmenden Gesichtsfeld entsprechend der gewählten Orientierung und damit des Betriebszustands der Strahlumlenkeinrichtung 18 gegenüberliegt und in dessen Richtung Licht aussendet. Die oben erwähnten Vorder-, Rück-, Ober- und Unterseite sowie die Bezeichnungen links oder rechts sollen lediglich der Verdeutlichung dienen und nicht einschränkend verstanden werden, da sie mit jeder Orientierung im Raum wechselseitig vertauschbar sind. Das bedeutet bspw., dass Lichtquellen 54i auf Vorder- und Rückseite des Verfahrschlittens 47b angeordnet sein können und je nach Stellung der Strahlumlenkeinrichtung 18b entsprechende Lichtquellen genutzt werden können. Die anderen, gegenüberliegenden Lichtquellen können ungenutzt bleiben.

Beispielsweise sind die Beleuchtungseinrichtungen 54a und 54b zwischen der Strahlumlenkeinrichtung 18a und dem Bildsensor 12a der Multiaperturabbildungsvorrichtung 11a angeordnet. Die Strahlumlenkeinrichtung 18 kann ausgebildet sein, um eine von der Beleuchtungseinrichtung 54a und/oder 54b ausgesendete Beleuchtungsstrahlung, etwa ein Blitzlicht, umzulenken. Die Beleuchtungseinrichtungen 54a-b können in dem ersten Betriebszustand und in dem zweiten Betriebszustand der Vorrichtung 70 innerhalb des Gehäusevolumens angeordnet sein. Die Beleuchtungsstrahlung kann zumindest teilweise Teil der Strahlengänge 17a-d sein. Wie es bspw. für die Multiaperturabbildungsvorrichtung 11b dargestellt ist, kann eine Beleuchtungseinrichtung 54c und/oder 54d lateral neben der Strahlumlenkeinrichtung an dem Verfahrschlitten 47b angeordnet sein. Die Beleuchtungseinrichtungen 54c und 54d können mit der translatorischen Bewegung 42b in das Gehäuse 22 oder aus dem Gehäuse 22 bewegt werden. Obwohl die Beleuchtungseinrichtung im Zusammenhang mit der Vorrichtung 70 beschrieben sind, können auch andere hierin beschriebene Vorrichtungen oder Multiaperturabbildungsvorrichtungen eine Beleuchtungseinrichtung aufweisen.

Die Beleuchtungseinrichtungen 54c und 54d können mit dem Verfahrschlitten 47a mechanisch verbunden sein und damit im ersten Betriebszustand innerhalb des Volumens 24 angeordnet und mithin für einen Nutzer nicht sichtbar angeordnet sein. Die Beleuchtungseinrichtungen 54a und 54b können alternativ und/oder zusätzlich stationär in dem Gehäuse 22 angeordnet sein. Eine Bewegung des Verfahrschlittens 47b kann eine Bewegung der Beleuchtungseinrichtungen 54c und 54d bewirken.

Zusammen mit der Strahlumlenkeinrichtung 18a bzw. 18b können auch Optiken 16a-d oder 16e-f und ggf. der Bildsensor 12a bzw. 12b durch die Bewegung des Verfahrschlittens 47a bzw. 47b aus dem Gehäusevolumen bewegt werden.

In anderen Worten können auf den bewegten Teilen LEDs für die Realisierung einer zusätzlichen Beleuchtung (Blitzlicht) angebracht sein. Die LEDs können dabei so angebracht sein, dass sie in die mittlere Richtung der Kanäle strahlen bzw. können die Strahlumlenkeinrichtungen weitere Bereiche vorhalten, die zur Umlenkung der Strahlung genutzt wird.

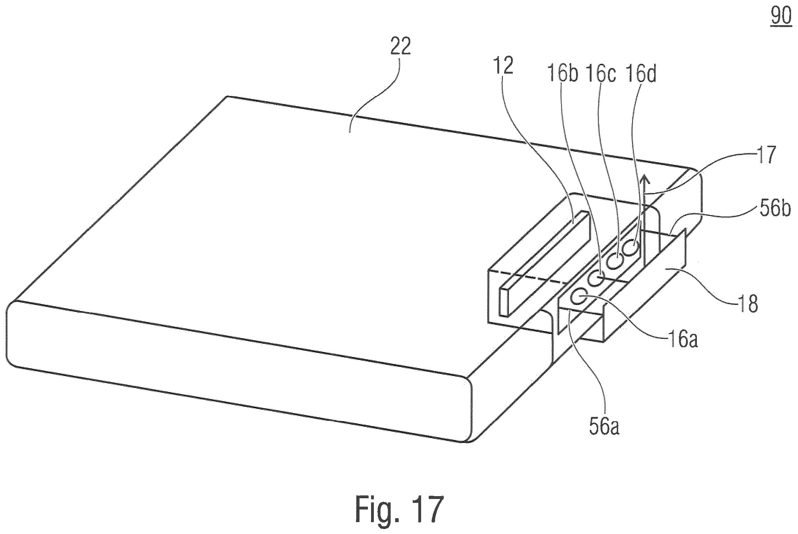

Fig. 17 zeigt eine schematische perspektivische Ansicht einer Vorrichtung 90 gemäß einem Ausführungsbeispiel, die den zweiten Betriebszustand aufweist. Die Strahlumlenkeinrichtung 18 kann mittels Befestigungselementen 56a und 56b mit der Multiaperturabbildungsvorrichtung verbunden sein. Die Befestigungselemente 56a und 56b können Teil eines Verfahrschlittens sein.

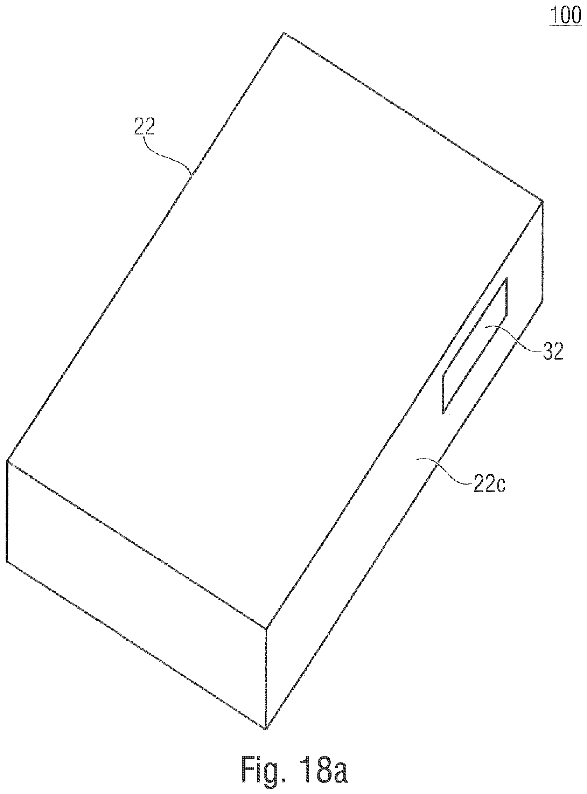

Fig. 18a zeigt eine schematische perspektivische Ansicht einer Vorrichtung 100 gemäß einem Ausführungsbeispiel in dem ersten Betriebszustand. Die Abdeckung 32 kann mit einer Gehäusehauptseite und/oder eine Gehäusenebenseite, bspw. die Gehäusenebenseite 22c eine Ebene bilden. Zwischen der Abdeckung 32 und der Gehäuseseite 22c kann kein Spalt oder lediglich eine kleiner Spalt, etwa kleiner oder gleich 1 mm, kleiner oder gleich 0,5 mm oder kleiner oder gleich 0,1 mm angeordnet sein, so dass ein Übergang zwischen der Abdeckung 32 und der Gehäuseseite 22c nicht oder kaum wahrnehmbar ist. Vereinfacht ausgedrückt kann die Abdeckung 32 nicht sichtbar sein.

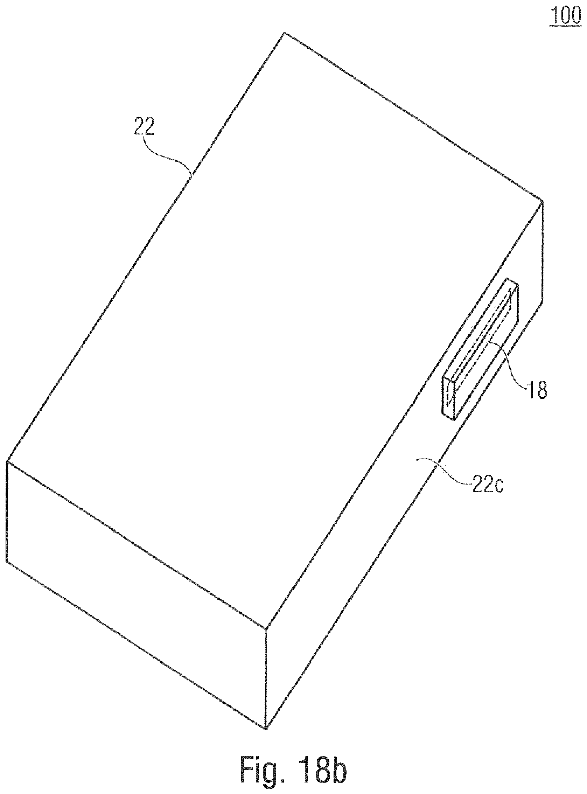

Fig. 18b zeigt eine schematische Ansicht der Vorrichtung 100 in dem zweiten Betriebszustand. Die Strahlumlenkeinrichtung 18 weist die zweite Position außerhalb des Gehäusevolumens auf. Von außen betrachtet kann die ausgefahrene Multiaperturabbildungsvorrichtung vom ruhendem Gehäuserahmen allseitig umschlossen sein und/oder ein Erscheinungsbild wie eine Taste aufweisen. Bspw. kann die Vorrichtung 100 ausgebildet sein, um bei einem mechanischen Druck auf die Abdeckung 32 gemäß Fig. 18a eine mechanische Verriegelung zu lösen, so dass die Strahlumlenkeinrichtung aus dem Gehäuse 22 fahrbar ist, etwa basierend auf einer Federkraft. Der mechanische Druck kann bspw. durch einen Aktor und/oder durch einen Benutzer erzeugt werden, etwa durch einen Fingerdruck. Von der zweiten Position kann die Strahlumlenkeinrichtung mittels des Aktors oder mittels des mechanischen Drucks wieder in die erste Position bewegbar sein und dort eine Verriegelung betätigen. Der Aktor kann bspw. der Aktor 33 oder 33' sein. In anderen Worten kann die Bewegung auch manuell erfolgen, so dass der Nutzer die Teile bzw.

das Gesamtsystem mit eigener Kraft ein- oder ausfährt bzw. ein- oder ausklappt. Die Bewegung kann insbesondere eine Kombination aus manueller Betätigung und Wirkung von Federkraft sein. So klappt bzw. schiebt der Nutzer manuell Teile bzw. das Gesamtsystem zum Ausschalten der Kamera ins Gehäuse des Gerätes, wie z. B. eines Smartphones ein, spannt dabei eine Feder und ein Verriegelungsmechanismus hält diese Stellung bei. Beim Einschalten der Kamera, z. B. mittels geeigneter Software am Smartphone, wird der schaltbare Verriegelungsmechanismus durch einen geeigneten steuerbaren Mechanismus, wie ein Elektrorelais, gelöst und die Federkraft der Feder bewirkt das Ausfahren bzw. Ausklappen von den Teilen der Kamera bzw. des Gesamtsystems. Des Weiteren kann die Abdeckung, die einen Teil des Gehäuses bildet, der ausfahrbare und/oder kippbare Teil und/oder ein weiterer hieran ansetzender Mechanismus so ausgeformt sein, dass ein (Finger-)Druck auf diese Abdeckung die Arretierung löst, die Teile oder auch das Gesamtsystem herausfahren bzw. -klappen und ggf. die Bildaufnahmesoftware auf dem Gerät startet. Die mitbewegte Abdeckung, die an den Seitenflächen einen Teil des Gehäuses bilden kann, kann vom ruhenden Gehäuse von außen sichtbar allseitig umschlossen sein oder die Seitenflächen über die gesamte Höhe (=Dickenrichtung des Gehäuse) unterbrechen.

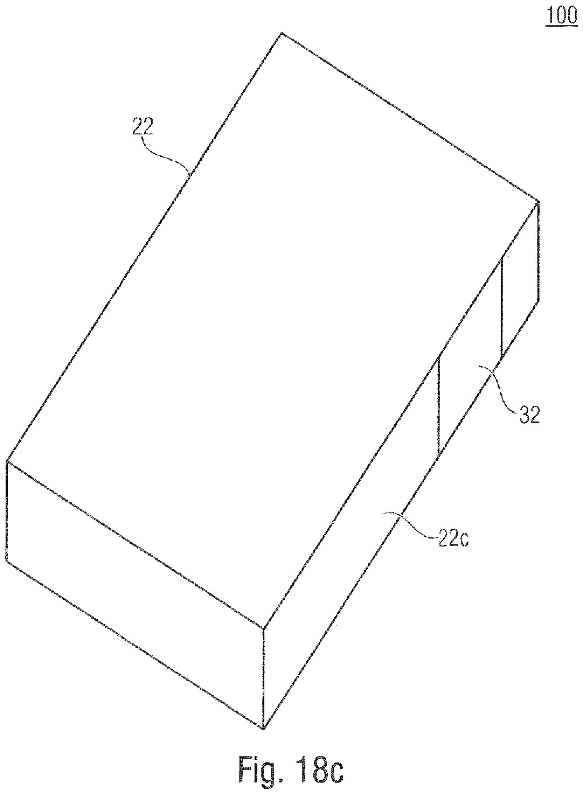

Fig. 18c zeigt eine schematische Darstellung einer Alternative zu Fig. 18a, bei der die Abdeckung 32 so gebildet ist, dass zwischen Hauptseiten des Gehäuses 22 in der Nebenseite 22c ein durchgehender Spalt gebildet ist. Dies ermöglicht, dass lediglich zwei anstelle von vier in Fig. 18a dargestellten Spalten in dem Gehäuse 22 wahrnehmbar sind. Die ausfahrbare oder ausklappbare Abdeckung 32 und/oder weitere Abdeckungen können als Teil(e) des Gehäuses 22 an einer oder mehreren Randseiten des flachen Gehäuses gebildet sein.

Nachfolgend wird Bezug genommen auf einige mögliche Ausführungsformen der Multiaperturabbildungsvorrichtung, wie sie gemäß Ausführungsbeispielen einsetzbar ist.

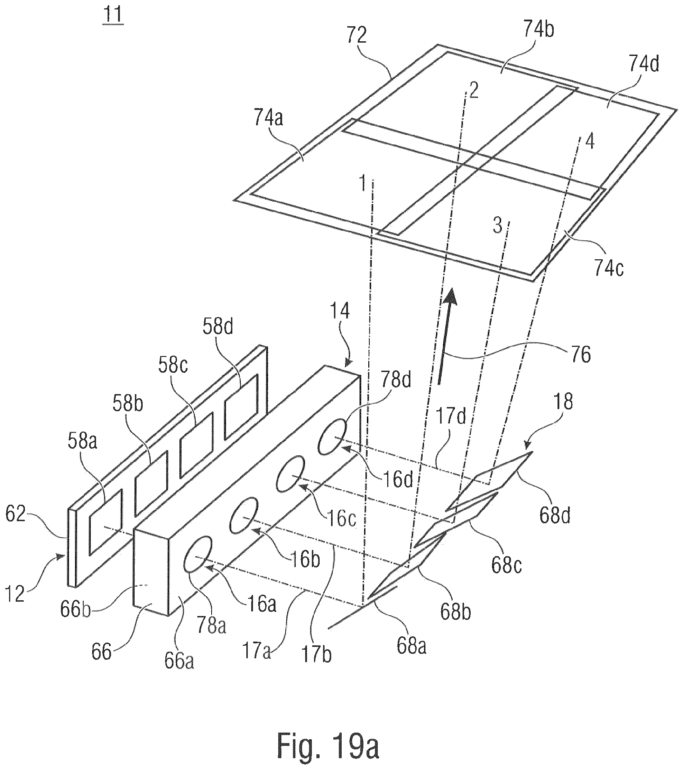

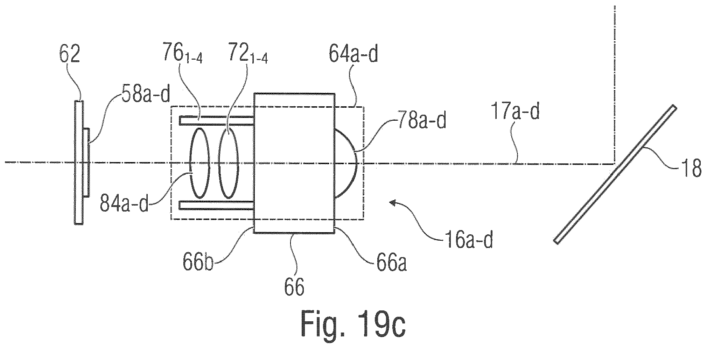

Fig. 19a-c zeigen eine Multiaperturabbildungsvorrichtung 11 gemäß einem Ausführungsbeispiel der vorliegenden Anmeldung. Die Multiaperturabbildungsvorrichtung 11 von Fig. 19a-c umfasst ein einzeiliges Array 14 von nebeneinander angeordneten optischen Kanälen 16a-d. Jeder optische Kanal 16a-d umfasst eine Optik 64a-d zur Abbildung eines jeweiligen Teilgesichtsfeldes 74a-d eines Gesamtgesichtsfeldes 72 der Vorrichtung 11 auf einen jeweils zugeordneten Bildsensorbereich 58a-d eines Bildsensors 12. Die Bildsensorbereiche 58a-d können beispielsweise jeweils aus einem Chip gebildet sein, der ein entsprechendes Pixelarray umfasst, wobei die Chips wie in den Fig. 19a-c angedeutet, auf einem gemeinsamen Substrat bzw. einer gemeinsamen Platine 62 montiert sein können. Alternativ wäre es natürlich auch möglich, dass die Bildsensorbereiche 58a-d jeweils aus einem Teil eines gemeinsamen Pixelarrays, das sich kontinuierlich über die Bildsensorbereiche 58a-d erstreckt, gebildet sind, wobei das gemeinsame Pixelarray beispielsweise auf einem einzelnen Chip gebildet ist. Beispielsweise werden dann lediglich die Pixelwerte des gemeinsamen Pixelarrays in den Bildsensorbereichen 58a-d ausgelesen. Verschiedene Mischungen dieser Alternativen sind natürlich ebenfalls möglich, wie z. B. das Vorhandensein eines Chips für zwei oder mehr Kanäle und eines weiteren Chips für wiederum andere Kanäle oder dergleichen. In dem Fall mehrerer Chips des Bildsensors 12 können diese beispielsweise auf einer oder mehreren Platinen montiert sein, wie z. B. alle gemeinsam oder gruppenweise oder dergleichen.

Bei dem Ausführungsbeispiel von Fig. 19a-c sind vier optischen Kanäle 16a-d einzeilig nebeneinander in Zeilenerstreckungsrichtung des Arrays 14 angeordnet, aber die Zahl vier ist lediglich exemplarisch und könnte auch jede andere Zahl größer Eins annehmen. Darüber hinaus kann das Array 14 auch weitere Zeilen aufweisen, die sich entlang der Zeilenerstreckungsrichtung erstrecken.

Optische Achsen bzw. die Strahlengänge 17a-d der optischen Kanäle 16a-d verlaufen zwischen den Bildsensorbereichen 58a-d und den Optiken 64a-d parallel zueinander. Dazu sind die Bildsensorbereiche 58a-d beispielsweise in einer gemeinsamen Ebene angeordnet und ebenso die optischen Zentren der Optiken 64a-d. Beide Ebenen sind parallel zueinander, d. h. parallel zu der gemeinsamen Ebene der Bildsensorbereiche 58a-d. Zudem fallen bei einer Projektion senkrecht auf die Ebene der Bildsensorbereiche 58a-d optische Zentren der Optiken 64a-d mit Zentren der Bildsensorbereiche 58a-d zusammen. In anderen Worten ausgedrückt sind in diesen parallelen Ebenen die Optiken 64a-d einerseits und die Bildsensorbereiche 58a-d mit gleichem Wiederholabstand in Zeilenerstreckungsrichtung angeordnet.

Ein bildseitiger Abstand zwischen Bildsensorbereichen 58a-d und den zugehörigen Optiken 64a-d ist so eingestellt, dass die Abbildungen auf die Bildsensorbereiche 58a-d auf einen gewünschten Objektabstand eingestellt sind. Der Abstand liegt beispielsweise in einem Bereich gleich oder größer der Brennweite der Optiken 64a-d oder zum Beispiel in einem Bereich zwischen einem Einfachen und einem Zweifachen der Brennweite der Optiken 64a-d, beides inklusive. Der bildseitige Abstand entlang der optischen Achse 17a-d zwischen Bildsensorbereich 58a-d und Optik 64a-d kann auch einstellbar sein, wie z. B. manuell durch einen Benutzer oder automatisch über eine Autofokussteuerung.

Ohne zusätzliche Maßnahmen überlappten sich die Teilgesichtsfelder 74a-d der optischen Kanäle 16a-d im Wesentlichen vollständig aufgrund der Parallelität der Strahlengänge bzw. optischen Achsen 17a-d. Zur Abdeckung eines größeren Gesamtgesichtsfeldes 72 und damit sich die Teilgesichtsfelder 74a-d lediglich räumlich teilweise überlappen, ist die Strahlumlenkeinrichtung 18 vorgesehen. Die Strahlumlenkeinrichtung 18 lenkt die Strahlengänge 17a-d bzw. optischen Achsen mit einer kanalindividuellen Abweichung in eine Gesamtgesichtsfeldrichtung 76 um. Die Gesamtgesichtsfeldrichtung 76 verläuft beispielsweise parallel zu einer Ebene, die senkrecht zur Zeilenerstreckungsrichtung des Arrays 14 und parallel zu dem Verlauf der optischen Achsen 17a-d vor bzw. ohne Strahlumlenkung ist. Beispielsweise geht die Gesamtgesichtsfeldrichtung 76 aus den optischen Achsen 17a-d durch Drehung um die Zeilenerstreckungsrichtung um einen Winkel hervor, der > 0° und < 180° ist und beispielsweise zwischen 80 und 100° liegt und beispielsweise 90° betragen kann. Das Gesamtgesichtsfeld der Vorrichtung 11, das der Gesamtabdeckung der Teilgesichtsfelder 74a-d entspricht, liegt also nicht in Richtung einer Verlängerung der Hintereinanderschaltung des Bildsensors 12 und des Arrays 14 in Richtung der optischen Achsen 17a-d, sondern durch die Strahlumlenkung befindet sich das Gesamtgesichtsfeld seitlich zu Bildsensor 12 und Array 14 in einer Richtung, in der die Bauhöhe der Vorrichtung 11 gemessen wird, d. h. die laterale Richtung senkrecht zur Zeilenerstreckungsrichtung. Zusätzlich aber lenkt die Strahlumlenkeinrichtung 18 jeden Strahlengang bzw. den Strahlengang jedes optischen Kanals 16a-d mit einer kanalindividuellen Abweichung von der soeben erwähnten zu der Richtung 76 führenden Umlenkung ab. Dazu umfasst die Strahlumlenkeinrichtung 18 für jeden Kanal 16a-d eine reflektierende Facette 68a-d. Diese sind gegenseitig leicht geneigt. Die gegenseitige Verkippung der Facetten 68a-d ist derart gewählt, dass bei Strahlumlenkung durch die Strahlumlenkeinrichtung 18 die Teilgesichtsfelder 74a-d mit einer leichten Divergenz versehen werden, derart, dass sich die Teilgesichtsfelder 74a-d lediglich teilweise überlappen. Dabei kann, wie es exemplarisch in Fig. 19a angedeutet ist, die individuelle Umlenkung auch derart gestaltet sein, dass die Teilgesichtsfelder 74a-d das Gesamtgesichtsfeld 72 zweidimensional abdecken, d. h. im Gesamtgesichtsfeld 72 zweidimensional verteilt angeordnet sind.

Es sei darauf hingewiesen, dass viele der bisher beschriebenen Details zur Vorrichtung 11 lediglich exemplarisch gewählt wurden. Das betraf beispielsweise schon die zuvor erwähnte Anzahl von optischen Kanälen. Die Strahlumlenkeinrichtung 18 kann ebenfalls anders gebildet sein als dies bisher beschrieben wurde. Beispielsweise wirkt die Strahlumlenkeinrichtung 18 nicht notwendigerweise reflektiv. Sie kann also auch anders ausgeführt sein als in Form eines Facettenspiegels, wie z. B. in Form transparenter Prismenkeile. In diesem Fall könnte beispielsweise die mittlere Strahlumlenkung 0° betragen, d. h. die Richtung 76 könnte beispielsweise parallel zu den Strahlengängen 17a-d noch vor oder ohne Strahlumlenkung sein bzw. in anderen Worten ausgedrückt könnte die Vorrichtung 11 trotz Strahlumlenkeinrichtung 18 weiterhin "geradeaus schauen". Die kanalindividuellen Umlenken durch die Strahlumlenkeinrichtung 18 würden wieder dazu führen, dass sich die Teilgesichtsfelder 74a-d lediglich geringfügig gegenseitig überlappen, wie z. B. paarweise mit einem Überlapp < 10 % bezogen auf die Raumwinkelbereiche der Teilgesichtsfelder 74a-d.

Auch könnten die Strahlengänge bzw. optischen Achsen von der beschrieben Parallelität abweichen und dennoch könnte die Parallelität der Strahlengänge der optischen Kanäle aber immer noch so ausgeprägt sein, dass sich die Teilgesichtsfelder, die durch die einzelnen Kanäle 16a-N abgedeckt bzw. auf die jeweiligen Bildsensorbereiche 58a-d abgebildet werden, ohne weitere Maßnahmen, wie nämlich die Strahlumlenkung, größtenteils überlappen würden, so dass, um ein größeres Gesamtgesichtsfeld durch die Multiaperturabbildungsvorrichtung 11 abzudecken, die Strahlumlenkeinrichtung 18 die Strahlengänge so mit einer zusätzlichen Divergenz versieht, dass sich die Teilgesichtsfelder von N optischen Kanälen 16a-N weniger gegenseitig überlappen. Die Strahlumlenkeinrichtung 18 sorgt beispielsweise dafür, dass das Gesamtgesichtsfeld einen Öffnungswinkel aufweist, der größer ist als 1,5-mal dem Öffnungswinkel der einzelnen Teilgesichtsfelder der optischen Kanäle 16a-N. Mit einer Art Vorab-Divergenz der Strahlengänge 17a-d wäre es auch möglich, dass sich beispielsweise nicht alle Facettenneigungen unterscheiden, sondern dass manche Gruppen von Kanälen beispielsweise die Facetten mit gleicher Neigung besitzen. Letztere können dann einstückig bzw. kontinuierlich ineinander übergehend gebildet werden, quasi als eine Facette, die dieser Gruppe von in Zeilenerstreckungsrichtung benachbarten Kanälen zugeordnet ist. Die Divergenz der optischen Achsen dieser Kanäle könnte dann von der Divergenz dieser optischen Achsen stammen, wie sie durch lateralen Versatz zwischen optischen Zentren der Optiken und Bildsensorbereichen der Kanäle oder Prismenstrukturen oder dezentrierten Linsenausschnitten erzielt wird. Die Vorab-Divergenz könnte sich beispielsweise auf eine Ebene beschränken. Die optischen Achsen könnten beispielsweise vor bzw. ohne Strahlumlenkung in einer gemeinsamen Ebene verlaufen, aber in dieser divergent, und die Facetten bewirken lediglich nur noch eine zusätzliche Divergenz in der anderen Transversalebene, d. h. sie sind alle parallel zur Zeilenerstreckungsrichtung und gegeneinander nur noch unterschiedlich zur vorerwähnten gemeinsamen Ebene der optischen Achsen geneigt, wobei hier wiederum mehrere Facetten gleichen Neigung besitzen können bzw. einer Gruppe von Kanälen gemeinsam zugeordnet sein könnten, deren optischen Achsen sich beispielsweise bereits in der vorerwähnten gemeinsamen Ebene der optischen Achsen paarweise vor bzw. ohne Strahlumlenkung unterscheiden.

Unter Weglassung der Strahlumlenkeinrichtung oder Ausbildung der Strahlumlenkeinrichtung als planer Spiegel oder dergleichen könnte auch die gesamte Divergenz durch den lateralen Versatz zwischen optischen Zentren der Optiken einerseits und Zentren der Bildsensorbereiche andererseits oder durch Prismenstrukturen oder dezentrierte Linsenausschnitte bewerkstelligt werden.

Die erwähnte möglicher Weise vorliegende Vorab-Divergenz kann beispielsweise erzielt werden, indem die optischen Zentren der Optiken auf einer Geraden entlang der Zeilenerstreckungsrichtung liegen, während die Zentren der Bildsensorbereiche von der Projektion der optischen Zentren entlang der Normalen der Ebene der Bildsensorbereiche auf Punkte auf einer Geraden in der Bildsensorebene abweichend angeordnet sind, wie z. B. an Punkten, die von den Punkten auf vorerwähnter Gerade in der Bildsensorebene kanalindividuell entlang der Zeilenerstreckungsrichtung und/oder entlang der Richtung senkrecht zur sowohl der Zeilenerstreckungsrichtung als auch der Bildsensornormalen abweichen. Alternativ kann Vorab-Divergenz erzielt werden, indem die Zentren der Bildsensoren auf einer Geraden entlang der Zeilenerstreckungsrichtung liegen, während die Zentren der Optiken von der Projektion der optischen Zentren der Bildsensoren entlang der Normalen der Ebene der optischen Zentren der Optiken auf Punkte auf einer Geraden in der Optikzentrenebene abweichend angeordnet sind, wie z. B. an Punkten, die von den Punkten auf vorerwähnter Gerade in der Optikzentrenebene kanalindividuell entlang der Zeilenerstreckungsrichtung und/oder entlang der Richtung senkrecht zur sowohl der Zeilenerstreckungsrichtung als auch der Normalen der Optikzentrenebene abweichen. Es wird bevorzugt, wenn vorerwähnte kanalindividuelle Abweichung von der jeweiligen Projektion lediglich in Zeilenerstreckungsrichtung verläuft, also die optischen Achsen sich lediglich in einer gemeinsamen Ebene befinden mit einer Vorabdivergenz versehen werden. Sowohl optische Zentren als auch Bildsensorbereichszentren liegen dann jeweils auf einer Geraden parallel zur Zeilenerstreckungsrichtung, aber mit unterschiedlichen Zwischenabständen. Ein lateraler Versatz zwischen Linsen und Bildsensoren in senkrechter lateraler Richtung zur Zeilenerstreckungsrichtung führte demgegenüber zu einer Vergrößerung der Bauhöhe. Ein rein In-Ebene-Versatz in Zeilenerstreckungsrichtung ändert die Bauhöhe nicht, aber es resultieren ggf. weniger Facetten und/oder die Facetten weisen nur eine Kippung in einer Winkelorientierung auf, was den Aufbau vereinfacht.

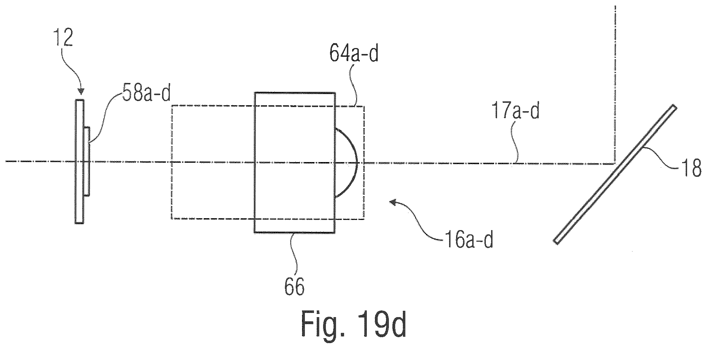

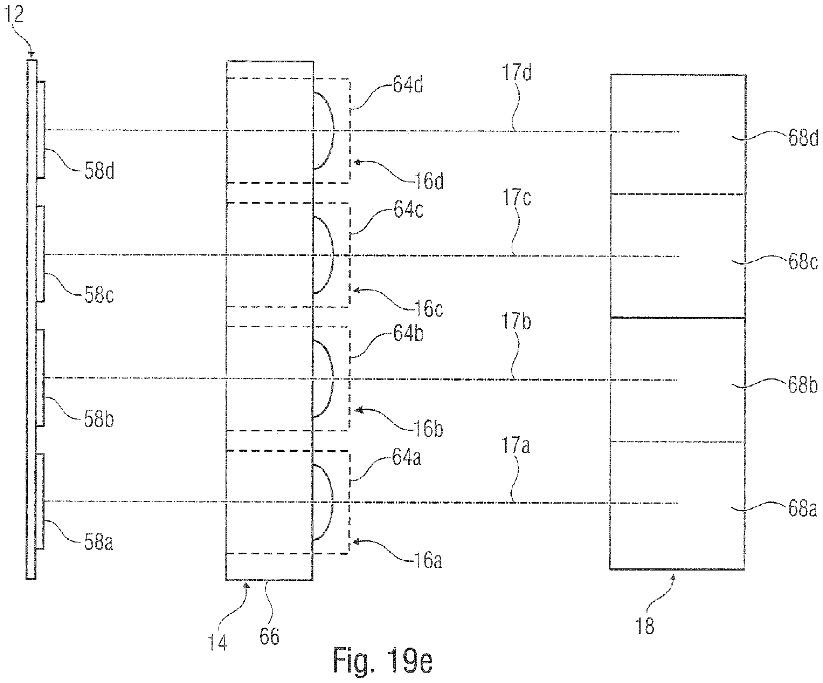

Das ist in Fig. 19d und 19e exemplarischen für den Fall der auf einem gemeinsamen Träger gehaltenen Optiken veranschaulicht, bei denen die benachbarten Kanäle 16a und 16b einerseits und die benachbarten Kanäle 16c und 16d andererseits in der gemeinsamen Ebene verlaufende, jeweils gegeneinander schielende, also mit einer Vorab-Divergenz versehene, optische Achsen 17a und 17b bzw. 17c und 17d aufweisen. Die Facetten 68a und 68b können durch eine Facette gebildet werden und die Facetten 68c und 68d können durch eine andere Facette gebildet werden, wie es durch gestrichelte Linien zwischen den jeweiligen Paaren von Facetten gezeigt ist, und die einzigen zwei Facetten sind lediglich in einer Richtung geneigt und beide parallel zur Zeilenerstreckungsrichtung. Ebenfalls ist es möglich dass einzelne Facetten lediglich eine Verkippung in einer Raumrichtung aufweisen.

Ferner könnte es vorgesehen sein, dass manche optische Kanäle dem gleichen Teilgesichtsfeld zugeordnet sind, wie z. B. zum Zwecke der Superresolution bzw. zur Erhöhung der Auflösung, mit welcher das entsprechende Teilgesichtsfeld durch diese Kanäle abgetastet wird. Die optischen Kanäle innerhalb einer solchen Gruppe verliefen dann beispielsweise vor Strahlumlenkung parallel und würden durch eine Facette auf ein Teilgesichtsfeld umgelenkt werden. Vorteilhafterweise lägen Pixelbilder des Bildsensors eines Kanals einer Gruppe in Zwischenpositionen zwischen Bildern der Pixel des Bildsensors eines anderen Kanals dieser Gruppe.

Denkbar wäre beispielsweise auch ohne Superresolutionszwecken, sondern lediglich zu Stereoskopiezwecken eine Ausführung, bei denen eine Gruppe von unmittelbar benachbarten Kanälen in Zeilenerstreckungsrichtung mit ihren Teilgesichtsfeldern das Gesamtgesichtsfeld vollständig abdecken, und dass eine weitere Gruppe einander unmittelbar benachbarter Kanäle das Gesamtgesichtsfeld ihrerseits vollständig abdecken, und die Strahlengänge beider Kanalgruppen das Substrat bzw. einen Träger 66 durchlaufen. Das bedeutet, dass die Multiaperturabbildungsvorrichtung eine erste Vielzahl von optischen Kanälen aufweisen kann, die ausgebildet sind, um ein Gesamtgesichtsfeld, ggf. komplett, zu erfassen. Eine zweite Vielzahl von optischen Kanälen der Multiaperturabbildungsvorrichtung kann ausgebildet sein, um das Gesamtgesichtsfeld ebenfalls und ggf. komplett zu erfassen. Das Gesamtgesichtsfeld kann so zumindest stereoskopisch durch die erste Vielzahl von optischen Kanälen und durch die zweite Vielzahl von optischen Kanälen erfasst werden. Die erste Vielzahl von optischen Kanälen und die zweite Vielzahl von optischen Kanälen können auf einen gemeinsamen Bildsensor treffen, ein gemeinsames Array (Arrayoptik) nutzen und/oder von einer gemeinsamen Strahlumlenkeinrichtung umgelenkt werden. Im Gegensatz zu einem Array aus Einzelkameras wird eine zusammenhängende Array-Kamera gebildet, die gemeinsam als eine Vorrichtung steuerbar ist, bspw. in Bezug auf einen Fokus und/oder eine Bildstabilisierung, was vorteilhaft ist, da alle Kanäle gleichzeitig und unter Nutzung derselben Aktoren beeinflusst werden. Zusätzlich ergeben sich aus dem monolithischen Aufbau Vorteile hinsichtlich der mechanischen Stabilität der Gesamtanordnung insbesondere bei Temperaturänderungen. Dies ist vorteilhaft für Zusammensetzung des Gesamtbildes aus den Teilbilder der einzelnen Kanäle sowie bei der Gewinnung dreidimensionaler Objektdaten bei Nutzung in Stereo-, Tripple-, Quattro- usw. Systemen bei mehrfacher Abtastung des Gesamtgesichtsfeldes durch unterschiedliche Vielzahlen von Kanälen 16.

Die nachfolgende Erörterung beschäftigt sich mit den Optiken 64a-d, deren Linsenebenen ebenfalls parallel zu der gemeinsamen Ebene der Bildsensorbereiche 58a-d liegt. Wie es nachfolgend beschrieben wird, sind Linsen der Optiken 64a-d der optischen Kanäle 16a-d an einer Hauptseite 66a des Substrats 66 über einen oder mehrere Linsenhalter befestigt und über das Substrat 66 mechanisch miteinander verbunden. Insbesondere verlaufen die Strahlengänge 17a-d der Mehrzahl von optischen Kanälen 16a-d durch das Substrat 66. Das Substrat 66 ist also zumindest bereichsweise aus transparentem Material gebildet und ist plattenförmig oder besitzt beispielsweise die Form eines Parallelepipeds oder eines anderen konvexen Körpers mit einer planaren Hauptseite 66a und einer gegenüberliegenden, dazu ebenfalls planaren Hauptseite 66b. Die Hauptseiten sind vorzugsweise senkrecht zu den Strahlengängen 17a-d positioniert. Wie nachfolgend beschrieben, kann es gemäß Ausführungsbeispielen Abweichungen von der reinen Parallelepipedform geben, die auf eine mit dem Substrat einstückige Ausformung von Linsen der Optiken zurückzuführen sind.

Bei dem Ausführungsbeispiel der Figuren 11a-c handelt es sich bei dem flachen Trägersubstrat 66 beispielsweise um ein Substrat aus Glas oder Polymer. Beispielsweise kann das Trägersubstrat 66 eine Glasplatte umfassen. Das Material des Substrats 66 kann nach Gesichtspunkten hoher optischer Transparenz und niedrigem Temperaturkoeffizienten oder weiteren mechanischen Eigenschaften wie Härte, Elastizitäts- oder Torsionsmodul ausgewählt sein.

Das Substrat 66 kann als einfaches planes Teil des Strahlenganges ausgebildet sein, ohne dass irgendwelche zusätzlichen Linsen direkt hierauf untergebracht sind. Zusätzlich können Blenden, wie z. B. Apertur- oder Falschlichtblenden, oder/und Filterschichten, wie z. B. IR-Blockfilter auf den Substratoberflächen angebracht sein oder aus mehreren Lagen verschiedener Substrate bestehen, auf deren Oberflächen Blenden und Filterschichten angebracht sein können, die sich wiederum kanalweise z. B. in ihrem spektralen Absorption unterscheiden können.

Das Substrat 66 kann aus Material bestehen, dass in unterschiedlichen Bereichen des elektromagnetischen Spektrums, welches vom Bildsensor detektiert werden kann, unterschiedliche Eigenschaften aufweist, insbesondere eine nicht-konstante Absorption.

Bei dem Ausführungsbeispiel von Fig. 19a-c umfasst jede Optik 64a-d drei Linsen. Die Anzahl der Linsen ist allerdings frei wählbar. Die Anzahl könnte 1, 2 oder jede andere beliebige Anzahl sein. Die Linsen können konvex, lediglich eine optisch abbildende Funktionsfläche wie z. B. eine sphärische, eine asphärische, eine Freiformfläche aufweisen, oder zwei, wie z. B. zwei einander gegenüberliegende, um beispielsweise eine konvexe oder eine konkave Linsenform zu ergeben. Auch mehrere optisch wirksame Linsenflächen sind möglich, wie z. B. durch Aufbau einer Linse aus mehreren Materialien.

Eine erste Linse 78a-d jedes optischen Kanals 16a-d oder Optik ist bei dem Ausführungsbeispiel von Fig. 19a-c an der Hauptseite 66a gebildet. Die Linsen 78a-d sind beispielsweise durch Abformung auf der Hauptseite 66a des Substrats 66 hergestellt worden und bestehen beispielsweise aus Polymer, wie z. B. aus UV-aushärtbarem Polymer. Die Abformung geschieht beispielsweise durch ein Abformwerkzeug und die Aushärtung kann beispielsweise über Temperatur und/oder über UV-Bestrahlung geschehen.

Bei dem Ausführungsbeispiel von Fig. 19a-c besitzt jede Optik 64a-d noch eine weitere zweite und dritte Linse 82a-d bzw. 84a-d. Diese Linsen sind exemplarisch über axial verlaufende röhrenförmige Linsenhalter 86a-d gegenseitig im Inneren des jeweiligen Linsenhalters fixiert und über Letzteren an der Hauptseite 66b fixiert, wie z. B. mittels Klebens oder einer anderen Fügetechnik. Öffnungen 88a-d der Linsenhalter 86a-d sind beispielsweise mit kreisförmigem Querschnitt versehen, in dessen zylindrischen Innenseite die Linsen 82a-d bzw. 84a-d befestigt sind. Für jede Optik 64a-d liegen also die Linsen koaxial auf der jeweiligen optischen Achse der Strahlengänge 17a-d. Die Linsenhalter 86a-d können aber auch einen sich über ihre Länge bzw. entlang der jeweiligen optischen Achsen ändernden Querschnitt aufweisen. Hierbei kann der Querschnitt mit geringer werdendem Abstand zum Bildsensor 12 zunehmend rechteckigen oder quadratischen Charakter aufweisen. Die äußere Form der Linsenhalter kann sich somit auch von der Form der Öffnungen unterscheiden. Das Material der Linsenhalter kann lichtabsorbierend sein. Entsprechend der zuvor im Zusammenhang mit den Figuren 11d und 11e beschriebenen schielenden Optiken können die Linsenhalter auch nicht rotationssymmetrisch und/oder nicht koaxial ausgeprägt sein.

Die Befestigung über die vorerwähnten Linsenhalter geschieht beispielsweise so, dass Linsenscheitel der durch dieselben gehaltenen Linsen von dem Substrat 66 beabstandet sind.

Wie es im Vorhergehenden bereits erwähnt wurde, ist es möglich, dass das Substrat 66 beidseitig planar ist und mithin keine Brechkraftwirkung aufweist. Allerdings wäre es auch möglich, dass das Substrat 66 mechanische Strukturen aufweist, wie z. B. Vertiefungen oder Vorsprünge, die eine leichte, form- und/oder kraftschlüssige Ausrichtung anschließender Bauteile ermöglichen, wie z. B. das Anschließen von Einzellinsen oder Gehäuseteilen. Bei dem Ausführungsbeispiel von Fig. 19a-c beispielsweise könnte das Substrat 66 an der Hauptseite 66b befestigungserleichternde oder die Ausrichtung erleichternde Strukturen an den Positionen aufweisen, an welchen das jeweilige Ende der Röhre des Linsenhalters 86a-d der jeweiligen Optik 64a-d befestigt ist. Bei diesen Strukturen kann es sich beispielsweise um eine kreisförmige Vertiefung handeln oder einer Vertiefung mit einer anderen Form, die der Form einer dem Substrat zugewandten Seite des jeweiligen Linsenhalters entspricht, in die die Seite der jeweiligen Linsenhalters 84a-d Eingriff nehmen kann. Es sei noch einmal hervorgehoben, dass auch andere Öffnungsquerschnitte und damit korrespondierend eventuell andere Linsenaperturen als kreisförmige möglich sind.

Das Ausführungsbeispiel von Fig. 19a-c löst sich also von einem klassischen Aufbau von Kameramodulen, die Einzellinsen aufweisen und zur Halterung der Einzellinsen einen diese komplett umschließenden, nicht transparenten Gehäuseträger aufweisen. Vielmehr verwendet obiges Ausführungsbeispiel einen transparenten Körper 66 als Substratträger. Dieser erstreckt sich über mehrere benachbarte optische Kanäle 16a-d, um von deren Abbildungsstrahlengang durchdrungen zu werden. Er stört die Abbildung nicht, aber er erhöht auch nicht die Bauhöhe.

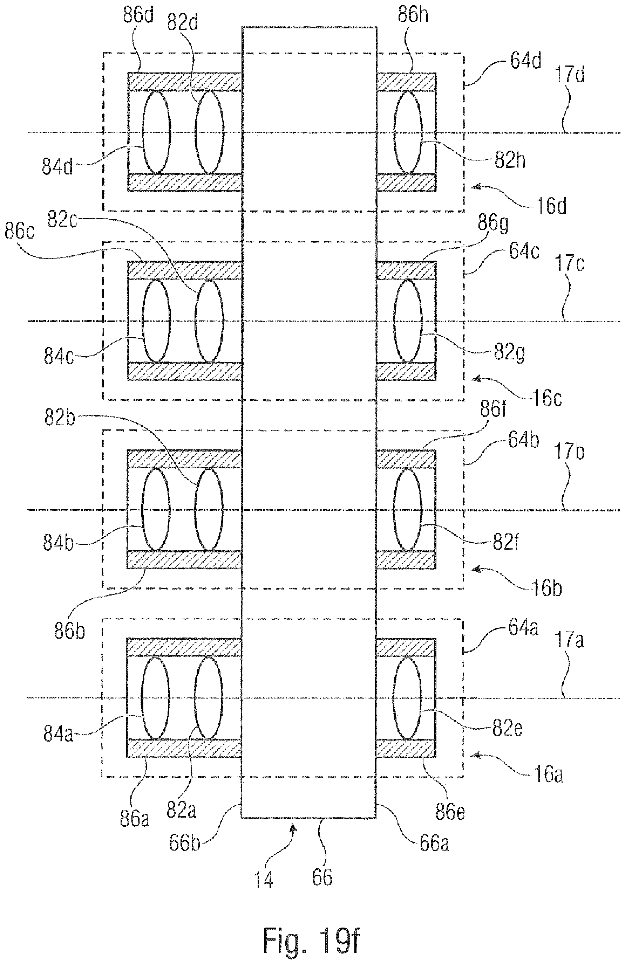

Es wird allerdings auf verschiedene Möglichkeiten hingewiesen, wie das Ausführungsbeispiel von Fig. 19a-c variiert werden könnte. Beispielsweise erstreckt sich das Substrat 66 nicht notwendigerweise über alle Kanäle 16a-d der Multiaperturabbildungsvorrichtung 11. Anders als im Vorhergehenden beschrieben, wäre es möglich, dass jede Optik 64a-d über Linsenträger gehalterte Linsen auf beiden Seiten 66a und 66b aufweist, wie es in Fig. 19f dargestellt ist.

Auch die Existenz lediglich der Linsen 82e-h auf der Hauptseite 66a, d. h. ohne die Linsen 82a-d und/oder 84a-d auf der anderen Seite 66b, wäre denkbar, ebenso wie das Vorsehen der Linsen 82a-d und/oder 84a-d auf der anderen Seite 66a, d. h. der dem Bildsensor 12 abgewandten Seite des Substrats 66 und nicht der davon zugewandten Seite, d. h. 66a. Ebenso ist die Anzahl an Linsen in einem Linsenträger 86a-h frei wählbar. So könnte auch lediglich eine Linse oder es könnten mehr als zwei in einem solchen Träger 86a-h vorhanden sein. Wie in Fig. 19f gezeigt, könnte es sein, dass auf beiden Seiten 66a und 66b Linsen über jeweilige Linsenträger 86a-d bzw. 86e-h an der jeweiligen Seite 66a bzw. 66b montiert sind.

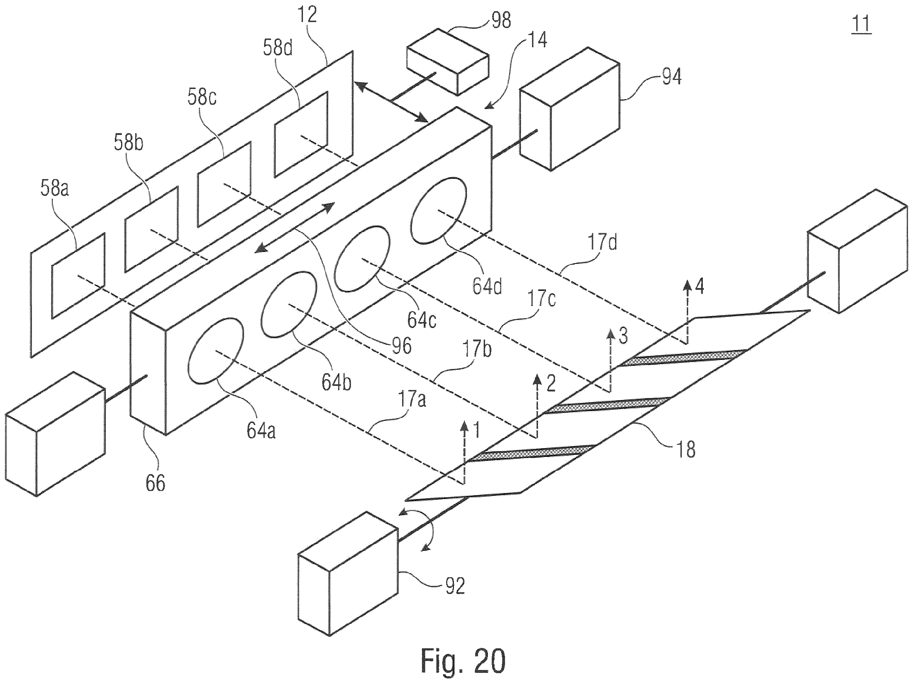

Fig. 20 zeigt exemplarisch, dass die Multiaperturabbildungsvorrichtung 11 von Fig. 19a-c um eines oder mehrere der nachfolgend beschriebenen zusätzlichen Einrichtungen ergänzt werden könnte.

Beispielsweise zeigt Fig. 20, dass eine Einrichtung 92 vorhanden sein könnte, um die Strahlumlenkeinrichtung 18 um die Rotationsachse 44 zu drehen, die parallel zu der Zeilenerstreckungsrichtung des Arrays 14 ist. Die Rotationsachse 44 liegt beispielsweise in der Ebene der Strahlengänge 17a-d oder davon weniger als ein Viertel eines Durchmessers der Optiken 64a-d entfernt. Alternativ wäre es natürlich auch möglich, dass die Rotationsachse weiter entfernt liegt, wie z. B. weniger als ein Optikdurchmesser oder weniger als vier Optikdurchmesser. Die Einrichtung 92 kann beispielsweise vorgesehen sein, um die Strahlumlenkeinrichtung 18 mit kurzer Ansprechzeit in einem lediglich kleinen Winkelbereich, wie z. B. innerhalb einer Spanne von weniger als 1° oder weniger 10° oder weniger als 20° zu drehen, um Verwacklungen der Multiaperturabbildungsvorrichtung 11 durch beispielsweise einen Benutzer während einer Aufnahme auszugleichen. Die Einrichtung 92 würde in diesem Fall beispielsweise von einer Bildstabilisierungssteuerung angesteuert werden.

Alternativ oder zusätzlich könnte die Einrichtung 92 ausgebildet sein, um mit größeren Winkelverstellungen das Gesamtgesichtsfeld, das durch die Gesamtabdeckung der Teilgesichtsfelder 74a-d (Fig. 19a) definiert wird, in seiner Richtung zu verändern. Dabei wäre es ferner möglich, dass durch Rotation der Strahlumlenkeinrichtung 18 auch Ablenkungen erzielt werden, bei denen das Gesamtgesichtsfeld in der entgegengesetzten Richtung relativ zu der Vorrichtung 11 angeordnet ist, indem beispielsweise die Strahlumlenkeinrichtung 18 als ein beidseitig reflektives Spiegelarray ausgebildet ist.

Wiederum alternativ oder zusätzlich kann die Vorrichtung 11 eine Einrichtung 94 aufweisen, um die Optiken 64a-d vermittels des Substrats 66 bzw. das Substrat 66 selbst und damit die Optiken 64a-d translatorisch entlang der Zeilenerstreckungsrichtung zu bewegen. Die Einrichtung 94 könnte beispielsweise ebenfalls durch die vorerwähnte Bildstabilisierungssteuerung angesteuert werden, um durch eine Bewegung 96 entlang der Zeilenerstreckungsrichtung eine Bildstabilisierung quer zu der Bildstabilisierung zu erzielen, die durch die Rotation der Spiegelumlenkvorrichtung 18 verwirklicht wird.

Weiterhin kann zusätzlich oder alternativ die Vorrichtung 11 eine Einrichtung 98 zum Verändern des bildseitigen Abstands zwischen Bildsensor 12 und Optiken 64a-d bzw. zwischen Bildsensor 12 und dem Träger 66 aufweisen, um eine Schärfentiefeneinstellung zu erzielen. Die Einrichtung 98 kann durch eine manuelle Benutzersteuerung oder durch eine Autofokussteuerung bzw. Fokussiereinrichtung der Vorrichtung 11 gesteuert werden.

Die Einrichtung 94 dient also als Aufhängung des Substrats 66 und ist vorzugsweise, wie in Fig. 20 angedeutet seitlich neben dem Substrat 66 entlang der Zeilenerstreckungsrichtung angeordnet, um die Bauhöhe nicht zu erhöhen. Auch für die Einrichtungen 92 und 98 gilt, dass selbige vorzugsweise in der Ebene der optischen Strahlengänge angeordnet sind, um die Bauhöhe nicht zu erhöhen. Die Einrichtung 98 kann auch mit der Strahlumlenkeinrichtung 18 verbunden sein und diese simultan oder nahezu simultan bewegen, so dass bei einer Veränderung des bildseitigen Abstands zwischen Bildsensor 12 und Optiken 64a-d ein Abstand zwischen den Optiken 64a-d und der der Strahlumlenkeinrichtung 18 im Wesentlichen konstant oder konstant bleibt. Die Einrichtungen 92, 94 und/oder 98 können auf Basis pneumatischer, hydraulischer, piezoelektrischer Aktoren, DC-Motoren, Schrittmotoren, thermischer Aktoren, elektrostatischer Aktoren, elektrostriktiver und/oder magnetostriktiver Aktoren oder Antriebe implementiert sein.

Es sei darauf hingewiesen, dass die Optiken 64a-d nicht nur untereinander, wie z. B. über das schon erwähnte transparente Substrat, sondern auch relativ zu der Strahlumlenkeinrichtung in konstanter relativer Lage gehaltert sein können, wie z. B. über einen geeigneten Rahmen, der vorzugsweise die Bauhöhe nicht vergrößert und deshalb vorzugsweise in der Ebene der Komponenten 12, 14 und 18 bzw. in der Ebene der Strahlengänge verläuft. Die Konstanz der relativen Lage könnte sich auf den Abstand zwischen Optiken und Strahlumlenkeinrichtung entlang der optischen Achsen beschränken, so dass die Einrichtung 98 beispielsweise die Optiken 64a-d zusammen mit der Strahlumlenkeinrichtung translatorisch entlang der optischen Achsen bewegt. Der Optiken-zu-Strahlumlenkeinrichtung-Abstand könnte auf einen minimalen Abstand eingestellt werden, so dass der Strahlengang der Kanäle nicht durch die Segmente der Strahlumlenkeinrichtung 18 lateral eingeschränkt wird, was die Bauhöhe verringert, da andernfalls die Segmente 68a-d hinsichtlich der lateralen Ausdehnung für den größten Optiken-zu-Strahlumlenkeinrichtung-Abstand dimensioniert sein müssten, um den Strahlengang nicht einzuschneiden. Zusätzlich könnte die Konstanz der relativen Lage vorerwähnter Rahmen die Optiken und die Strahlumlenkeinrichtung entlang der x-Achse starr zueinander haltern, sodass die Einrichtung 94 die Optiken 64a-d zusammen mit der Strahlumlenkeinrichtung translatorisch entlang der Zeilenerstreckungsrichtung bewegen würde.

Die oben beschriebene Strahlumlenkeinrichtung 18 zum Umlenken des Strahlengangs der optischen Kanäle ermöglicht zusammen mit dem Aktor 92 zur Erzeugung der Rotationsbewegung der Strahlumlenkeinrichtung 18 einer optischen Bildstabilisierungssteuerung der Multiaperturabbildungsvorrichtung 11 eine Bild- bzw. Gesamtblickfeldstabilisierung in zwei Dimensionen, nämlich durch die translatorische Bewegung des Substrats 66 eine Bildstabilisierung entlang einer ersten Bildachse, die im Wesentlichen parallel zur Zeilenerstreckungsrichtung verläuft, und durch die Erzeugung der Rotationsbewegung der Strahlumlenkeinrichtung 18 eine Bildstabilisierung entlang einer zweiten Bildachse, die im Wesentlichen parallel zu den optischen Achsen vor bzw. ohne Strahlumlenkung verläuft, oder - betrachtet man die umgelenkten optischen Achsen - senkrecht zu den optischen Achsen und der Zeilenerstreckungsrichtung. Zusätzlich kann die beschriebene Anordnung eine translatorische Bewegung der im angesprochenen Rahmen fixierten Strahlumlenkeinrichtung und des Arrays 14 senkrecht zur Zeilenerstreckungsrichtung bewirken, wie z. B. durch den beschriebenen Aktor 98, die für die Realisierung einer Fokuseinstellung und damit einer Autofokusfunktion genutzt werden kann.

Alternativ oder zusätzlich zu der Rotationsbewegung zum Erhalten einer Bildstabilisierung entlang der zweiten Bildachse auch eine translatorische Relativbewegung zwischen dem Bildsensor 12 und dem Array 14 implementierbar ist. Diese Relativbewegung kann bspw. von der Einrichtung 94 und/oder der Einrichtung 98 bereitgestellt werden.

Es sei zu den obigen Ausführungen der Vollständigkeit halber noch darauf hingewiesen, dass die Vorrichtung bei einer Aufnahme über die Bildsensorbereiche ein Bild einer Szene pro Kanal aufnimmt, die durch die Kanäle auf die Bildsensorbereiche abgebildet worden sind, und dass die Vorrichtung optional über einen Prozessor verfügen kann, der die Bilder zu einem Gesamtbild zusammenfügt oder verschmelzt, das der Szene in dem Gesamtgesichtsfeld entspricht, und/oder zusätzliche Daten bereitstellt, wie zum Beispiel 3D-Bilddaten und Tiefeninformationen der Objektszene zur Erstellung von Tiefenkarten und zur softwaretechnischen Realisierung wie z. B. von Refocusing (Festlegung der Bildschärfebereiche nach der eigentlichen Aufnahme), All-in-Focus-Bildern, Virtual Green Screen (Trennung von Vorder- und Hintergrund) u.a.. Letztere Aufgaben könnten ebenfalls von jenem Prozessor erledigt werden oder extern. Der Prozessor könnte allerdings auch eine zu der Multiaperturabbildungsvorrichtung externe Komponente darstellen.

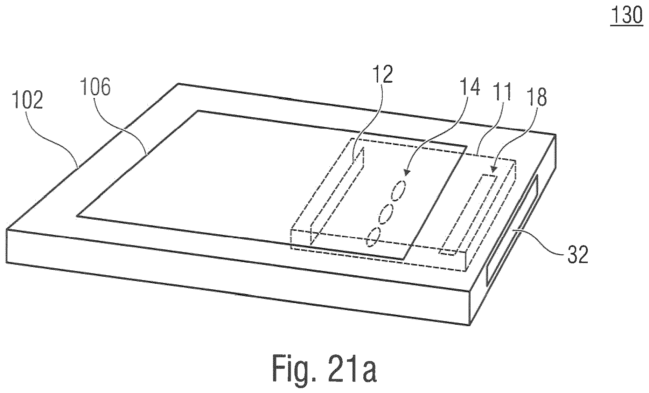

Fig. 21a illustriert, dass Vorrichtungen 11 der vorher beschrieben Alternativen beispielsweise in einem flachen Gehäuse eines tragbaren Geräts 130 eingebaut sein können, wie zum Beispiel eines Mobiltelefons, ein Smartphone oder Mediaplayers oder dergleichen, wobei dann beispielsweise die Ebenen des Bildsensors 12 bzw. der Bildsensorbereiche und die Linsenebenen der Optiken der optischen Kanäle 16 senkrecht zu der flachen Erstreckungsrichtung des flachen Gehäuses bzw. parallel zur Dickenrichtung ausgerichtet sind. Auf diese Weise würde beispielsweise die Strahlumlenkeinrichtung 18 dafür sorgen, dass das Gesamtgesichtsfeld der Multiaperturabbildungsvorrichtung 11 vor einer Vorderseite 102 des flachen Gehäuses liegt, das beispielsweise auch einen Bildschirm aufweist. Alternativ wäre auch eine Umlenkung derart möglich, dass sich das Gesichtsfeld vor einer Rückseite des flachen Gehäuses, die der Vorderseite 102 gegenüberliegt, befindet. Das Gehäuse 22 des Geräts 130 bzw. das Gerät selbst kann flach sein, da durch die illustrierte Lage der Vorrichtung 11 in dem Gehäuse, die Bauhöhe der Vorrichtung 11, die zur Dicke des Gehäuses parallel ist, gering gehalten werden kann. Eine Umschaltbarkeit könnte ebenfalls vorgesehen werden, indem ein Fenster auf der der Seite 102 gegenüberliegenden Seite vorgesehen wird und beispielsweise die Strahlumlenkeinrichtung zwischen zwei Stellungen bewegt wird, indem letztere beispielsweise als vor- und rückseitig spiegelnder Spiegel ausgeführt wird und von der einen in die andere Stellung gedreht wird, oder als Facettenspiegel mit einem Satz von Facetten für die eine Stellung und einem anderen Satz von Facetten für die andere Stellung, wobei die Facettensätze in Zeilenerstreckungsrichtung nebeneinander liegen und durch translatorische Hin- und Her-Bewegung der Strahlumlenkeinrichtung entlang der Zeilenerstreckungsrichtung zwischen den Stellungen umgeschaltet wird. Ein Verbau der Vorrichtung 11 in ein anderes ggf. nicht tragbares Gerät, wie z. B. eine Auto, wäre natürlich ebenfalls möglich.

Mehrere Module 11, deren Teilgesichtsfelder ihrer Kanäle das gleiche Gesichtsfeld vollständig und optional sogar in kongruenter Weise abdecken, können mit einem Basisabstand BA (vgl. Fig. 15) zueinander entlang einer für beide Module gleichen Zeilenerstreckungsrichtung in dem Gerät 130 verbaut sein, wie zum Beispiel zum Zweck der Stereoskopie. Mehr als zwei Module wären ebenfalls denkbar. Die Zeilenerstreckungsrichtungen der Module 11 könnten auch nicht kollinear, sondern lediglich parallel zueinander sein. Es sei jedoch noch einmal erwähnt, dass, wie im vorgehenden erwähnt, auch eine Vorrichtung 11 bzw. ein Modul mit Kanälen so ausgestattet sein könnte, dass dieselben gruppenweise dasselbe Gesamtgesichtsfeld jeweils vollständig abdecken. Die Module können in einer/mehreren Zeile(n)/Reihe(n) oder an beliebiger Stelle der Vorrichtung angeordnet sein. Bei einer Anordnung mehrerer Module können diese gleich oder verschieden gebildet sein. Bspw. kann ein erstes Modul ausgebildet sein, um eine stereoskopische Erfassung des Gesamtgesichtsfeldes auszuführen. Ein zweites Modul kann ausgebildet sein, um eine einfache Erfassung, eine stereoskopische Erfassung oder eine Erfassung höherer Ordnung auszuführen.

Es sei noch erwähnt, das die Strahlumlenkeinrichtung bei alternativen Ausführungsbeispielen verglichen zu den oben beschrieben Ausführungsbespielen auch fehlen könnte. Wenn eine lediglich teilweise gegenseitige Überlappung der Teilgesichtsfelder gewünscht ist, dann könnte dies zum Beispiel über gegenseitige laterale Versätze zwischen dem Zentrum des Bildsensorbereiches und des optischen Zentrums der Optik des entsprechenden Kanals erzielt werden. Die Aktoren gemäß _Fig. 20 könnten natürlich dennoch Anwendung finden, wobei im Ersatz für die Einrichtung 92 beispielsweise der Aktor 94 zusätzlich zu einer translatorischen Bewegung der Optiken bzw. des Trägers 66 in der Lage ist.

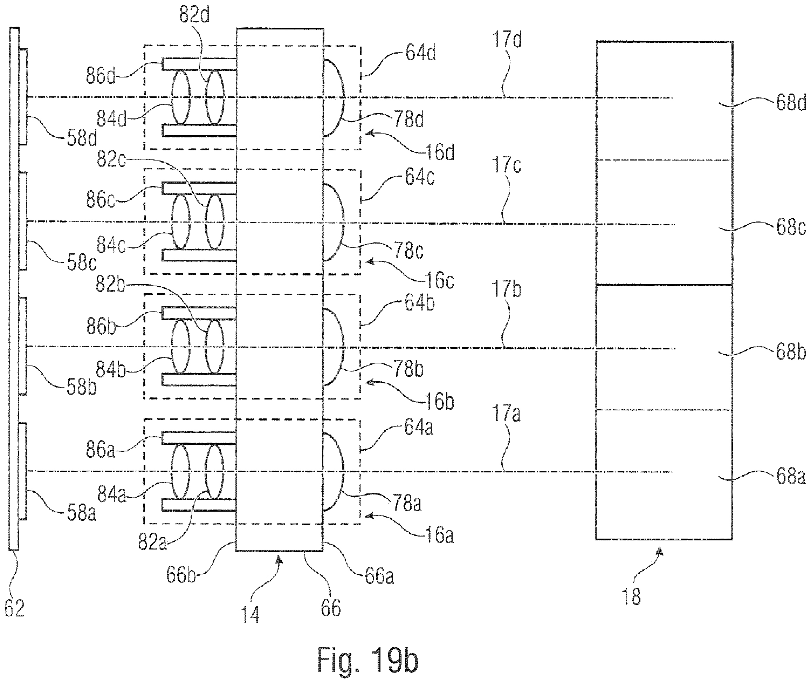

Noch einmal in anderen Worten ausgeführt zeigen obige Ausführungsbeispiele also eine Multiaperturabbildungsvorrichtung mit einzeiligem Array von nebeneinander angeordneten optischen Kanälen, bei der sich irgendwo im Strahlengang der Multiaperturabbildungsvorrichtung ein sich über die Kanäle erstreckendes Substrat aus beispielsweise Glas oder Polymer zur Verbesserung der Stabilität erstreckt. Das Substrat kann zusätzlich bereits auf Vorder- und/oder Rückseite Linsen beinhalten. Die Linsen können aus dem Material des Substrats bestehen (wie z. B. durch Heizprägen entstanden) oder darauf abgeformt sein. Vor und hinter dem Substrat können sich weitere Linsen befinden, die sich nicht auf Substraten befinden und einzeln montiert werden. Es können mehrere Substrate in einem Aufbau, sowohl entlang als auch senkrecht zur Zeilenerstreckungsrichtung vorhanden sein. Es wäre es dabei auch möglich, mehrere Substrate mit Linsen entlang der Strahlengänge hintereinanderzuschalten, d. h. sie anderweitig hintereinander in einer vorbestimmten Lagebeziehung zueinander zu halten, wie z. B. über einen Rahmen, ohne dass ein Aneinanderfügen notwendig wäre. Auf diese Weise stünden für das Vorsehen bzw. Befestigen von Linsen zweimal so viele Hauptseiten zur Verfügung, wie Trägersubstrate verwendet werden, etwa ein Substrat 66, das gemäß obiger Beispiele mit Linsen bestückt sein kann, hier exemplarisch gemäß Fig. 19b, und ein Substrat, das ebenfalls gemäß obiger Beispiele mit Linsen bestückt sein kann, also unter anderem mit Linsen, die über Linsenhalter an den Hauptseiten 66a und/oder 66b befestigt sind, hier aber exemplarisch als einstückig durch beispielsweise Spritzguss oder dergleichen so hergestellt dargestellt ist, dass Linsen an den beiden Seiten 66a und 66b geformt sind, wie wohl natürlich auch abgeformte Linsen anderen Materials als das Material des parallelepipedförmigen Substrats 66 möglich wären sowie Linsen an nur einer der Seiten 66a oder 66b. Beide Substrate sind transparent und werden von den Strahlengängen durchdrungen, und zwar durch die Hauptseiten 66a und 66b hindurch. Obige Ausführungsbeispiele lassen sich also in Form einer Multiaperturabbildungsvorrichtung implementieren, und zwar mit einzeiliger Kanalanordnung, wobei jeder Kanal ein Teilgesichtsfeld eines Gesamtgesichtsfeldes überträgt und sich die Teilgesichtsfelder teilweise überlappen. Ein Aufbau mit mehreren der solchen Multiaperturabbildungsvorrichtungen für Stereo- Trio-, Quattro usw. Aufbauten für die 3D-Bildaufnahme ist möglich. Die Mehrzahl von Modulen kann dabei als eine zusammenhängende Zeile ausgeführt sein. Die zusammenhängende Zeile könnte identische Aktoren und ein gemeinsames Strahlumlenkelement nutzen. Ein oder mehrere eventuell im Strahlengang vorhandene mechanisch verstärkende Substrate können sich über die gesamte Zeile, die einen Stereo-, Trio, Quattro-Aufbau bilden kann, erstrecken. Es können Verfahren der Superresolution genutzt werden, wobei mehrere Kanäle dieselben Teilbildbereiche abbilden. Die optischen Achsen können auch bereits ohne Strahlumlenkeinrichtung divergent verlaufen, so dass weniger Facetten auf der Strahlumlenkeinheit benötigt werden. Die Facetten besitzen dann vorteilhafter Weise nur eine Winkelkomponente. Der Bildsensor kann einteilig sein, nur eine zusammenhängende Pixelmatrix oder mehrere unterbrochene aufweisen. Der Bildsensor kann aus vielen Teilsensoren zusammengesetzt sein, die z. B. auf einer Leiterplatte nebeneinander angeordnet sind. Ein Autofokusantrieb eine Fokussiereinrichtung kann so ausgeführt sein, dass das Strahlumlenkelement synchron mit den Optiken bewegt wird, oder ruhend ist. Bei einer Abwesenheit einer Vorab-Divergenz sehen es Ausführungsbeispiele vor, dass die Strahlengänge zwischen dem Bildsensor 12 und der Strahlumlenkeinrichtung 18 im Wesentlichen oder vollständig parallel verlaufen.

Fig. 21b zeigt einen schematischen Aufbau umfassend eine erste Multiaperturabbildungsvorrichtung 11a und eine zweite Multiaperturabbildungsvorrichtung 11b, wie er bspw. in dem Gerät 130 angeordnet sein kann. Die beiden Multiaperturabbildungsvorrichtungen 11a und 11b können eine gemeinsame Multiaperturabbildungsvorrichtung 11 bilden und einen gemeinsamen Bildsensor 12 und/oder ein gemeinsames Array 14 aufweisen. Die einzeiligen Arrays 14a oder $14_1$ und 14b oder $14_2$ bilden bspw. eine gemeinsame Zeile in dem gemeinsamen Array 14. Die Bildsensoren 12a und 12b können den gemeinsamen Bildsensor 12 bilden und bspw. auf einem gemeinsamen Substrat bzw. auf einem gemeinsamen Schaltungsträger wie einer gemeinsamen Platine oder einem gemeinsamen Flexboard montiert sein. Alternativ können die Bildsensoren 12a und 12b auch voneinander verschiedene Substrate umfassen. Verschiedene Mischungen dieser Alternativen sind natürlich ebenfalls möglich, wie etwa Multiaperturabbildungsvorrichtungen umfassend einen gemeinsamen Bildsensor, ein gemeinsames Array und/oder eine gemeinsame Strahlumlenkeinrichtung 18 sowie weitere Multiaperturabbildungsvorrichtungen, die separate Komponenten aufweisen. Vorteilhaft an einem gemeinsamen Bildsensor, einem gemeinsamen einzeiligen Array und/oder einer gemeinsamen Strahlumlenkeinrichtung ist, dass eine Bewegung einer jeweiligen Komponente mit einer großen Präzision durch ansteuern einer geringen Menge von Aktoren erhalten werden kann und eine Synchronisierung zwischen Aktoren reduziert oder vermieden werden kann. Ferner kann eine hohe thermische Stabilität erhalten werden. Alternativ oder zusätzlich können auch weitere Multiaperturabbildungsvorrichtungen ein gemeinsames Array, einen gemeinsamen Bildsensor und/oder eine gemeinsame Strahlumlenkeinrichtung aufweisen. Der Aufbau der Multiaperturabbildungsvorrichtung 11 kann bspw. für eine stereoskopische Erfassung eines Gesamt- oder Teilgesichtsfeldes nutzbar sein, wenn optische Kanäle verschiedener Teil-Multiaperturabbildungsvorrichtungen 11a und 11b auf ein gleiches Teilgesichtsfeld gelenkt werden. In vergleichbarer Weise können weitere Teil-Multiaperturabbildungsvorrichtungen in die gemeinsame Multiaperturabbildungsvorrichtungen integriert werden, so dass eine Erfassung höherer Ordnung im Vergleich zu Stereo ermöglicht ist.

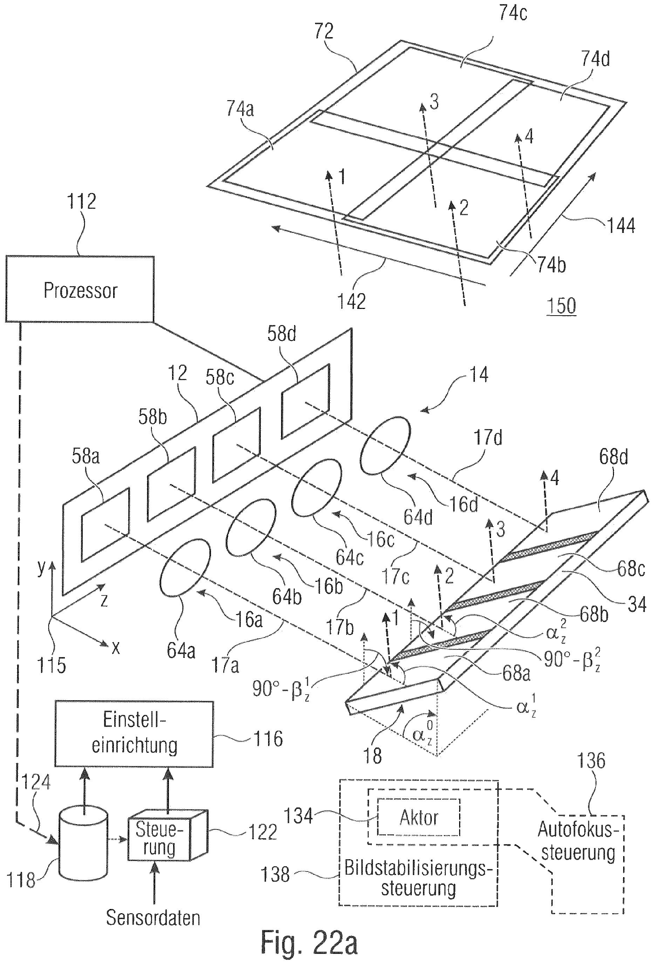

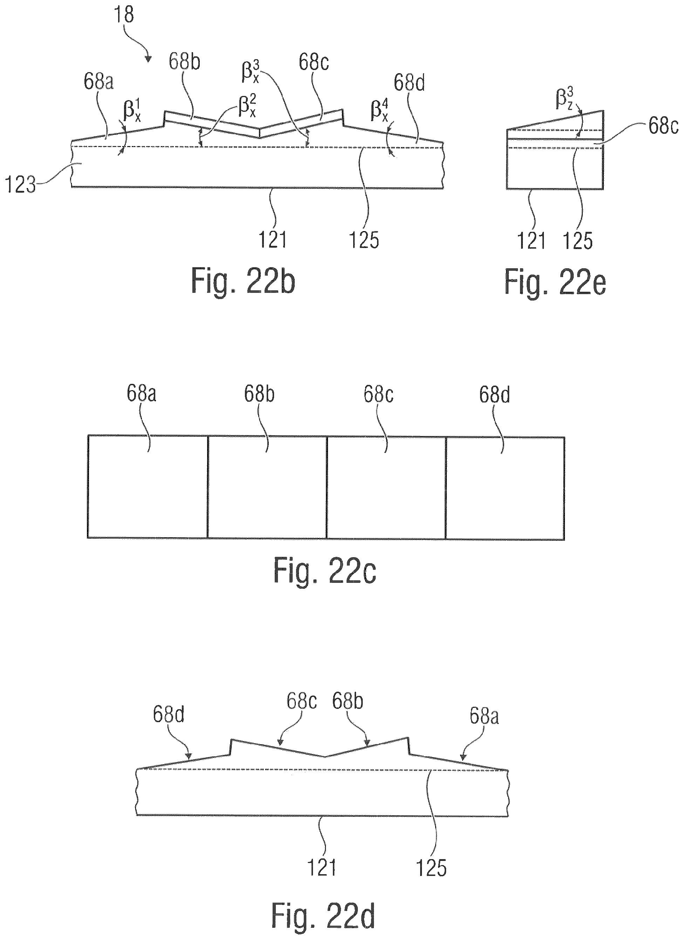

Fig. 22a zeigt ein Ausführungsbeispiel einer Multiaperturabbildungsvorrichtung 150. Vorzugsweise sind die Bildsensorbereiche 58a-d in einer gemeinsamen Ebene angeordnet, nämlich der Bildebene der optischen Kanäle 16 bzw. derer Optiken. In Fig. 22a ist diese Ebene exemplarisch parallel zu der Ebene, die durch eine z- und eine y-Achse eines kartesischen Koordinatensystems aufgespannt wird, das in Fig. 22a zur Vereinfachung der nachfolgenden Beschreibung eingezeichnet und mit dem Bezugszeichen 115 versehen ist.

Bei einem linearen Array von optischen Kanälen ist die Größenausdehnung der Multiaperturabbildungsvorrichtung 150, wie sie durch den Bildsensor 12 und die Optiken 64 nach unten hin beschränkt wird, entlang der Zeilenerstreckungsrichtung größer als der Durchmesser eine Linse. Die minimale Ausdehnung der Multiaperturabbildungsvorrichtung 150, wie sie durch die gegenseitige Anordnung von Bildsensor 12 zu Optiken 64 entlang der z-Achse, d. h. entlang der optischen Achsen bzw. Strahlengänge der optischen Kanäle 16a-d, bestimmt wird, ist zwar kleiner als die minimale Ausdehnung entlang der z-Achse, sie ist aber aufgrund der Ausgestaltung der optischen Kanäle 16a-d als einzeiliges Array größer als die Minimalausdehnung der Multiaperturabbildungsvorrichtung in der zu der Zeilenerstreckungsrichtung z senkrechten lateralen Richtung y. Letztere ist durch die laterale Ausdehnung jedes einzelnen optischen Kanals 16a-d, wie z. B. die Ausdehnung der Optiken 64a-d entlang der y-Achse, eventuell inklusive der Halterung 66, gegeben.

Wie es im Vorhergehenden beschrieben wurde, sind bei dem Ausführungsbeispiel von Fig. 22a die optischen Achsen 17a-d vor der bzw. ohne die Umlenkung durch die Strahlumlenkeinrichtung 18 bzw. an beispielsweise den Optiken 64a-d parallel zueinander, wie es in Fig. 22a gezeigt ist, oder aber sie weichen hiervon nur wenig ab. Die damit korrespondierende zentrierte Positionierung von Optiken 64a-d sowie der Bildsensorbereiche 58a-d ist einfach herzustellen und günstig hinsichtlich der Minimierung des Bauraums. Die Parallelität der Strahlengänge der optischen Kanäle bedingt aber auch, dass sich die Teilgesichtsfelder, die durch die einzelnen Kanäle 16a-d abgedeckt bzw. auf die jeweiligen Bildsensorbereiche 58a-d abgebildet werden, ohne weitere Maßnahmen, wie nämlich die Strahlumlenkung, nahezu vollständig überlappen würden. Um ein größeres Gesamtgesichtsfeld durch die Multiaperturabbildungsvorrichtung 150 abzudecken, besteht nun eine weitere Funktion der Strahlumlenkeinrichtung 18 darin, die Strahlengänge so mit einer Divergenz zu versehen, dass sich die Teilgesichtsfelder der Kanäle 16a-d weniger gegenseitig überlappen.

Beispielsweise sei angenommen, dass die optischen Achsen 17a-d der Strahlengänge der optischen Kanäle 16a-d vor bzw. ohne die Strahlumlenkeinrichtung 18 parallel zueinander sind oder gegenüber einer parallelen Ausrichtung entlang der über alle Kanäle gemittelten Ausrichtung um weniger als ein Zehntel eines minimalen Öffnungswinkels der Teilgesichtsfelder der optischen Kanäle 16a-d abweichen. Ohne zusätzliche Maßnahmen überlappten dann die Teilgesichtsfelder größtenteils. Die Strahlumlenkeinrichtung 18 von Fig. 22a umfasst deshalb für jeden optischen Kanal 16a-d eine diesem Kanal eindeutig zugeordnete reflektierende Facette 68a-d, die jeweils optisch planar sind und gegeneinander geneigt sind, nämlich so, dass die Teilgesichtsfelder der optischen Kanäle raumwinkelmäßig weniger überlappen und beispielsweise ein Gesamtgesichtsfeld abdecken, das einen Öffnungswinkel aufweist, der beispielsweise größer ist als 1,5 mal dem Öffnungswinkel der einzelnen Teilgesichtsfelder der optischen Kanäle 16a-d. In dem exemplarischen Fall von Fig. 22a sorgt die gegenseitige Neigung der reflektierenden Facette 68a-d beispielsweise dafür, dass die eigentlich linear entlang der z-Achse nebeneinander angeordneten optischen Kanäle 16a-d das Gesamtgesichtsfeld 72 gemäß einer zweidimensionalen Anordnung der Teilgesichtsfelder 74a-d abdecken.

Betrachtet man bei dem Ausführungsbeispiel von Fig. 22a die angulare Ablenkung der optischen Achsen 17a-d des optischen Kanals 16a-d in der Ebene, die durch die gemittelte Richtung der optischen Achsen vor der Strahlumlenkung und der gemittelten Richtung der optischen Achsen nach der Strahlumlenkung aufgespannt wird, d. h. in der zy-Ebene in dem Beispiel von Fig. 22a, einerseits und in der Ebene, die senkrecht zu der letztgenannten Eben und parallel zur gemittelten Richtung der optischen Achse nach Strahlumlenkung verläuft, andererseits, so entspricht das Beispiel von Fig. 22a dem exemplarischen Fall, dass die mittlere Richtung nach Strahlumlenkung der y-Achse entspricht. Im Mittel werden die optischen Achsen der optischen Kanäle also um 90° in der yz-Ebene um die z-Achse umgelenkt und im Mittel werden die optischen Achsen nicht aus der yz-Ebene herausgekippt.

Es bezeichnet beispielsweise $\beta_x^1$ den Neigungswinkel der Facette 68a gegenüber der xz-Ebene, gemessen in der xy-Ebene, d. h. die Verkippung der Facette 68a um die z-Achse gegenüber der xz-Ebene, in welcher die optischen Achsen 17a-d verlaufen. $\beta_z^1 = 0°$ entspricht einer Ausrichtung der Facette 68a parallel zu der xz-Ebene. Es gilt demzufolge $\alpha_z^1 = 2 \cdot \beta_z^1$. Entsprechend definiere $\beta_x^1$ den Neigungswinkel der Facette 68a gegenüber einer Ebene, die gegenüber der xz-Ebene die Neigung $\beta_z^1$ aufweist und parallel zu der z-Achse verläuft und zwar gemessen entlang der z-Achse. Es gilt demzufolge entsprechend $\alpha_x^1 = 2 \cdot \beta_x^1$. Die gleichen Definitionen sollen für die anderen Kanäle gelten: $\alpha_x^i = 2 \cdot \beta_x^i$, $\alpha_z^i = 2 \cdot \beta_z^i$. Für jeden optischen Kanal kann der Anstellwinkel größer sein, als ein Neigungswinkel der Neigung der diesem Kanal zugeordneten reflektierenden Facette gegenüber dem Trägersubstrat, durch den die optischen Kanäle verlaufen. Hierbei kann das Trägersubstrat parallel zu einer Zeilenerstreckungsrichtung des Arrays 14 positioniert sein und der Anstellwinkel in einer Ebene senkrecht zu der Zeilenerstreckungsrichtung liegen.

Fig. 22b-22e zeigen Seitenansichten einer Strahlumlenkvorrichtung gemäß einem Ausführungsbeispiel für exemplarisch vier optische Kanäle, die linear bzw. einseitig angeordnet sind. Die Strahlumlenkvorrichtung 18 von Fig. 22b-22e könnte als Strahlumlenkvorrichtung von Fig. 19a verwendet werden, wobei dann allerdings die Teilgesichtsfelder nicht wie in Fig. 19a dargestellt im Uhrzeigersinn 3, 4, 2, 1 das Gesamtgesichtsfeld abdecken würden, sondern im Uhrzeigersinn gemäß der Reichenfolge 4, 2, 1, 3. Die Neigungswinkel der Facetten 68a-d sind in Fig. 22b-e eingezeichnet. Sie sind durch hochgestellte Indizes 1-4 voneinander unterschieden bzw. dem jeweiligen Kanal zugeordnet. $\beta_x^1$ ist hier ebenso wie $\beta_x^4$ 0°. Die Rückseite des Trägersubstrats, d. h. die Seite, die der mit den Facetten 68a-d versehenen Oberfläche gegenüberliegt, ist in Fig. 22b-22e mit 121 angezeigt. Das den parallelepipedförmigen Anteil des Trägersubstrats 123 bildenden Material befindet sich unterhalb der gestrichelten Linie 125. Es ist ersichtlich, dass das zusätzliche Material, das diesem hinzukommt, wenig Volumen aufweist, so dass eine Abformung erleichtert wird.

Das Trägersubstrat 123 wird mit einem Anstellwinkel $\alpha_x^0$ gegenüber dem Bildsensor 12 geneigt platziert, nämlich um die Achse, um die die mittlere Richtung der optischen Achsen der optischen Kanäle umgelenkt wird, d. h. die z-Achse in Fig. 22a. Dieser Anstellwinkel sorgt dafür, dass die den Bildsensor 12 zugewandte Oberfläche der Strahlumlenkvorrichtung 18 bereits eine "Grobumlenkung" der Strahlengänge der optischen Kanäle bewirkt.

Das bedeutet für die Umlenkwinkel des Umlenkens des Strahlengangs jedes optischen Kanals durch die Strahlumlenkvorrichtung 18, dass dieselben jeweils auf dem Anstellwinkel $\alpha_x^0$ basieren sowie auf der jeweiligen Neigung der dem optischen Kanal zugeordneten reflektierenden Facette bezogen auf das Trägersubstrat 123 selbst. Diese erwähnten Facetten-individuellen Neigungen der Facetten 68a-d können wie soeben beschrieben durch einen Neigungswinkel in der xy-Ebene und einen Neigungswinkel gegenüber der Normalen des Trägersubstrats 123 in der dazu senkrechten Ebene beschrieben werden. Es wird bevorzugt, wenn gilt, dass für jeden Kanal der Anstellwinkel $\alpha_x^0$ größer ist als die Neigung, d. h. $\alpha_x^0 > \max(|\beta_x|, |\beta_z|)$ für alle Kanäle. Es wird noch mehr bevorzugt, wenn besagte Ungleichung bereits für $\alpha_x^0 / 2$ oder sogar für $\alpha_x^0 / 3$ erfüllt ist. In anderen Worten ausgedrückt, wird es bevorzugt, wenn der Anstellwinkel verglichen zu den Neigungswinkeln der Facetten 68a-d groß ist, so dass das zusätzliche Material gegenüber einer rein parallelepipedförmigen Form der Strahlumlenkvorrichtung 18 gering ist. $\alpha_x^0$ kann beispielsweise zwischen 30° und 60° jeweils inklusive liegen.

Die Herstellung der Strahlumlenkvorrichtung 18 von Fig. 22b-22e kann beispielsweise dadurch erfolgen, dass auf das Trägersubstrat 123 das zusätzliche Material durch ein Abformwerkzeug abgeformt wird. Das Trägersubstrat 123 könnte hierbei beispielsweise Glas sein, während das abgeformte zusätzliche Material darauf Polymer ist. Eine weitere Möglichkeit bestünde darin, dass die Strahlumlenkvorrichtung 18 von Fig. 22b-22e einstückig durch Spritzguss oder dergleichen gebildet wird. Das führt dazu, dass die dem Bildsensor zugewandte Oberfläche der Strahlumlenkeinrichtung zumindest an den den optischen Kanälen zugeordneten reflektierenden Facetten verspiegelt ist. Das Trägersubstrat kann drehbar rotatorisch gelagert sein, wie es bspw. im Zusammenhang mit Fig. 12b beschrieben ist.

Manche Aspekte des bisher beschriebenen Aufbaus von Multiaperturabbildungsvorrichtungen betraf quasi eine Wunsch- oder Momentaneinstellung vor bzw. zum Zeitpunkt der Aufnahme eines Gesamtbildes beispielsweise. Die Multiaperturabbildungsvorrichtung 150 von Fig. 22a umfasst beispielsweise einen Prozessor, wie etwa den Prozessor 112, der Bilder, die durch die Bildsensorbereiche 58a-d zu beispielsweise einem gleichen Zeitpunkt aufgenommen worden sind, und zwar mit den vorerwähnten Einstellungen, zu einem Gesamtbild zusammenfügt, das die Szene in dem Gesamtgesichtsfeld 72 repräsentiert. Der Algorithmus, den der Prozessor 112 verwendet, um die Bilder, die durch die optischen Kanäle 16a-d auf die Bildsensorbereiche 58a-d abgebildet und von letzteren aufgenommen worden sind, zusammenzufügen bzw. zu dem Gesamtbild zu verschmelzen, ist beispielsweise so entworfen, dass Annahmen über die Einhaltung bestimmter Parameter der vorbeschriebenen Komponenten der Multiaperturabbildungsvorrichtung 150 eingehalten werden sollten, damit die Qualität des Gesamtbildes eine bestimmte Vorgabe erfüllt oder der Algorithmus überhaupt angewendet werden kann. Beispielsweise geht der Algorithmus von der Einhaltung eines oder mehrerer der folgenden Annahmen aus:

1) Die Optik-zu-Bildsensorbereich-Abstände entlang der x-Achse sind für alle optischen Kanäle 16a-d gleich;

2) Die relative Lage der Teilgesichtsfelder 74a-d und insbesondere der Überlapp zwischen denselben entspricht einer vorbestimmten Vorgabe oder weicht von letzterer um weniger als eine vorbestimmte Maximalabweichung ab.

Aus unterschiedlichen Gründen kann es nun aber sein, dass eine oder mehrere der soeben genannten Annahmen nicht eingehalten werden oder nicht ausreichend eingehalten werden. Gründe für das Nicht-Einhalten können beispielsweise in der Nicht-Einhaltung von Herstellungsvarianzen bestehen, wie z. B. Ungenauigkeiten der relativen Lagen der Optiken 64a-d zueinander und relativ zu dem Bildsensor 12. Herstellungsungenauigkeiten können auch eine Ungenauigkeit des Einbaus der Spiegelumlenkvorrichtung 18 und ggf. der relativen Lagen der Facetten 68a-d zueinander umfassen, wenn die Strahlumlenkeinrichtung 18 Facetten 68a-d aufweist. Zusätzlich oder alternativ zu den herstellungsbedingten Toleranzabweichungen können Temperaturschwankungen dafür sorgen, dass eine oder mehrere der oben genannten Annahmen nicht zutreffen oder nicht ausreichend eingehalten wird.

Bis zu einem gewissen Maße kann der durch den Prozessor 112 ausgeführte Algorithmus zur Zusammenfügung bzw. Verschmelzung der Bilder der Bildsensorbereiche 58a-d zu dem Gesamtbild ggf. Abweichungen von einer optimalen Ausrichtung und Anordnung der Komponenten ausgleichen, wie z. B. Abweichungen der Positionen der Teilgesichtsfelder 74a-d innerhalb des Gesamtgesichtsfeldes 72 von einer Sollkonstellation relativer Lagen der Teilgesichtsfelder zueinander. Beim Zusammenfügen bzw. Verschmelzen der Bilder könnte der Prozessor 112 beispielsweise in einem gewissen Maße solche Abweichungen ausgleichen. Bei Überschreitung gewisser Abweichungsgrenzen jedoch (Nicht-Einhaltung der Annahme 2) würde beispielsweise der Prozessor 112 nicht in der Lage sein, die Abweichungen auszugleichen.

Eine Herstellung der Multiaperturabbildungsvorrichtung 150 so, dass die soeben erwähnten Annahmen stets eingehalten werden, wie z. B. über einen gewissen Temperaturbereich hinweg, tendiert aber dazu, Herstellungskosten der Multiaperturabbildungsvorrichtung 150 zu erhöhen. Um dies zu vermeiden, umfasst die Multiaperturabbildungsvorrichtung 150 von Fig. 22a eine Einstelleinrichtung 116 zum kanalindividuellen Ändern einer relativen Lage zwischen dem Bildsensorbereich 58i eines jeweiligen optischen Kanals 16i, der Optik 64i des jeweiligen optischen Kanals 16i und der Strahlumlenkeinrichtung 18 bzw. des entsprechenden Segments 68i derselben oder zum kanalindividuellen Ändern einer optischen Eigenschaft 16i oder einer optischen Eigenschaft des die Umlenkung des Strahlengangs des jeweiligen optischen Kanals betreffenden Segments 68i der Strahlumlenkeinrichtung 18. Die Einstelleinrichtung 116 wird durch Vorgabewerte angesteuert bzw. führt die Einstellungsaufgaben gemäß den Vorgabewerten durch. Diese werden durch einen Speicher 118 und/oder eine Steuerung 122 bereitgestellt, die im Folgenden erläutert werden.

Die Vorrichtung 150 besitzt beispielsweise einen Speicher 118 mit eingespeicherten Vorgabewerten zur kanalindividuellen Ansteuerung der Einstelleinrichtung 116. Die Vorgabewerte können herstellerseitig vorgegeben und in den Speicher 118 eingespeichert sein. Zusätzlich kann der Prozessor 112 beispielsweise, wie es in Fig. 22a mit einer gestrichelten Linie 124 angedeutet ist, über Auswertungen von aufgenommenen Bildern der Bildsensorbereiche 58a-d, wie z. B. Bildern, die von dem Prozessor 112 zusammenzufügen bzw. zu einem Gesamtbild zu verschmelzen sind, in der Lage sein, die eingespeicherten Vorgabewerte in dem Speicher 118 zu verbessern bzw. zu aktualisieren. Beispielsweise nimmt der Prozessor 112 eine Szene auf, indem die Multiaperturabbildungsvorrichtung 150 über die Einstelleinrichtung 116 mit aktuellen eingespeicherten Vorgabewerten eingestellt wird, wie es im Nachfolgenden noch näher beschrieben wird. Dazu werden die Vorgabewerte aus dem Speicher 118 gelesen und durch die Einstelleinrichtung 116 zur kanalindividuellen Einstellung verwendet. Der Prozessor 112 gewinnt durch Analyse der so aufgenommenen Bilder der Bildsensorbereiche 58a-d Informationen darüber, wie die eingespeicherten und soeben zur Aufnahme verwendeten Vorgabewerte in dem Speicher 118 modifiziert werden sollten, um bei der nächsten Aufnahme unter Verwendung dieser verbesserten bzw. aktualisierten Vorgabewerte bei der nächsten Aufnahme zu einer genaueren bzw. verbesserten Einhaltung obiger Annahmen zu führen.

Die eingespeicherten Vorgabewerte können einen vollständigen Satz von Einstellwerten aufweisen, d. h. eine Satz von Einstellwerten, um die Vorrichtung 150 komplett einzustellen. Sie sind wie oben beschrieben und unten weiter ausgeführt ausgewählt, um bestimmte kanalindividuelle Abweichungen der optischen Eigenschaften der Kanäle von einer Sollcharakteristik zu verringern oder zu beseitigen

Es kann sein, dass die Vorgabewerte mehrere Sätze von Einstellwerten, wie z. B. einen pro einer Folge von aneinander anschließenden Temperaturintervallen, aufweisen, so dass für eine Bildaufnahme stets der Satz von Einstellwerten verwendet wird, der für eine aktuelle Situation gerade geeignet ist. Dazu kann beispielsweise die Steuerung 122 einen Zugriff bzw. einen Nachschlag in die Tabelle von Zuordnungen zwischen Vorgabewertsätzen und unterschiedlichen vorbestimmten Situationen in dem Speicher 118 ausführen. Die Steuerung 122 erhält für diesen Zugriff Sensordaten, die die aktuelle Situation widerspiegeln, wie z. B. Daten betreffend Temperatur, Druck, Feuchte, Lage der Vorrichtung 150 im Raum und/oder eine momentane Beschleunigung oder momentane Drehrate der Vorrichtung 150, und bestimmt aus diesen Daten einen aus den mehreren Vorgabewertsätzen in dem Speicher 118, nämlich denjenigen, der der vorbestimmten Situation zugeordnet ist, die der aktuellen Situation, wie sie durch die Sensordaten beschrieben wird, am nächsten kommt. Sensordaten können auch aus den Bildsensordaten der Bildsensorbereiche selbst gewonnen sein. Beispielsweise wird durch die Steuerung 122 ein Satz ausgewählt, in dessen zugehöriges Temperaturintervall die aktuelle Temperatur fällt. Die für eine bestimmte Bildaufnahme durch die Einstelleinrichtung 116 verwendeten Vorgabewerte des ausgewählten Satzes aus dem Speicher 118 können dann wieder aktualisiert werden, wenn die optionale Rückkopplung 124 verwendet wird.

Die eingespeicherten Vorgabenwerte können zum Beispiel derart ausgebildet sein, dass ein Maß für eine Dispersion einer Verteilung eines oder mehrerer Eigenschaften unter den optischen Kanäle durch die Ansteuerung der Einstellvorrichtung mittels der eingespeicherten Vorgabenwerte reduziert wird, nämlich eine transversale Abweichung der Teilgesichtsfelder von einer regelmäßigen Verteilung der Teilgesichtsfelder, Brennweiten der Optiken, oder Schärfentiefentfernungen der optischen Kanäle.

Alternativ könnten die Vorgabewerte in der Steuerung 122 ohne einen Speicher 118 ermittelt werden, nämlich indem beispielsweise in der Steuerung 122 eine Abbildung von den aktuellen Sensordaten auf geeignete Vorgabewerte fest integriert ist. Die Abbildung kann durch einen funktionellen Zusammenhang zwischen Sensordaten und Vorgabewerten beschrieben sein. Der funktionelle Zusammenhang könnte durch Parameter adaptierbar sein. Die Parameter könnten über die Rückkopplung 124 adaptiert werden.

Der Speicher 118 kann beispielsweise ein nichtflüchtiger Speicher sein. Möglicherweise handelt es sich um einen Nurlesespeicher, aber ein wiederbeschreibbarer Speicher ist ebenfalls möglich. Die Steuerung 122 und der Prozessor 112 können in Software, Hardware oder in programmierbarer Hardware implementiert sein. Es kann sich um auf einem gemeinsamen Mikroprozessor ausgeführte Programme handeln. Die Sensoren zur Lieferung der Sensordaten für die Steuerung 122 können zur Vorrichtung 150 gehören, wie z. B. die Bildsensorbereiche, oder aber externe Komponenten sein, wie Komponenten des Geräts, in das die Vorrichtung eingebaut ist, wie es bezüglich nachfolgender Figuren noch erläutert wird.

Nachfolgend werden nun mögliche Ausgestaltungen für die Einstelleinrichtung 116 beschrieben. Die Einstelleinrichtung 116 von Fig. 22a kann dabei auf eine, mehrere oder alle der nachfolgend beschriebenen Ausgestaltungsvarianten zutreffen. Auf spezielle Kombinationen wird ebenfalls nachfolgend eingegangen.

In der gezeigten Variante umfasst die Einstelleinrichtung 116 beispielsweise einen Aktor 126i für jeden Kanal 16i, der die Optik 64i des entsprechenden Kanals 16i in axialer Richtung entlang der optischen Achse 17i bzw. längs des Strahlengangs und/oder transversal bzw. quer dazu entlang der z-Achse und/oder der y-Achse bewegt. Alternativ könnte der Aktor 126i beispielsweise auch den Bildsensor 12 oder einen einzelnen Bildsensorbereich 58i bewegen. Ganz allgemein könnte der Aktor 126i eine relative Bewegung von Bildsensorbereich 58i, Optik 64i und/oder dem entsprechenden Segment 64i der Strahlumlenkeinrichtung 18 bewirken.

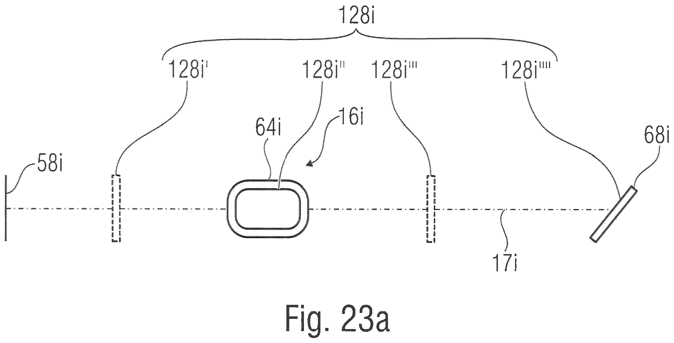

Gemäß einer Variante, auf die sich Fig. 23a bezieht, umfasst die Einstelleinrichtung 116 ein phasenänderndes optisches Element bzw. ein Phasenänderungselement 128i für jeden Kanal 16i, das, wie in Fig. 23a angedeutet, in die jeweilige Optik 64ai integriert sein kann (128i"), in das Segment 68i integriert sein kann (128i""), zwischen Bildsensorbereich 58i und Optik 64i (128i') oder zwischen Optik 64i und Strahlumlenkeinrichtungssegment 68i (128i‴) positioniert sein kann, wobei auch Kombinationen der vorerwähnten Möglichkeiten möglich sind. Das phasenändernde optische Element 128i kann beispielsweise eine ortsabhängige Änderung eines Brechungsindex, also eine lokale Verteilung desselben, bewirken, wie z. B. durch Flüssigkeitskristalle. Alternativ oder zusätzlich bewirkt das phasenändernde optische Element 128i eine Änderung der Form einer optisch aktiven Oberfläche, wie z. B. durch Nutzung von Piezos, die auf flexible, feste, transparente Materialien mechanisch einwirken und eine Verformung bewirken oder durch Nutzung des Elektrobenetzungseffekts. Das Phasenänderungselement 128i" könnte beispielsweise den Brechungsindex der Optik 64i ändern. Alternativ könnte das Phasenänderungselement 128i" eine Form einer optischen Linsenfläche der Optik 64i verändern und dadurch die effektive Brechkraft der Optik 64i verändern. Das Phasenänderungselement 128i‴ könnte beispielsweise auf einer optisch relevanten Oberfläche der Segmente 68i, wie z. B. auf der reflektiven Facette, ein sinusförmiges Phasengitter erzeugen, um eine virtuelle Verkippung der entsprechenden Oberfläche zu bewirken. Auf ähnliche Weise könnte das Phasenänderungselement 128i' oder Phasenänderungselement 128i" die optische Achse umlenken.

In anderen Worten ausgedrückt, kann die Phasenänderung, die durch das phasenändernde optische Element 128i bewirkt wird, weitgehend rotationssymmetrisch, wie z. B. rotationssymmetrisch um die optische Achse 17i sein, und somit in dem Fall 128i" beispielsweise eine Änderung der Brennweite der Optik 64i bewirken. Die Phasenänderung, die durch das Element 128i bewirkt wird, kann allerdings auch weitgehend linear sein, wie z. B. linear entlang der z-Achse oder linear entlang der y-Achse, um eine Änderung des Ablenkwinkels bzw. eine Ablenkung der optischen Achse 17i in der entsprechenden Richtung zu bewirken.

Die rotationssymmetrische Phasenänderung kann zur Fokussierung verwendet werden, und die lineare Phasenänderung zur Lagekorrektur des Teilgesichtsfeldes des entsprechenden optischen Kanals 16i.

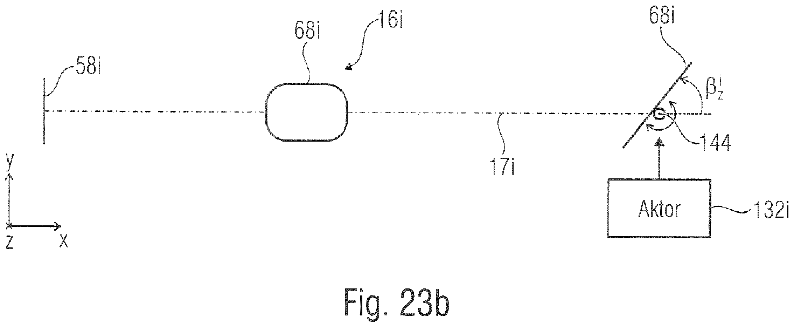

Gemäß einer weiteren Variante, die in Fig. 23b dargestellt ist, umfasst die Einstelleinrichtung 116 für jeden Kanal 16i einen Aktor 132i, der das Segment 68i, wie z. B. die reflektierende Facette des jeweiligen Kanals 16i, in seiner Winkelorientierung bezüglich der optischen Achse 17i ändert, d. h. den Anstellwinkel $\beta_x^i$. Dabei sei erwähnt, dass das Segment 68i nicht auf eine reflektierende Facette beschränkt ist. Jedes Segment 68i könnte auch als Prisma ausgebildet sein, das die Richtung der optischen Achse 17i in der yz-Ebene umlenkt, während das Prisma von dem Strahlengang des optischen Kanals 16i durchlaufen wird.

Zur Realisierung der relativen Bewegungen durch die Aktoren 126i bzw. 132i, d. h. zur Erzeugung der Bewegung der Optik 68i, die beispielsweise translatorisch ausgeführt sein kann, sowie zum Verkippen des Segments 68i durch den Aktor 132i und die z-Achse, kann beispielsweise ein pneumatischer, hydraulischer, piezoelektrischer, thermischer, elektrostatischer oder elektrodynamischer Antrieb oder ein DC- oder Schrittmotor oder wiederum ein Tauchspulenantrieb verwendet werden.

Zurückkehrend zur Fig. 22a ist mit gestrichelten Linien angedeutet, dass die Multiaperturabbildungsvorrichtung 150 optional zusätzlich zu der Einstelleinrichtung 116 einen oder mehrere Aktoren 134 zum Erzeugen einer kanalglobalen, d. h. für alle optischen Kanäle 16a-d gleiche, Relativbewegung zwischen Bildsensor 12, Optikarray 14 und Strahlumlenkeinrichtung 18 umfassen kann. Der eine oder die mehreren zusätzlichen Aktoren 134 kann/können dabei, wie es in Fig. 22a angedeutet ist, Teil einer optional vorhandenen Autofokussteuerung 136 (Autofokus/Fokusiereinrichtung) und/oder einer optional vorhandenen Bildstabilisierungssteuerung der Multiaperturabbildungsvorrichtung sein.

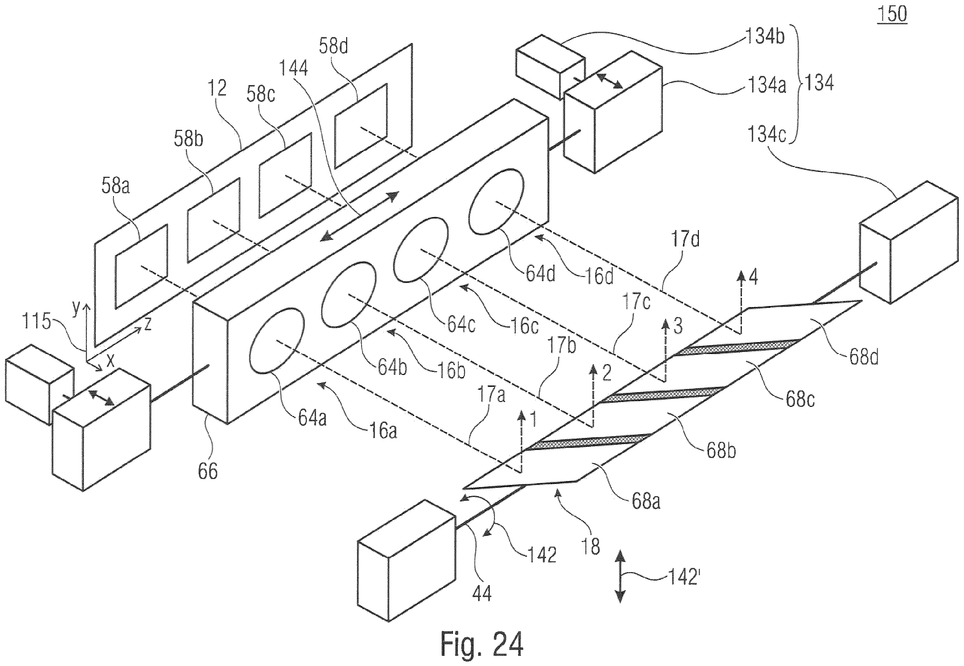

Ein konkreter Fall ist in Fig. 24 gezeigt. Fig. 24 zeigt die Multiaperturabbildungsvorrichtung 150 von Fig. 22a, wobei die Optiken 64a-d der optischen Kanäle 16a-d über den gemeinsamen Träger 66 gegeneinander mechanisch fixiert sind. Über diesen gemeinsamen Halter ist es nun möglich, die Optiken 64a-d einer globalen für alle Kanäle gleichen Bewegung zu unterziehen, wie z. B. durch eine translatorische Bewegung des Trägers 66 in der z-Richtung, d. h. entlang der Zeilenerstreckungsrichtung des Arrays 14. Hierzu ist ein Aktor 134a vorgesehen. Der Aktor 134a erzeugt also eine translatorische Bewegung der Optiken 64a-d, die für alle optischen Kanäle 16a-d gleich ist, indem der Aktor 134a den gemeinsamen Träger 66 der translatorischen Bewegung entlang der x-Achse unterzieht. Hinsichtlich des Typs von Aktor 134a wird auf die Beispiele hingewiesen, auf die Bezug nehmend auf die Fig. 23a und 23b hingewiesen wurde. Ferner umfasst die Vorrichtung 150 einen Aktor 134b zum kanalglobalen, d. h. für alle optischen Kanäle 16a-d gleichen, Ändern des Bildsensor-58i-zu-Optik-64i-Abstands entlang der x-Achse bzw. entlang der optischen Achse 17i. Wie es in Fig. 24 angedeutet ist, unterzieht beispielsweise der Aktor 134b die Optiken 64a-d der translatorischen Bewegung entlang der z-Achse zur Änderung des Abstands von den zugeordneten Bildsensorabschnitten 58a-d nicht über den Träger 66, sondern auch via den Aktor 134a, der somit ebenfalls der translatorischen Bewegung entlang der x-Achse unterzogen wird und quasi als Aufhängung für den Träger 66 dient.

Zusätzlich umfasst die Vorrichtung 150 von Fig 17 einen Aktor 134c zum Drehen der Strahlumlenkeinrichtung 18 um eine Achse, die parallel zur z-Achse verläuft und in oder nicht weit entfernt von der Ebene liegt, in welcher die optischen Achsen 17a-d verlaufen. Auch bezüglich der Aktoren 134b und 134c wird bezüglich möglicher Implementierungsbeispiele auf die Auflistung von Beispielen verwiesen, die Bezug nehmend auf die Fig. 23a und 23b im Vorhergehenden geliefert wurde. Die Rotationsbewegung bzw. Drehbewegung, die durch den Aktor 134c auf die Strahlumlenkeinrichtung 18 ausgeübt wird, wirkt sich auf die Segmente 68a-d der Strahlumlenkeinrichtung 18 für alle Kanäle 16a-d gleichermaßen aus, d. h. ist kanalglobal.

Über den Aktor 134b ist nun die Autofokussteuerung 136 beispielsweise in der Lage, den Fokus einer Aufnahme durch die Vorrichtung 150 vermittels der Kanäle 16a-d im kanalglobalen Sinne zu steuern. Die Bildstabilisierungssteuerung 138 ist in der Lage, das Gesamtgesichtsfeld 72 vermittels des Aktors 134c in einer ersten Richtung 142 und vermittels des Aktors 134a in einer dazu senkrechten Richtung 144 vor Verwacklungen durch einen Benutzer beispielsweise zu stabilisieren. Die erste Richtung 142 kann durch eine Rotationsbewegung um die Rotationsachse 44 erhalten werden. Wie es durch die erste Richtung 142' angedeutet ist, kann alternativ oder zusätzlich auch eine translatorische Bewegung der Strahlumlenkeinrichtung 18 und/oder des Arrays 14 von dem Aktor 134 erzeugt werden. Die Richtungen 142, 142' und 144 können dabei parallel zu den Bildachsen sein, in einer Ebene der Richtung oder diesen entsprechen. Hierin beschriebene Bildstabilisatoren können ausgebildet sein, um für zwei, eine Vielzahl oder alle Strahlengänge der optischen Kanäle gemeinsam zu wirken. Das bedeutet, auf eine kanalindividuelle Bildstabilisierung kann verzichtet werden, was vorteilhaft ist.

Beispielsweise weist dazu die Vorrichtung 150 von Fig. 22a für jeden Kanal 16a-d einen Aktor, etwa einen Aktor 126i für jeden Kanal 16i auf, um die Bildsensorbereiche 58a-d kanalindividuell einer translatorischen Bewegung entlang der z-Achse und/oder entlang der y-Achse zu unterziehen, um beispielsweise Herstellungsungenauigkeiten oder temperaturbedingte Drifts der Teilgesichtsfelder innerhalb des Gesamtgesichtsfeldes auszugleichen. Die Vorrichtung 150 von Fig. 22a könnte alternativ oder zusätzlich einen Aktor 128i" aufweisen, um Brennweitenunterschiede der Optiken 64a-d, die herstellungsbedingt unerwünschter Weise aufgetreten sind, auszugleichen. Zusätzlich oder alternativ kann die Vorrichtung 150 von Fig. 22a einen Aktor 128i'" aufweisen, um herstellungsbedingt oder temperaturbedingt entstandene Abweichungen der relativen Neigungen der Segmente 68a-d untereinander so zu kompensieren, dass die relativen Neigungen zu der gewünschten Abdeckung des Gesamtgesichtsfeldes 72 durch die Teilgesichtsfelder 74a-d führen. Zusätzlich oder alternativ kann die Vorrichtung 150 dann schließlich noch Aktoren des Typs 128i' bzw. 128i'" aufweisen.

Noch einmal zusammenfassend kann die Vorrichtung 150 also einen Aktor 134c aufweisen, der ausgebildet ist, um die Strahlumlenkeinrichtung 18 um eine Achse zu drehen, die parallel zu der Zeilenerstreckungsrichtung z des Arrays 14 ist. Die Drehachse liegt beispielsweise in der Ebene der optischen Achsen 17a-d oder davon weniger als ein Viertel eines Durchmessers der Optiken 64a-d entfernt. Alternativ wäre es natürlich auch möglich, dass die Drehachse weiter entfernt liegt, wie z. B. weniger als ein Optikdurchmesser oder weniger als vier Optikdurchmesser. Der Aktor 134c kann beispielsweise vorgesehen sein, um die Strahlumlenkeinrichtung 18 mit kurzer Ansprechzeit in einem lediglich kleinen Winkelbereich, wie z. B. innerhalb einer Spanne von weniger als 5° oder weniger als 10° zu drehen, um Verwacklungen der Multiaperturabbildungsvorrichtung 150 durch beispielsweise einen Benutzer während einer Aufnahme auszugleichen. Der Aktor 134c würde in diesem Fall beispielsweise von der Bildstabilisierungssteuerung 138 angesteuert werden.

Alternativ oder zusätzlich könnte Aktor 134c ausgebildet sein, um mit größeren Winkelverstellungen das Gesamtgesichtsfeld 72, das durch die Gesamtabdeckung der Teilgesichtsfelder 74a-d (Fig. 22a) definiert wird, in seiner Richtung zu verändern. Dabei wäre es ferner möglich, dass durch Rotation der Strahlumlenkeinrichtung 18 auch Ablenkungen erzielt werden, bei denen das Gesamtgesichtsfeld in der entgegengesetzten Richtung relativ zu der Vorrichtung 150 angeordnet ist, indem beispielsweise die Strahlumlenkeinrichtung 18 als ein beidseitig reflektives Spiegelarray ausgebildet ist.

Wiederum alternativ oder zusätzlich kann die Vorrichtung 150 einen Aktor 134a aufweisen, der ausgebildet ist, um die Optiken 64a-d vermittels des Substrats 66 bzw. das Substrat 66 selbst und damit die Optiken 64a-d translatorisch entlang der Zeilenerstreckungsrichtung zu bewegen. Der Aktor 134a könnte beispielsweise ebenfalls durch die vorerwähnte Bildstabilisierungssteuerung angesteuert werden, um durch die Bewegung 96 entlang der Zeilenerstreckungsrichtung eine Bildstabilisierung quer zu der Bildstabilisierung zu erzielen, die durch die Rotation der Spiegelumlenkvorrichtung 18 verwirklicht wird.

Weiterhin kann zusätzlich oder alternativ die Vorrichtung 150 einen Aktor 134b zum Verändern des bildseitigen Abstands zwischen Bildsensor 12 und Optiken 64a-d bzw. zwischen Bildsensor 12 und Körper 66 aufweisen, um eine Schärfentiefeneinstellung zu erzielen, vgl. Fig. 20. Die Einrichtung 98 kann durch eine manuelle Benutzersteuerung oder durch eine Autofokussteuerung der Vorrichtung 150 gesteuert werden.

Der Aktor 134a dient also als Aufhängung des Substrats 66 und ist vorzugsweise, wie in Fig. 22a angedeutet seitlich neben dem Substrat 66 entlang der Zeilenerstreckungsrichtung angeordnet, um die Bauhöhe nicht zu erhöhen. Auch für die Aktoren 134b und 134c gilt, dass selbige vorzugsweise in der Ebene der optischen Strahlengänge angeordnet sind, um die Bauhöhe nicht zu erhöhen.

Es sei darauf hingewiesen, dass die Optiken 64a-d nicht nur untereinander, wie z. B. über das schon erwähnte transparente Substrat, sondern auch relativ zu der Strahlumlenkeinrichtung in konstanter relativer Lage gehaltert sein können, wie z. B. über einen geeigneten Rahmen, der vorzugsweise die Bauhöhe nicht vergrößert und deshalb vorzugsweise in der Ebene der Komponenten 12, 14 und 66 bzw. in der Ebene der Strahlengänge verläuft. Die Konstanz der relativen Lage könnte sich auf den Abstand zwischen Optiken und Strahlumlenkeinrichtung entlang der optischen Achsen beschränken, so dass der Aktor 134b beispielsweise die Optiken 64a-d zusammen mit der Strahlumlenkeinrichtung 18 translatorisch entlang der optischen Achsen bewegt. Der Optiken-zu-Strahlumlenkeinrichtung-Abstand könnte auf einen minimalen Abstand eingestellt sein, so dass der Strahlengang der Kanäle nicht durch die Segmente der Strahlumlenkeinrichtung 18 lateral eingeschränkt wird, was die Bauhöhe verringert, da andernfalls die Segmente 68i hinsichtlich der lateralen Ausdehnung für den größten Optiken-zu-Strahlumlenkeinrichtung-Abstand dimensioniert sein müssten, um den Strahlengang nicht einzuschneiden. Zusätzlich könnte die Konstanz der relativen Lage bedeuten, dass vorerwähnter Rahmen die Optiken und die Strahlumlenkeinrichtung entlang der z-Achse starr zueinander haltert, sodass der Aktor 134a die Optiken 64a-d zusammen mit der Strahlumlenkeinrichtung translatorisch entlang der Zeilenerstreckungsrichtung bewegen würde.

Die oben beschriebene Strahlumlenkeinrichtung 18 zum Umlenken des Strahlengangs der optischen Kanäle ermöglicht zusammen mit dem Aktor 134c zur Erzeugung der Rotationsbewegung der Strahlumlenkeinrichtung 18 und dem Aktor 134a einer optischen Bildstabilisierungssteuerung der Multiaperturabbildungsvorrichtung 150 eine Bild- bzw. Gesamtbildfeldstabilisierung in zwei Dimensionen, nämlich durch die translatorische Bewegung des Substrats 66 eine Bildstabilisierung entlang einer ersten Bildachse, die im Wesentlichen parallel zur Zeilenerstreckungsrichtung verläuft, und durch die Erzeugung der Rotationsbewegung der Strahlumlenkeinrichtung 18 eine Bildstabilisierung entlang einer zweiten Bildachse, die im Wesentlichen parallel zu den optischen Achsen vor bzw. ohne Strahlumlenkung verläuft, oder - betrachtet man die umgelenkten optischen Achsen - senkrecht zu den optischen Achsen und der Zeilenerstreckungsrichtung. Zusätzlich kann die beschriebene Anordnung eine translatorische Bewegung der im angesprochenen Rahmen fixierten Strahlumlenkeinrichtung und des Arrays 14 senkrecht zur Zeilenerstreckungsrichtung bewirken, wie z. B. durch den beschriebenen Aktor 54, die für die Realisierung einer Fokuseinstellung und damit einer Autofokusfunktion genutzt werden kann.

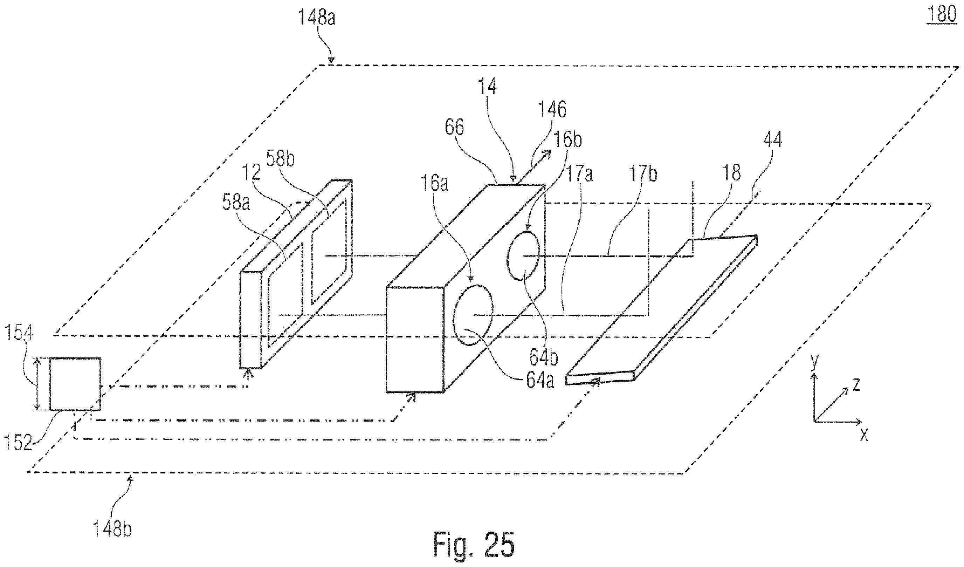

Fig. 25 zeigt eine schematische Ansicht einer Multiaperturabbildungsvorrichtung 180 zur Verdeutlichung einer vorteilhaften Anordnung von Aktoren, etwa zur Bildstabilisierung und/oder zur Einstellung eines Fokus. Der Bildsensor 12, das Array 14 und die Strahlumlenkeinrichtung 18 können einen Quader im Raum aufspannen. Der Quader kann auch als virtueller Quader verstanden werden und kann beispielsweise ein minimales Volumen und insbesondere eine minimale senkrechte Ausdehnung entlang einer Richtung parallel zu der y-Richtung bzw. einer Dickenrichtung aufweisen und den Bildsensor 12, das einzeilige Array 14 und die Strahlumlenkeinrichtung 18 umfassen. Das minimale Volumen kann auch so verstanden werden, dass es einen Quader beschreibt, der durch die Anordnung und/oder betriebsgemäße Bewegung des Bildsensors 12, des Arrays 14 und/oder der Strahlumlenkeinrichtung 18 aufgespannt ist. Das Array 14 kann eine Zeilenerstreckungsrichtung 146 aufweisen, entlang derer die optischen Kanäle 16a und 16b nebeneinander, ggf. parallel zueinander, angeordnet sind. Die Zeilenerstreckungsrichtung 146 kann ortsfest im Raum angeordnet sein.

Der virtuelle Quader kann zwei Seiten aufweisen, die gegenüberliegend parallel zueinander, parallel zu der Zeilenerstreckungsrichtung 146 des einzeiligen Arrays 14 sowie parallel zu einem Teil des Strahlengangs 17a und/oder 17b der optischen Kanäle 16a bzw. 16b zwischen dem Bildsensor 12 und der Strahlumlenkeinrichtung 18 ausgerichtet sind. Vereinfacht, jedoch ohne einschränkende Wirkung, können dies beispielsweise eine Oberseite und eine Unterseite des virtuellen Quaders sein. Die zwei Seiten können eine erste Ebene 148a und eine zweite Ebene 148b aufspannen. D. h., die beiden Seiten des Quaders können jeweils Teil der Ebene 148a bzw. 148b sein. Weitere Komponenten der Multiaperturabbildungsvorrichtung können vollständig, zumindest aber teilweise innerhalb des Bereiches zwischen den Ebenen 148a und 148b angeordnet sein, so dass ein Bauraumbedarf der Multiaperturabbildungsvorrichtung 180 entlang einer Richtung parallel zu einer Oberflächennormalen der Ebenen 148a und/oder 148b gering ist, was vorteilhaft ist. Ein Volumen der Multiaperturabbildungsvorrichtung kann einen geringen oder minimalen Bauraum zwischen den Ebenen 148a und 148b aufweisen. Entlang der lateralen Seiten oder Erstreckungsrichtungen der Ebenen 148a und/oder 148b kann ein Bauraum der Multiaperturabbildungsvorrichtung groß oder beliebig groß sein. Das Volumen des virtuellen Quaders ist bspw. von einer Anordnung des Bildsensors 12, des einzeiligen Arrays 14 und der Strahlumlenkeinrichtung 18 beeinflusst, wobei die Anordnung dieser Komponenten gemäß der hierin beschriebenen Ausführungsbeispiele so erfolgen kann, dass der Bauraum dieser Komponenten entlang der Richtung senkrecht zu den Ebenen und mithin der Abstand der Ebenen 148a und 148b zueinander gering oder minimal wird. Gegenüber anderen Anordnungen der Komponenten kann das Volumen und/oder der Abstand anderer Seiten des virtuellen Quaders vergrößert sein.

Die Multiaperturabbildungsvorrichtung 180 umfasst eine Aktoreinrichtung 152 zum Erzeugen einer Relativbewegung zwischen dem Bildsensor 12, dem einzeiligen Array 14 und der Strahlumlenkeinrichtung 18. Die Aktoreinrichtung 152 ist zumindest teilweise zwischen den Ebenen 148a und 148b angeordnet. Die Aktoreinrichtung 152 kann ausgebildet sein, um zumindest eines aus dem Bildsensor 12, dem einzeiligen Array 14 oder der Strahlumlenkeinrichtung 18 rotatorisch um zumindest eine Achse und/oder translatorisch entlang einer oder mehrerer Richtungen oder zu bewegen. Hierfür kann die Aktoreinrichtung 152 zumindest einen Aktor aufweisen, etwa den Aktor 128i, 132i und/oder 134, zum kanalindividuellen Ändern einer relativen Lage zwischen dem Bildsensorbereich 58i eines jeweiligen optischen Kanals 16i, der Optik 64i des jeweiligen optischen Kanals 16i und der Strahlumlenkeinrichtung 18 bzw. des entsprechenden Segments 68i derselben oder zum kanalindividuellen Ändern einer optischen Eigenschaft 16i oder einer optischen Eigenschaft des die Umlenkung des Strahlengangs des jeweiligen optischen Kanals betreffenden Segments 68i der Strahlumlenkeinrichtung 18. Alternativ oder zusätzlich kann die Aktoreinrichtung einen Autofokus und/oder eine optische Bildstabilisierung implementieren, wie es vorangehend beschrieben ist.

Die Aktoreinrichtung 152 kann eine Abmessung oder Ausdehnung 154 parallel zu der Dickenrichtung aufweisen. Ein Anteil von höchstens 50 %, höchstens 30 % oder höchstens 10 % der Abmessung 154 kann ausgehend von einem Bereich zwischen den Ebenen 148a und 148b über die Ebene 148a und/oder 148b hinausragen oder aus dem Bereich herausragen. Das bedeutet, dass die Aktoreinrichtung 152 höchstens unwesentlich über die Ebene 148a und/oder 148b hinausragt. Gemäß Ausführungsbeispielen ragt die Aktoreinrichtung 152 nicht über die Ebenen 148a und 148b hinaus. Vorteilhaft daran ist, dass eine Ausdehnung der Multiaperturabbildungsvorrichtung 180 entlang der Dickenrichtung durch die Aktoreinrichtung 152 nicht vergrößert wird.

Obwohl die 3D-Multiaperturabbildungsvorrichtung 1000 so beschrieben ist, dass sie eine Anzahl von zumindest zwei Multiaperturabbildungsvorrichtungen 11 aufweist, die gleich oder von einander verschieden gebildet sein können.

Alternativ oder zusätzlich kann eine 3D-Multiaperturabbildungsvorrichtung 1000 auch mehr als zwei Multiaperturabbildungsvorrichtungen aufweisen, die gleich oder von einander verschieden gebildet sein können. Das Ausgangssignal kann einen entsprechenden Datenheader und/oder entsprechende Nutzinformationen aufweisen.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Ein erfindungsgemäß codiertes Signal, wie beispielsweise ein Bild- oder Videosignal, kann auf einem digitalen Speichermedium gespeichert sein oder kann auf einem Übertragungsmedium wie beispielsweise einem drahtlosen Übertragungsmedium oder einem verdrahteten Übertragungsmedium, z.B. dem Internet, übertragen werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Vorrichtung (3000) zum Bearbeiten eines Eingangssignals (1006), das einen Datenheader (1008) und Nutzdaten aufweist, wobei der Datenheader (1008) eine Information bezüglich eines Aufbaus einer 3D-Multiaperturabbildungsvorrichtung (70; 1000) aufweist der Datenheader (1008) eine Information bezüglich einer Anzahl einer ersten Mehrzahl von optischen Kanälen ($14_1$) eines ersten Moduls der 3D-Mulatiaperturabbildungsvorrichtung oder einer zweiten Mehrzahl von optischen Kanälen ($14_2$) eines zweiten Moduls der 3D-Multiaperturabbildungsvorrichtung aufweist und wobei die Nutzdaten aus Pixeln erster Bildsensorbereiche ($58_{11}$, $58_{12}$, $58_{13}$, $58_{14}$) und zweiter Bildsensorbereiche ($58_{21}$, $58_{22}$, $58_{23}$, $58_{24}$) gewonnene Bildinformationen aufweisen, wobei sich die Bildinformationen der ersten und zweiten Bildsensorbereiche jeweils auf eine Mehrzahl von Teilgesichtsfeldern ($74_{11}$, $74_{12}$, $74_{13}$, $74_{14}$, $74_{21}$, $74_{22}$, $74_{23}$, $74_{24}$) eines Gesamtgesichtsfeldes (72) beziehen;:

   wobei der Datenheader (1008) in den Informationen bezüglich des Aufbaus eine Information bezüglich einer Segmentierung des Gesamtgesichtsfeldes (72) in erste Teilgesichtsfelder ($74_{11}$, $74_{12}$, $74_{13}$, $74_{14}$) des ersten Moduls oder zweite Teilgesichtsfelder ($74_{21}$, $74_{22}$, $74_{23}$, $74_{24}$) des zweiten Moduls und eine Zuordnung von optischen Kanäle zu den Teilgesichtsfeldern aufweist;
   wobei die Nutzdaten eine Information bezüglich eines durch ein Stitching-Verfahren aus einem Zusammensetzen von Teilbildern von Teilgesichtsfeldern berechneten Gesamtbildes aufweisen; wobei die Vorrichtung aufweist:

   eine Eingangsschnittstelle (1023) zum Empfangen des Eingangssignals (1006); und
   einen Prozessor (1002) zum Bearbeiten der Nutzdaten unter Berücksichtigung der Information bezüglich des Aufbaus der 3D-Multiaperturabbildungsvorrichtung (70; 1000) für zumindest erste Bildsensorinformationen eines ersten Teilgesichtsfeldes der Mehrzahl von Teilgesichtsfeldern ($74_{11}$, $74_{12}$, $74_{13}$, $74_{14}$, $74_{21}$, $74_{22}$, $74_{23}$, $74_{24}$) des ersten Moduls und eines zweiten Teilgesichtsfeldes der Mehrzahl von Teilgesichtsfeldern ($74_{11}$, $74_{12}$, $74_{13}$, $74_{14}$, $74_{21}$, $74_{22}$, $74_{23}$, $74_{24}$) des zweiten Moduls; und zum Ausführen einer an den Aufbau der 3D-Multiapeturabbildungvorrichtung angepassten Korrektur.

2. 3D-Multiaperturabbildungsvorrichtung (70; 1000) mit:

einem Bildsensor (12) mit einer Vielzahl von Bildsensorbereichen ($58_{11}$, $58_{12}$, $58_{13}$, $58_{14}$, $58_{21}$, $58_{22}$, $58_{23}$, $58_{24}$), wobei jeder Bildsensorbereich (58) eine Vielzahl von Pixeln umfasst; einer ersten Mehrzahl ($14_1$) von optischen Kanälen ($16_{11}$, $16_{12}$, $16_{13}$, $16_{14}$) eines ersten Moduls der 3D-Multiaperturabbildungsvorrichtung zum Abbilden sich überlappender erster Teilgesichtsfelder ($74_{11}$, $74_{12}$, $74_{13}$, $74_{14}$) eines Gesamtgesichtsfeldes (72) auf erste Bildsensorbereiche ($58_{11}$, $58_{12}$, $58_{13}$, $58_{14}$) des Bildsensors (12); einer zweiten Mehrzahl ($14_2$) von optischen Kanälen ($16_{21}$, $16_{22}$, $16_{23}$, $16_{24}$) eines zweiten Moduls der 3D-Multiaperturabbildungsvorrichtung zum Abbilden sich gegenseitig und mit den ersten Teilgesichtsfeldern überlappender zweiter Teilgesichtsfelder ($74_{21}$, $74_{22}$, $74_{23}$, $74_{24}$) des Gesamtgesichtsfeldes (72) auf zweite Bildsensorbereiche ($58_{21}$, $58_{22}$, $58_{23}$, $58_{24}$) des Bildsensors, wobei die erste und die zweite Mehrzahl von optischen Kanälen um einen Basisabstand (BA) voneinander lateral versetzt angeordnet sind; einem Prozessor (1002), der ausgebildet ist, um Bildsensordaten ($1004_{11}$, $1004_{12}$, $1004_{13}$, $1004_{14}$, $1004_{21}$, $1004_{22}$, $1004_{23}$, $1004_{24}$) von dem Bildsensor (12) zu empfangen, die Informationen über die auf die erste und zweite Mehrzahl von Bildsensorbereichen ($58_{11}$, $58_{12}$, $58_{13}$, $58_{14}$, $68_{21}$, $58_{22}$, $58_{23}$, $58_{24}$) abgebildeten ersten und zweiten Teilgesichtsfelder ($74_{11}$, $74_{12}$, $74_{13}$, $74_{14}$, $74_{21}$, $74_{22}$, $74_{23}$, $74_{24}$) aufweisen, und der ausgebildet ist, um ein Ausgangssignal (1006) für eine Vorrichtung gemäß Anspruch 1 bereitzustellen, das einen Datenheader (1008) und Nutzdaten (1012) aufweist, wobei der Datenheader (1008) eine Information bezüglich des Aufbaus der 3D-Multiaperturabbildungsvorrichtung (70; 1000) aufweist und wobei die Nutzdaten (1012) aus den Pixeln der ersten Bildsensorbereiche und der zweiten Bildsensorbereiche gewonnene Bildinformationen und eine Information bezüglich eines durch ein Stitching-Verfahren aus einem Zusammensetzen von Teilbildern von Teilgesichtsfeldern berechneten Gesamtbildes aufweisen; wobei der Prozessor (1002) ausgebildet ist, um das Ausgangssignal (1006) so zu bilden, dass der Datenheader (1008) eine Information bezüglich einer Anzahl der ersten Mehrzahl oder der zweiten Mehrzahl von optischen Kanälen ($14_1$, $14_2$) aufweist; wobei der Prozessor (1002) ausgebildet ist, um das Ausgangssignal (1006) so zu bilden, dass der Datenheader (1008) in den Informationen bezüglich des Aufbaus eine Information bezüglich einer Segmentierung des Gesamtgesichtsfeldes (72) in die ersten oder zweiten Teilgesichtsfelder ($74_{11}$, $74_{12}$, $74_{13}$, $74_{14}$, $74_{21}$, $74_{22}$, $74_{23}$, $74_{24}$) und eine Zuordnung von optischen Kanäle zu den Teilgesichtsfeldern aufweist.

3. 3D-Multiaperturabbildungsvorrichtung gemäß Anspruch 2, bei der Prozessor (1002) ausgebildet ist, um das Ausgangssignal (1006) so zu bilden, dass der Datenheader (1008) zumindest für einen ersten Bildsensorbereich (58) eine Information bezüglich einer Anzahl von Pixel bezüglich einer ersten Bilderstreckungsrichtung (142) und einer Anzahl von Pixel für eine zweite Bilderstreckungsrichtung (144) aufweist.

4. 3D-Multiaperturabbildungsvorrichtung gemäß einem der Ansprüche 2 oder 3, bei der Prozessor (1002) ausgebildet ist, um das Ausgangssignal (1006) so zu bilden, dass der Datenheader (1008) für zumindest einen der optischen Kanäle (16) eine Information bezüglich einer Raumkoordinate des zumindest einen optischen Kanals (16) in der 3D-Multiaperturabbildungsvorrichtung aufweist.

5. 3D-Multiaperturabbildungsvorrichtung gemäß einem der Ansprüche 2 bis 4, bei der der Prozessor (1002) ausgebildet ist, um das Ausgangssignal (1006) so zu bilden, dass der Datenheader (1008) eine Information bezüglich einer Pixelgröße zumindest eines der Pixel eines der ersten oder zweiten Bildsensorbereiche ($58_{11}$, $58_{12}$, $58_{13}$, $58_{14}$, $58_{21}$, $58_{22}$, $58_{23}$, $58_{24}$) aufweist.

6. 3D-Multiaperturabbildungsvorrichtung gemäß einem der Ansprüche 2 bis 5, bei der der Prozessor (1002) ausgebildet ist, um das Ausgangssignal (1006) so zu bilden, dass der Datenheader (1008) eine Information bezüglich eines Drucks einer die 3D-Multiaperturabbildungsoptik umgebenden Atmosphäre, einer Umgebungstemperatur der 3D-Multiaperturabbildungsoptik und/oder einer Betriebstemperatur der 3D-Multiaperturabbildungsoptik aufweist.

**7.** 3D-Multiaperturabbildungsvorrichtung gemäß einem der Ansprüche 2 bis 6, bei der der Prozessor (1002) ausgebildet ist, um das Ausgangssignal (1006) so zu bilden, dass der Datenheader (1008) eine Information bezüglich einer Verzeichnung zumindest eines optischen Kanals der 3D-Multiaperturabbildungsvorrichtung aufweist.

**8.** 3D-Multiaperturabbildungsvorrichtung gemäß einem der vorangehenden Ansprüche 2 bis 7, bei der der Prozessor (1002) ausgebildet ist, um das Ausgangssignal (1006) so zu bilden, dass der Datenheader (1008) eine Information bezüglich einer Vignettierung zumindest eines optischen Kanals der 3D-Multiaperturabbildungsvorrichtung aufweist.

**9.** 3D-Multiaperturabbildungsvorrichtung gemäß einem der Ansprüche 2 bis 8, bei der der Prozessor (1002) ausgebildet ist, um das Ausgangssignal (1006) so zu bilden, dass der Datenheader (1008) eine Information bezüglich eines defekten Pixels des Bildsensors (12) aufweist.

**10.** 3D-Multiaperturabbildungsvorrichtung gemäß einem der Ansprüche 2 bis 9, bei der der Prozessor (1002) ausgebildet ist, um das Ausgangssignal (1006) so zu bilden, dass die Nutzdaten eine Information bezüglich eines Zeilenumbruchs oder eines Spaltenumbruchs des erfassten Bildes aufweisen.

**11.** 3D-Multiaperturabbildungsvorrichtung gemäß einem der Ansprüche 2 bis 10, bei der die erste Mehrzahl ($14_1$) von optischen Kanälen in einem ersten einzeiligen Array ($14_1$) angeordnet ist, und bei der die zweite Mehrzahl von optischen Kanälen in einem zweiten einzeiligen Array ($14_2$) angeordnet ist.

**12.** 3D-Multiaperturabbildungsvorrichtung gemäß einem der Ansprüche 2 bis 11, ferner umfassend eine dritte Mehrzahl von optischen Kanälen zum Abbilden sich gegenseitig und mit den ersten Teilgesichtsfeldern überlappender dritter Teilgesichtsfelder des Gesamtgesichtsfeldes (72) auf dritte Bildsensorbereiche des Bildsensors, wobei die erste und die zweite Mehrzahl von optischen Kanälen um einen Basisabstand (BA) voneinander lateral versetzt angeordnet sind; wobei der Prozessor (1002) ausgebildet ist, um Bildsensordaten von dem Bildsensor (12) zu empfangen, die Informationen über die auf die dritte Mehrzahl von Bildsensorbereichen abgebildeten dritten Teilgesichtsfelder aufweisen, und ausgebildet ist, um das Ausgangssignal (1006) so bereitzustellen, dass die Nutzdaten (1012) aus den Pixeln der ersten Bildsensorbereiche, der zweiten Bildsensorbereiche und der dritten Bildsensorbereiche gewonnene Bildinformationen aufweisen.

**13.** Signal (1006) mit folgenden Merkmalen:

einem Datenheader (1008), der eine Information bezüglich eines Aufbaus einer 3D-Multiaperturabbildungsvorrichtung aufweist, wobei der Datenheader (1008) eine Information bezüglich einer Anzahl der ersten Mehrzahl von optischen Kanälen ($14_1$) eines ersten Moduls der 3D-Mulatiaperturabbildungsvorrichtung oder einer zweiten Mehrzahl von optischen Kanälen ($14_2$) eines zweiten Moduls aufweist; und wobei der Datenheader (1008) in den Informationen bezüglich des Aufbaus eine Information bezüglich einer Segmentierung des Gesamtgesichtsfeldes (72) in erste Teilgesichtsfelder ($74_{11}$, $74_{12}$, $74_{13}$, $74_{14}$) des ersten Moduls oder zweite Teilgesichtsfelder ($74_{21}$, $74_{22}$, $74_{23}$, $74_{24}$) des zweiten Moduls und eine Zuordnung von optischen Kanäle zu den Teilgesichtsfeldern aufweist; wobei das Signal aufweist: Nutzdaten (1012), die aus Pixeln erster Bildsensorbereiche ($58_{11}$, $58_{12}$, $58_{13}$, $58_{14}$) und zweiter Bildsensorbereiche ($58_{21}$, $58_{22}$, $58_{23}$, $58_{24}$) der 3D-Multiaperturabbildungsvorrichtung gewonnene Bildinformationen ($1004_{11}$, $1004_{12}$, $1004_{13}$, $1004_{14}$, $1004_{21}$, $1004_{22}$, $1004_{23}$, $1004_{24}$) und eine Information bezüglich eines durch ein Stitching-Verfahren aus einem Zusammensetzen von Teilbildern von Teilgesichtsfeldern berechneten Gesamtbildes aufweisen, wobei sich die Bildinformationen der ersten und zweiten Bildsensorbereiche jeweils auf eine Mehrzahl von Teilgesichtsfeldern ($74_{11}$, $74_{12}$, $74_{13}$, $74_{14}$, $74_{21}$, $74_{22}$, $74_{23}$, $74_{24}$) eines Gesamtgesichtsfeldes (72) beziehen.

**14.** Verfahren zum Bereitstellen eines Ausgangssignals (1006) einer 3D-Multiaperturabbildungsvorrichtung (70; 1000) mit folgenden Schritten:

Bereitstellen eines Bildsensors (12) mit einer Vielzahl von Bildsensorbereichen ($58_{11}$, $58_{12}$, $58_{13}$, $58_{14}$, $58_{21}$, $58_{22}$, $58_{23}$, $58_{24}$), wobei jeder Bildsensorbereich eine Vielzahl von Pixeln umfasst; Bereitstellen einer ersten Mehrzahl ($14_1$) von optischen Kanälen ($16_{11}$, $16_{12}$, $16_{13}$, $16_{14}$) zum Abbilden sich überlappender erster Teilgesichtsfelder ($74_{11}$, $74_{12}$, $74_{13}$, $74_{14}$) eines Gesamtgesichtsfeldes (72) auf erste Bildsensorbereiche ($58_{11}$, $58_{12}$, $58_{13}$, $58_{14}$) des Bildsensors; Bereitstellen einer zweiten Mehrzahl ($14_2$) von optischen Kanälen ($16_{21}$, $16_{22}$, $16_{23}$, $16_{24}$) zum Abbilden sich gegenseitig und mit den ersten Teilgesichtsfeldern ($74_{11}$, $74_{12}$, $74_{13}$, $74_{14}$)

überlappender zweiter Teilgesichtsfelder ($74_{21}$, $74_{22}$, $74_{23}$, $74_{24}$) des Gesamtgesichtsfeldes (72) auf zweite Bildsensorbereiche ($58_{21}$, $58_{22}$, $58_{23}$, $58_{24}$) des Bildsensors (12), wobei die erste und die zweite Mehrzahl von optischen Kanälen ($14_1$, $14_2$) so angeordnet werden, dass sie um einen Basisabstand (BA) voneinander lateral versetzt sind;

Empfangen von Bildsensordaten ($1004_{11}$, $1004_{12}$, $1004_{13}$, $1004_{14}$, $1004_{21}$, $1004_{22}$, $1004_{23}$, $1004_{24}$) von dem Bildsensor (12), die Informationen über die auf die erste und zweite Mehrzahl von Bildsensorbereichen abgebildeten ersten und zweiten Teilgesichtsfelder ($74_{11}$, $74_{12}$, $74_{13}$, $74_{14}$, $74_{21}$, $74_{22}$, $74_{23}$, $74_{24}$) aufweisen; und

Erzeugen des Ausgangssignals (1006) für eine Vorrichtung gemäß Anspruch 1, so dass das Ausgangssignal einen Datenheader (1008) und Nutzdaten aufweist, so dass der Datenheader (1008) eine Information bezüglich des Aufbaus der 3D-Multiaperturabbildungsvorrichtung aufweist und so dass die Nutzdaten aus den Pixeln des ersten Bildsensorbereichs und des zweiten Bildsensorbereichs gewonnene Bildinformationen und eine Information bezüglich eines durch ein Stitching-Verfahren aus einem Zusammensetzen von Teilbildern von Teilgesichtsfeldern berechneten Gesamtbildes aufweisen;

so dass der Datenheader (1008) eine Information bezüglich einer Anzahl der ersten Mehrzahl von optischen Kanälen ($14_1$) eines ersten Moduls der 3D-Mulatiaperturabbildungsvorrichtung oder der zweiten Mehrzahl von optischen Kanälen ($14_2$) eines zweiten Moduls aufweist;

so dass der Datenheader (1008) in den Informationen bezüglich des Aufbaus eine Information bezüglich einer Segmentierung des Gesamtgesichtsfeldes (72) in erste Teilgesichtsfelder ($74_{11}$, $74_{12}$, $74_{13}$, $74_{14}$) des ersten Moduls oder zweite Teilgesichtsfelder ($74_{21}$, $74_{22}$, $74_{23}$, $74_{24}$) des zweiten Moduls und eine Zuordnung von optischen Kanäle zu den Teilgesichtsfeldern aufweist.

**Claims**

1. A device (3000) for processing an input signal (1006) comprising a data header (1008) and payload data, wherein the data header (1008) comprises information regarding a structure of a 3D multi-aperture imaging device (70; 1000), the data header (1008) comprises information regarding a number of a first plurality of optical channels ($14_1$) of a first module of the 3D multi-aperture imaging device or a second plurality of optical channels ($14_2$) of a second module of the 3D multi-aperture imaging device, and wherein the payload data comprise image information acquired from pixels of first image sensor areas ($58_{11}$, $58_{12}$, $58_{13}$, $58_{14}$) and second image sensor areas ($58_{21}$, $58_{22}$, $58_{23}$, $58_{24}$), wherein the image information of the first and second image sensor areas each relate to a plurality of partial fields of view ($74_{11}$, $74_{12}$, $74_{13}$, $74_{14}$, $74_{21}$, $74_{22}$, $74_{23}$, $74_{24}$) of a total field of view (72);

   wherein the data header (1008), in the information regarding the structure, comprises information regarding a segmentation of the total field of view (72) into first partial fields of view ($74_{11}$, $74_{12}$, $74_{13}$, $74_{14}$) of the first module or second partial fields of view ($74_{21}$, $74_{22}$, $74_{23}$, $74_{24}$) of the second module and an association of optical channels to the partial fields of view;

   wherein the payload data comprise information regarding a total image calculated from assembling partial images of partial fields of view by a stitching method; the device comprising:

      an input interface (1023) for receiving the input signal (1006); and
      a processor (1002) for processing the payload data by considering the information regarding the structure of the 3D multi-aperture imaging device (70; 1000) for at least first image sensor information of a first partial field of view of the plurality of partial fields of view ($74_{11}$, $74_{12}$, $74_{13}$, $74_{14}$, $74_{21}$, $74_{22}$, $74_{23}$, $74_{24}$) of the first module and a second partial field of view of the plurality of partial fields of view ($74_{11}$, $74_{12}$, $74_{13}$, $74_{14}$, $74_{21}$, $74_{22}$, $74_{23}$, $74_{24}$) of the second module; and for performing a correction adapted to the structure of the 3D multi-aperture imaging device.

2. A 3D multi-aperture imaging device (70; 1000) comprising:

      an image sensor (12) with a plurality of image sensor areas ($58_{11}$, $58_{12}$, $58_{13}$, $58_{14}$, $58_{21}$, $58_{22}$, $58_{23}$, $58_{24}$), wherein each image sensor area (58) includes a plurality of pixels;
      a first plurality ($14_1$) of optical channels ($16_{11}$, $16_{12}$, $16_{13}$, $16_{14}$) of a first module of the 3D multi-aperture imaging device for projecting overlapping first partial fields of view ($74_{11}$, $74_{12}$, $74_{13}$, $74_{14}$) of a total field of view (72) on first image sensor areas ($58_{11}$, $58_{12}$, $58_{13}$, $58_{14}$) of the image sensor (12);
      a second plurality ($14_2$) of optical channels ($16_{21}$, $16_{22}$, $16_{23}$, $16_{24}$) of a second module of the 3D multi-aperture imaging device for projecting second partial fields of view ($74_{21}$, $74_{22}$, $74_{23}$, $74_{24}$) of the total field of view (72) overlapping each other and the first partial fields of view on second image sensor areas ($58_{21}$, $58_{22}$, $58_{23}$, $58_{24}$) of the image sensor, wherein the first and second plurality of optical channels are arranged laterally offset from one another by a base distance (BA);

a processor (1002) configured to receive image sensor data ($1004_{11}$, $1004_{12}$, $1004_{13}$, $1004_{14}$, $1004_{21}$, $1004_{22}$, $1004_{23}$, $1004_{24}$) from the image sensor (12) comprising information on the first and second partial fields of view ($74_{11}$, $74_{12}$, $74_{13}$, $74_{14}$, $74_{21}$, $74_{22}$, $74_{23}$, $74_{24}$) projected on the first and second plurality of image sensor areas ($58_{11}$, $58_{12}$, $58_{13}$, $58_{14}$, $58_{21}$, $58_{22}$, $58_{23}$, $58_{24}$), and configured to provide an output signal (1006) for a device according to claim 1, comprising a data header (1008) and payload data (1012), wherein the data header (1008) comprises information regarding the structure of the 3D multi-aperture imaging device (70; 1000), and wherein the payload data (1012) comprise image information acquired from the pixels of the first image sensor areas and the second image sensor areas and information regarding a total image calculated from assembling partial images of partial fields of view by a stitching method;

wherein the processor (1002) is configured to form the output signal (1006) such that the data header (1008) comprises information regarding a number of the first plurality or a second plurality of optical channels ($14_1$, $14_2$);

wherein the processor (1002) is configured to form the output signal (1006) such that the data header (1008), in the information regarding the structure, comprises information regarding a segmentation of the total field of view (72) into the first or second partial fields of view ($74_{11}$, $74_{12}$, $74_{13}$, $74_{14}$, $74_{21}$, $74_{22}$, $74_{23}$, $74_{24}$) and an association of optical channels to the partial fields of view.

3. The 3D multi-aperture imaging device according to claim 2, wherein the processor (1002) is configured to form the output signal (1006) such that the data header (1008) comprises, at least for a first image sensor area (58), information regarding a number of pixels concerning a first image extension direction (142) and a number of pixels for a second image extension direction (144).

4. The 3D multi-aperture imaging device according to one of claims 2 or 3, wherein the processor (1002) is configured to form the output signal (1006) such that the data header (1008) comprises, for at least one of the optical channels (16), information regarding a spatial coordinate of the at least one optical channel (16) in the 3D multi-aperture imaging device.

5. The 3D multi-aperture imaging device according to one claims 2 to 4, wherein the processor (1002) is configured to form the output signal (1006) such that the data header (1008) comprises information regarding a pixel size of at least one of the pixels of one of the first or second image sensor areas ($58_{11}$, $58_{12}$, $58_{13}$, $58{14}$, $58_{21}$, $58_{22}$, $58_{23}$, $58_{24}$).

6. The 3D multi-aperture imaging device according to one of claims 2 to 5, wherein the processor (1002) is configured to form the output signal (1006) such that the data header (1008) comprises information regarding a pressure of an atmosphere surrounding the 3D multi-aperture imaging optics, an environmental temperature of the 3D multi-aperture imaging optics and/or an operating temperature of the 3D multi-aperture imaging optics.

7. The 3D multi-aperture imaging device according to one of claims 2 to 6, wherein the processor (1002) is configured to form the output signal (1006) such that the data header (1008) comprises information regarding a distortion of at least one optical channel of the 3D multi-aperture imaging device.

8. The 3D multi-aperture imaging device according to one of preceding claims 2 to 7, wherein the processor (1002) is configured to form the output signal (1006) such that the data header (1008) comprises information regarding vignetting of at least one optical channel of the 3D multi-aperture imaging device.

9. The 3D multi-aperture imaging device according to one of claims 2 to 8, wherein the processor (1002) is configured to form the output signal (1006) such that the data header (1008) comprises information regarding a defective pixel of the image sensor (12).

10. The 3D multi-aperture imaging device according to one of claims 2 to 9, wherein the processor (1002) is configured to form the output signal (1006) such that the payload data comprise information regarding a line break or a column break of the captured image.

11. The 3D multi-aperture imaging device according to one claims 2 to 10, wherein the first plurality ($14_1$) of optical channels is arranged in a first single-line array (14i), and wherein the second plurality of optical channels is arranged in a second single-line array ($14_2$).

12. The 3D multi-aperture imaging device according to one of claims 2 to 11, further including a third plurality of optical channels for projecting third partial fields of view of the total field of view (72) overlapping each other and the first partial fields of view on third image sensor areas of the image sensor, wherein the first and the second plurality of optical channels are arranged laterally offset from one another by a base distance (BA);

wherein the processor (1002) is configured to receive image sensor data from the image sensor (12) which comprise information on the third partial fields of view projected on the third plurality of image sensor areas, and is configured to provide the output signal (1006) such that the payload data (1012) comprise image information acquired from the pixels of the first image sensor areas, the second image sensor areas and the third image sensor areas.

13. A signal (1006) comprising:

a data header (1008) comprising information regarding a structure of a 3D multi-aperture imaging device, wherein the data header (1008) comprises information regarding a number of the first plurality of optical channels ($14_1$) of a first module of the 3D multi-aperture imaging device or a second plurality of optical channels ($14_2$) of a second module; and

wherein the data header (1008), in the information regarding the structure, comprises information regarding a segmentation of the total field of view (72) into first partial fields of view ($74_{11}$, $74_{12}$, $74_{13}$, $74_{14}$) of the first module or second partial fields of view ($74_{21}$, $74_{22}$, $74_{23}$, $74_{24}$) of the second module and an association of optical channels to the partial fields of view; the signal comprising:

payload data (1012) comprising image information ($1004_{11}$, $1004_{12}$, $1004_{13}$, $1004_{14}$, $1004_{21}$, $1004_{22}$, $1004_{23}$, $1004_{24}$) acquired from pixels of first image sensor areas ($58_{11}$, $58_{12}$, $58_{13}$, $58_{14}$) and second image sensor areas ($58_{21}$, $58_{22}$, $58_{23}$, $58_{24}$) of the 3D multi-aperture imaging device and information regarding a total image calculated from assembling partial images of partial fields of view by a stitching method, wherein the image information of the first and second image sensor areas each relate to a plurality of partial fields of view ($74_{11}$, $74_{12}$, $74_{13}$, $74_{14}$, $74_{21}$, $74_{22}$, $74_{23}$, $74_{24}$) of a total field of view (72).

14. A method for providing an output signal (1006) of a 3D multi-aperture imaging device (70; 1000), comprising:

providing an image sensor (12) with a plurality of image sensor areas ($58_{11}$, $58_{12}$, $58_{13}$, $58_{14}$, $58_{21}$, $58_{22}$, $58_{23}$, $58_{24}$), wherein each image sensor area comprises a plurality of pixels;

providing a first plurality ($14_1$) of optical channels ($16_{11}$, $16_{12}$, $16_{13}$, $16_{14}$) for projecting overlapping first partial fields of view ($74_{11}$, $74_{12}$, $74_{13}$, $74_{14}$) of a total field of view (72) on first image sensor areas ($58_{11}$, $58_{12}$, $58_{13}$, $58_{14}$) of the image sensor;

providing a second plurality ($14_2$) of optical channels ($16_{21}$, $16_{22}$, $16_{23}$, $16_{24}$) for projecting second partial fields of view ($74_{21}$, $74_{22}$, $74_{23}$, $74_{24}$) of the total field of view (72) overlapping each other and the first partial fields of view ($74_{11}$, $74_{12}$, $74_{13}$, $74_{14}$) on second image sensor areas ($58_{21}$, $58_{22}$, $58_{23}$, $58_{24}$) of the image sensor (12), wherein the first and the second plurality of optical channels ($14_1$, $14_2$) are arranged such that the same are laterally offset from one another by a base distance (BA);

receiving image sensor data ($1004_{11}$, $1004_{12}$, $1004_{13}$, $1004_{14}$, $1004_{21}$, $1004_{22}$, $1004_{23}$, $1004_{24}$) from the image sensor (12) which comprise information on the first and second partial fields of view ($74_{11}$, $74_{12}$, $74_{13}$, $74_{14}$, $74_{21}$, $74_{22}$, $74_{23}$, $74_{24}$) projected on the first and second plurality of image sensor areas; and

generating the output signal (1006) for the device according to claim 1 such that the output signal comprises a data header (1008) and payload data, such that the data header (1008) comprises information regarding the structure of the 3D multi-aperture imaging device and such that the payload data comprise image information acquired from the pixels of the first image sensor area and the second image sensor area, an information regarding a total image calculated from assembling partial images of partial fields of view by a stitching method;

so that the data header (1008) comprises information regarding a number of the first plurality of optical channels ($14_1$) of a first module of the 3D multi-aperture imaging device or a second plurality of optical channels ($14_2$) of a second module;

so that the data header (1008), in the information regarding the structure, comprises information regarding a segmentation of the total field of view (72) into first partial fields of view ($74_{11}$, $74_{12}$, $74_{13}$, $74_{14}$) of the first module or second partial fields of view ($74_{21}$, $74_{22}$, $74_{23}$, $74_{24}$) of the second module and an association of optical channels to the partial fields of view.

**Revendications**

1. Dispositif (3000) de traitement d'un signal d'entrée (1006) qui présente un en-tête de données (1008) et des données utiles, dans lequel l'en-tête de données (1008) présente une information relative à une structure d'un dispositif d'imagerie multi-ouverture 3D (70; 1000), l'en-tête de données (1008) présente une information relative à un nombre d'une première pluralité de canaux optiques ($14_1$) d'un premier mo-

dule du dispositif d'imagerie multi-ouverture 3D ou une deuxième pluralité de canaux optiques ($14_2$) d'un deuxième module du dispositif d'imagerie multi-ouverture 3D et dans lequel les données utiles présentent des informations d'image obtenues à partir de pixels de premières zones de capteur d'image ($58_{11}$, $58_{12}$, $58_{13}$, $58_{14}$) et de deuxièmes zones de capteur d'image ($58_{21}$, $58_{22}$, $58_{23}$, $58_{24}$), dans lequel les informations d'image des premières et deuxièmes zones de capteur d'image se rapportent, chacune, à une pluralité de champs de vision partiels ($74_{11}$, $74_{12}$, $74_{13}$, $74_{14}$, $74_{21}$, $74_{22}$, $74_{23}$, $74_{24}$) d'un champ de vision global (72);

dans lequel l'en-tête de données (1008) présente, dans les informations relatives à la structure, une information relative à une segmentation du champ de vision global (72) en de premiers champs de vision partiels ($74_{11}$, $74_{12}$, $74_{13}$, $74_{14}$) du premier module ou en de deuxièmes champs de vision partiels ($74_{21}$, $74_{22}$, $74_{23}$, $74_{24}$) du deuxième module et une attribution de canaux optiques aux champs de vision partiels; dans lequel les données utiles présentent une information relative à une image globale calculée par un procédé d'assemblage à partir d'une composition d'images partielles de champs de vision partiels; dans lequel le dispositif présente:

une interface d'entrée (1023) destinée à recevoir le signal d'entrée (1006); et un processeur (1002) destiné à traiter les données utiles en tenant compte de l'information relative à la structure du dispositif d'imagerie multi-ouverture 3D (70; 1000) pour au moins des premières informations de capteur d'image d'un premier champ de vision partiel parmi la pluralité de champs de vision partiels ($74_{11}$, $74_{12}$, $74_{13}$, $74_{14}$, $74_{21}$, $74_{22}$, $74_{23}$, $74_{24}$) du premier module et d'un deuxième champ de vision partiel parmi la pluralité de champs de vision partiels ($74_{11}$, $74_{12}$, $74_{13}$, $74_{14}$, $74_{21}$, $74_{22}$, $74_{23}$, $74_{24}$) du deuxième module; et à effectuer une correction adaptée à la structure du dispositif d'imagerie multi-ouverture 3D.

2.   Dispositif d'imagerie multi-ouverture 3D (70; 1000) avec:

un capteur d'image (12) avec une pluralité de zones de capteur d'image ($58_{11}$, $58_{12}$, $58_{13}$, $58_{14}$, $58_{21}$, $58_{22}$, $58_{23}$, $58_{24}$), où chaque zone de capteur d'image (58) comporte une pluralité de pixels; une première pluralité ($14_1$) de canaux optiques ($16_{11}$, $16_{12}$, $16_{13}$, $16_{14}$) d'un premier module du dispositif d'imagerie multi-ouverture 3D destinés à reproduire des premiers champs de vision partiels ($74_{11}$, $74_{12}$, $74_{13}$, $74_{14}$) venant en chevauchement l'un avec l'autre d'un champ de vision global (72) sur des premières zones de capteur d'image ($58_{11}$, $58_{12}$, $58_{13}$, $58_{14}$) du capteur d'image (12); une deuxième pluralité ($14_2$) de canaux optiques ($16_{21}$, $16_{22}$, $16_{23}$, $16_{24}$) d'un deuxième module du dispositif d'imagerie multi-ouverture 3D destinés à reproduire des deuxièmes champs de vision partiels ($74_{21}$, $74_{22}$, $74_{23}$, $74_{24}$) venant en chevauchement l'un avec l'autre et avec les premiers champs de vision partiels du champ de vision global (72) sur des deuxièmes zones de capteur d'image ($58_{21}$, $58_{22}$, $58_{23}$, $58_{24}$) du capteur d'image, où la première et la deuxième pluralité de canaux optiques sont disposés décalées latéralement l'une par rapport à l'autre d'une distance de base (BA); un processeur (1002) qui est conçu pour recevoir les données de capteur d'image ($1004_{11}$, $1004_{12}$, $1004_{13}$, $1004_{14}$, $1004_{21}$, $1004_{22}$, $1004_{23}$, $1004_{24}$) du capteur d'image (12) qui présentent les informations relatives aux premiers et deuxièmes champs de vision partiels ($74_{11}$, $74_{12}$, $74_{13}$, $74_{14}$, $74_{21}$, $74_{22}$, $74_{23}$, $74_{24}$) reproduits sur la première et la deuxième pluralité de zones de capteur d'image ($58_{11}$, $58_{12}$, $58_{13}$, $58_{14}$, $58_{21}$, $58_{22}$, $58_{23}$, $58_{24}$), et qui est conçu pour fournir un signal de sortie (1006) pour un dispositif selon la revendication 1 qui présente un en-tête de données (1008) et des données utiles (1012), où l'en-tête de données (1008) présente une information relative à la structure du dispositif d'imagerie multi-ouverture 3D (70; 1000) et où les données utiles (1012) présentent des informations d'image obtenues à partir des pixels des premières zones de capteur d'image et des deuxièmes zones de capteur d'image et une information relative à une image globale calculée par un procédé d'assemblage à partir d'une composition d'images partielles de champs de vision partiels; dans lequel le processeur (1002) est conçu pour former le signal de sortie (1006) de sorte que l'en-tête de données (1008) présente une information relative à un nombre de la première pluralité ou de la deuxième pluralité de canaux optiques ($14_1$, $14_2$); dans lequel le processeur (1002) est conçu pour former le signal de sortie (1006) de sorte que l'en-tête de données (1008) présente, dans les informations relatives à la structure, une information relative à une segmentation du champ de vision global (72) en premiers ou deuxièmes champs de vision partiels ($74_{11}$, $74_{12}$, $74_{13}$, $74_{14}$, $74_{21}$, $74_{22}$, $74_{23}$, $74_{24}$) et une attribution de canaux optiques aux champs de vision partiels.

3. Dispositif d'imagerie multi-ouverture 3D selon la revendication 2, dans lequel le processeur (1002) est conçu pour former le signal de sortie (1006) de sorte que l'en-tête de données (1008) présente, au moins pour une première zone de capteur d'image (58), une information relative à un nombre de pixels relatif à une première direction d'extension d'image (142) et à un nombre de pixels pour une deuxième direction d'extension d'image (144).

4. Dispositif d'imagerie multi-ouverture 3D selon l'une des revendications 2 ou 3, dans lequel le processeur (1002) est conçu pour former le signal de sortie (1006) de sorte que l'en-tête de données (1008) présente, pour au moins l'un des canaux optiques (16), une information relative à une coordonnée spatiale de l'au moins un canal optique (16) dans le dispositif d'imagerie multi-ouverture 3D.

5. Dispositif d'imagerie multi-ouverture 3D selon l'une des revendications 2 à 4, dans lequel le processeur (1002) est conçu pour former le signal de sortie (1006) de sorte que l'en-tête de données (1008) présente une information relative à une grandeur de pixel d'au moins l'un des pixels de l'une des premières ou deuxièmes zones de capteur d'image ($58_{11}$, $58_{12}$, $58_{13}$, $58_{14}$, $58_{21}$, $58_{22}$, $58_{23}$, $58_{24}$).

6. Dispositif d'imagerie multi-ouverture 3D selon l'une des revendications 2 à 5, dans lequel le processeur (1002) est conçu pour former le signal de sortie (1006) de sorte que l'en-tête de données (1008) présente une information relative à une pression d'une atmosphère entourant l'optique d'imagerie multi-ouverture 3D, à une température ambiante de l'optique d'imagerie multi-ouverture 3D et/ou à une température de fonctionnement de l'optique d'imagerie multi-ouverture 3D.

7. Dispositif d'imagerie multi-ouverture 3D selon l'une des revendications 2 à 6, dans lequel le processeur (1002) est conçu pour former le signal de sortie (1006) de sorte que l'en-tête de données (1008) présente une information relative à une distorsion d'au moins un canal optique du dispositif d'imagerie multi-ouverture 3D.

8. Dispositif d'imagerie multi-ouverture 3D selon l'une des revendications précédentes 2 à 7, dans lequel le processeur (1002) est conçu pour former le signal de sortie (1006) de sorte que l'en-tête de données (1008) présente une information relative à un vignettage d'au moins un canal optique du dispositif d'imagerie multi-ouverture 3D.

9. Dispositif d'imagerie multi-ouverture 3D selon l'une des revendications 2 à 8, dans lequel le processeur (1002) est conçu pour former le signal de sortie (1006) de sorte que l'en-tête de données (1008) présente une information relative à un pixel défectueux du capteur d'image (12).

10. Dispositif d'imagerie multi-ouverture 3D selon l'une des revendications 2 à 9, dans lequel le processeur (1002) est conçu pour former le signal de sortie (1006) de sorte que les données utiles présentent une information relative à un saut de rangée ou un saut de colonne de l'image capturée.

11. Dispositif d'imagerie multi-ouverture 3D selon l'une des revendications 2 à 10, dans lequel la première pluralité ($14_1$) de canaux optiques est disposée dans un premier réseau d'une seule rangée ($14_1$), et dans lequel la deuxième pluralité de canaux optiques est disposée dans un deuxième réseau d'une seule rangée ($14_2$).

12. Dispositif d'imagerie multi-ouverture 3D selon l'une des revendications 2 à 11, comportant par ailleurs une troisième pluralité de canaux optiques pour reproduire des troisièmes champs de vision partiels du champ de vision total (72) venant en chevauchement entre eux et avec les premiers champs de vision partiels sur les troisièmes zones du capteur d'image, dans lequel la première et la deuxième pluralité de canaux optiques sont disposées décalées latéralement l'une par rapport à l'autre d'une distance de base (BA);
dans lequel le processeur (1002) est configuré pour recevoir des données de capteur d'image du capteur d'image (12) qui présentent des informations sur les troisièmes champs visuels partiels reproduits sur la troisième pluralité de zones de capteur d'image, et est conçu pour mettre à disposition le signal de sortie (1006) de sorte que les données utiles (1012) présentent des informations d'image obtenues à partir de pixels des premières zones de capteur d'image, des deuxièmes zones de capteur d'image et des troisièmes zones de capteur d'image.

13. Signal (1006) aux caractéristiques suivantes:

un en-tête de données (1008) qui présente une information relative à la structure d'un dispositif d'imagerie multi-ouverture 3D, où l'en-tête de données (1008) présente une information relative à un nombre de la première pluralité de canaux optiques ($14_1$) d'un premier module du dispositif d'imagerie multi-ouverture 3D ou d'une deuxième pluralité de canaux optiques ($14_2$) d'un deuxième module; et
dans lequel l'en-tête de données (1008) présente, dans les informations relatives à la structure, une information relative à une segmentation du champ de vision global (72) en premiers champs de vision partiels ($74_{11}$, $74_{12}$, $74_{13}$, $74_{14}$) du premier module ou en deuxièmes champs de vision partiels ($74_{21}$, $74_{22}$, $74_{23}$, $74_{24}$) du deuxième module et une attribution de canaux optiques aux champs de vision partiels; dans lequel le signal présente:

des données utiles (1012) qui présentent les informations d'image ($1004_{11}$, $1004_{12}$, $1004_{13}$, $1004_{14}$, $1004_{21}$, $1004_{22}$, $1004_{23}$, $1004_{24}$) obtenues à partir de pixels de premières zones de capteur d'image ($58_{11}$, $58_{12}$, $58_{13}$, $58_{14}$) et de deuxièmes zones de capteur d'image ($58_{21}$, $58_{22}$, $58_{23}$, $58_{24}$) du dispositif d'imagerie multi-ouverture 3D et une information relative à une image globale calculée par un procédé d'assemblage à partir d'une composition d'images partielles de champs de vision partiels, où les informations d'image des premières et deuxièmes zones de capteur d'image se rapportent, chacune, à une pluralité de champs de vision partiels ($74_{11}$, $74_{12}$, $74_{13}$, $74_{14}$, $74_{21}$, $74_{22}$, $74_{23}$, $74_{24}$) d'un champ de vision global (72).

14. Procédé pour mettre à disposition un signal de sortie (1006) d'un dispositif d'imagerie multi-ouverture 3D (70; 1000), aux étapes suivantes consistant à:

prévoir un capteur d'image (12) avec une pluralité de zones de capteur d'image ($58_{11}$, $58_{12}$, $58_{13}$, $58_{14}$, $58_{21}$, $58_{22}$, $58_{23}$, $58_{24}$), où chaque zone de capteur d'image comporte une pluralité de pixels;

prévoir une première pluralité ($14_1$) de canaux optiques ($16_{11}$, $16_{12}$, $16_{13}$, $16_{14}$) pour reproduire des premiers champs de vision partiels ($74_{11}$, $74_{12}$, $74_{13}$, $74_{14}$) venant en chevauchement l'un avec l'autre d'un champ de vision total (72) sur des premières zones de capteur d'image ($58_{11}$, $58_{12}$, $58_{13}$, $58_{14}$) du capteur d'image;

prévoir une deuxième pluralité ($14_2$) de canaux optiques ($16_{21}$, $16_{22}$, $16_{23}$, $16_{24}$) pour reproduire des deuxième champs de vision partiels ($74_{21}$, $74_{22}$, $74_{23}$, $74_{24}$) du champ de vision total (72) venant en chevauchement l'un avec l'autre et avec les premiers champs de vision partiels ($74_{11}$, $74_{12}$, $74_{13}$, $74_{14}$) sur des deuxièmes zones de capteur d'image ($58_{21}$, $58_{22}$, $58_{23}$, $58_{24}$) du capteur d'image (12), où la première et la deuxième pluralité de canaux optiques ($14_1$, $14_2$) sont disposées de sorte qu'elles soient disposées décalées latéralement l'une par rapport à l'autre d'une distance de base (BA);

recevoir les données de capteur d'image ($1004_{11}$, $1004_{12}$, $1004_{13}$, $1004_{14}$, $1004_{21}$, $1004_{22}$, $1004_{23}$, $1004_{24}$) du capteur d'image (12) qui présentent des informations sur les premiers et deuxièmes champs visuels partiels ($74_{11}$, $74_{12}$, $74_{13}$, $74_{14}$, $74_{21}$, $74_{22}$, $74_{23}$, $74_{24}$) reproduits sur la première et la deuxième pluralité de zones de capteur d'image; et

générer le signal de sortie (1006) pour un dispositif selon la revendication 1, de sorte que le signal de sortie présente un en-tête de données (1008) et des données utiles, de sorte que l'en-tête de données (1008) présente une information relative à la structure du dispositif d'imagerie multi-ouverture 3D et de sorte que les données utiles présentent des informations d'image obtenues à partir des pixels de la première zone de capteur d'image et de la deuxième zone de capteur d'image et une information relative à une image globale calculée par un procédé d'assemblage à partir d'une composition d'images partielles de champs de vision partiels;

de sorte que l'en-tête de données (1008) présente une information relative à un nombre de la première pluralité de canaux optiques ($14_1$) d'un premier module du dispositif d'imagerie multi-ouverture 3D ou la deuxième pluralité de canaux optiques ($14_2$) d'un deuxième module;

de sorte que l'en-tête de données (1008) présente, dans les informations relatives à la structure, une information relative à une segmentation du champ de vision global (72) en premiers champs de vision partiels ($74_{11}$, $74_{12}$, $74_{13}$, $74_{14}$) du premier module ou en deuxièmes champs de vision partiels ($74_{21}$, $74_{22}$, $74_{23}$, $74_{24}$) du deuxième module et une attribution de canaux optiques aux champs de vision partiels.

Fig. 1a

Fig. 1b

$74_{12}$
$74_{22}$

Überlapp

72

86

Überlapp

$30_{21}$
$30_{11}$

$16_{11}$  $16_{12}$  $16_{13}$  $16_{14}$

$16_{21}$  $16_{22}$  $16_{23}$  $16_{24}$

$\binom{4}{2}$ mögliche
Disparitätsquellen

1

2

3

4

5

6

Fig. 2

1006

Datenheader

Aufbau der 3D-Multiaperturabbildungsvorrichtung

~1008

Nutzdaten

Bildinformation der Bildsensorbereiche

~1012

Fig. 3

1006

| Datenheader |
|---|
| Beschreibung der 3D-Multiaperturbildabbildungsvorrichtung mit Segmentierung des Gesichtsfelds |

~1008

| Nutzdaten |
|---|
| Pixelweise Bildinformation der einzelnen Kanäle der 3D-Multiaperturabbildungsvorrichtung |

~1012

Fig. 4

| | |
|---|---|
| **Datenheader** | |
| Beschreibungsdaten I=Metabeschreibung | |
| A) Anzahl Module=Anzahl Gesamtbilder | |
| B) Anzahl Kanäle pro Modul | 1008a |
| C) Anzahl Pixel horizontal und/oder vertikal pro Teilbild | |
| A)-C) Alternativen: a) identisch für alle Module/Teilbilder b) individuell für jedes Modul/Teilbild | |

**Datenheader**

Beschreibungsdaten II=Geometriebeschreibung

D) Pixelgröße
-für jeden Kanal jedes Moduls

E) Koordinaten X;Y(Z) Anordnung in der
Multiaperturabbildungsvorrichtung — 1008b

F) Feldwinkelbereich

Alternativen: a) Intervall
b) zentrale Richtung+horizontal&vertikale Ausdehnung

**Datenheader**

Beschreibungsdaten III=Umgebungsbedingungen (optional) — 1008c

G) Druck; Temperatur; Ort (GPS); Zeit

1006

1008

## Fig. 5a

**Datenheader**

    Beschreibungsdaten IV=Korrekturdaten (optional)

H)    Verzeichnung

I)    Vignettierung

J)    Defekte Pixel

       1008d   1008

**Nutzdaten**

K)    pixelweise Bilddaten
      a) Option Farbe: Jedem Pixel ist Farbe zugeordnet entsprechend
         genutztem Bildsensor
         (RGGB oder RGBW oder ....)

L)a)    Pixelwerte fortlaufend (größe jedes Bildes aus Header-Daten ableitbar)

L)b)    Start/Stopp-Zeichenfolge

L)c)    Kennzeichnung von Modul und Kanal durch eindeutig zuordnenbare Nomenklatur

M)a)    Bilddaten als RAW

M)b)    Bilddaten komprimiert

M)c)    Bilddaten de-mosaikt

       1012

Fig. 5b

Fig. 6

EP 3 694 207 B1

2000

72

74d

74c

74b

74a

142

144=146

16a  16b  16c  16d  14

64a  64b  64c  64d

146

12

Fig. 7

Fig. 8

Fig. 9a

Fig. 9b

Fig. 10a

Fig.10b

Fig. 10c

Fig. 11a

Fig. 11b

Fig. 11c

Fig. 12a

Fig. 12b

50

22a

35    33' (optional)

47    32

22b    33 (optional)    34

Fig. 13a

50

22a

16    24

47    42

32

22b    34

Fig. 13b

50

17    B

B > A

47    A

12    y

46

16    x

16

64a  64b

Fig. 13c

Fig. 14a

Fig. 14b

Fig. 14c

Fig. 14d

Fig. 15

Fig. 16

EP 3 694 207 B1

Fig. 17

EP 3 694 207 B1

100

22

32

22c

Fig. 18a

Fig. 18b

Fig. 18c

Fig. 19a

Fig. 19b

Fig. 19c

Fig. 19d

Fig. 19e

Fig. 19f

Fig. 20

EP 3 694 207 B1

Fig. 21a

Fig. 21b

Fig. 22a

Fig. 22b

Fig. 22e

Fig. 22c

Fig. 22d

Fig. 23a

Fig. 23b

EP 3 694 207 B1

Fig. 24

Fig. 25

EP 3 694 207 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011063347 A2

- WO 2015037211 A1